(19) Europäisches Patentamt
European Patent Office
Office européen des brevets

(11) EP 1 076 971 B1

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(21) Anmeldenummer: **99948577.4**

(22) Anmeldetag: **04.05.1999**

(51) Int Cl.:
***H04L 27/32*** (2006.01)

(86) Internationale Anmeldenummer:
**PCT/EP1999/003053**

(87) Internationale Veröffentlichungsnummer:
**WO 1999/057861 (11.11.1999 Gazette 1999/45)**

(54) **VERFAHREN ZUR ÜBERTRAGUNG EINER EINEM SIGNAL ALS NUTZSIGNAL AUFGEPRÄGTEN NACHRICHT**

METHOD FOR TRANSMITTING A MESSAGE IMPRESSED ON A SIGNAL AS A USEFUL SIGNAL

PROCEDE POUR TRANSMETTRE UN MESSAGE APPLIQUE A UN SIGNAL EN TANT QUE SIGNAL UTILE

(84) Benannte Vertragsstaaten:
**CH DE FI FR GB IT LI SE**

(30) Priorität: **04.05.1998 DE 19820836**

(43) Veröffentlichungstag der Anmeldung:
**21.02.2001 Patentblatt 2001/08**

(73) Patentinhaber: **Nanotron Technologies GmbH**
**10555 Berlin (DE)**

(72) Erfinder:
• **KOSLAR, Manfred**
**D-10629 Berlin (DE)**
• **IANELLI, Zbigniew**
**D-13355 Berlin (DE)**

(74) Vertreter: **Eisenführ, Speiser & Partner**
**Patentanwälte Rechtsanwälte**
**Spreepalais am Dom**
**Anna-Louisa-Karsch-Strasse 2**
**10178 Berlin (DE)**

(56) Entgegenhaltungen:
**WO-A-91/18458        US-A- 3 611 144**
**US-A- 4 170 764**

**Beschreibung**

Die Erfindung betrifft ein Übertragungsverfahren gemäß dem Oberbegriff des Anspruchs 1, sowie eine Sender-EmpfängerAnordnung zur Durchführung des Verfahrens.

Stand der Technik:

Bei den Übertragungsverfahren der Nachrichtentechnik ist im Bereich der Satellitentechnik und Mobiltelefonie in der letzten Zeit eine starke Beschleunigung der Entwicklung festzustellen. Die hohen Anforderungen, welche die sichere Übertragung von Signalen zwischen vielen mobilen Teilnehmern in unterschiedlichen Funkzellen oder die Übertragung von Signalen über große Entfernungen im Bereich des Rauschens stellen, haben eine Vielzahl von Überlegungen notwendig gemacht, welche gemeinsam zum Ziel haben, die übertragene Nachricht auch unter komplexesten durch den Übertragungsweg hervorgerufenen Schwierigkeiten zurückzugewinnen. Nicht nur, daß mobile Teilnehmer unter unterschiedlichsten Bedingungen, wie Feldstärke, Störungen und Entfernungen mit guter Qualität Gespräche führen können sollen - es muß auch dafür gesorgt sein, daß bei derartigen Mehrteilnehmer-Systemen die einzelnen Nachrichten sorgfältig voneinander getrennt bleiben und sich nicht etwa bei der Verarbeitung zur Störherabsetzung und Filterung vermischen, wie es bei üblichen nichtlinearen Übertragungsglieder enthaltenden Signalwegen nur zu leicht der Fall sein kann.

Beim CDMA-DS-Verfahren (Code Division Multiple Access - Direct Sequence), bei dem mehrere Kanäle im gleichen Frequenzband zur gleichen Zeit gesendet werden, werden die Signalfunktionen durch Multiplikation mit einer synchronen Schlüsselfunktion (Spreading code), Trägerfunktionen selektiv getrennt (korrelative synchrone Multiplikation). Die Codemultiplexverfahren nutzen also die Frequenz- und die Zeitebene gleichzeitig, um einzelne Kanäle dem Gesamtkanal selektiv durch synchrone Korrelation wieder entnehmen zu können. Obwohl es sich hierbei um ein korrelatives Verfahren handelt, nimmt das Übersprechen mit wachsender Anzahl der Kanäle zu. "Das Verhalten gegenüber Störungen durch weißes Rauschen ist hierbei allerdings wieder nur vom E/No-Verhältnis (E: Energie der Trägerfunktionen) abhängig, also nicht anders als bei den übrigen linearen Multiplexverfahren." (H.-D. Lüke, Korrelationssignale, Springer-Verlag Berlin, 1992, Seite 9)

Bei den bekannten Übertragungsverfahren wird in den verschiedensten Organisationsformen und Modulationsarten zur Übertragung der jeweiligen Signale eines oder mehrerer Kanäle jeweils nur eine Variable der Zeitfunktion verändert. Entscheidend ist hierbei, daß demzufolge auch nur eine dementsprechende Demodulation verwendet wird (monodimensionale Nachrichtenübertragung).

Diesen bekannten Übertragungsverfahren ist gemeinsam, daß sie gegenüber dem thermischen Rauschen, das zwischen Quelle und Senke der Übertragungsstrecke additiv hinzukommt, empfindlich sind. Dies führt bei der Übertragung analoger Signale abhängig vom Signal-/Rauschverhältnis am Empfängereingang zu Verzerrungen und bei der Übertragung digitaler Signale zu Bitfehlern. Übersteigen diese Störungen eine gewisse Grenze der Interpretierbarkeit der Nachricht beim Empfänger, so muß entweder die Sendeleistung erhöht, die Empfindlichkeit des Eingangsverstärkers verbessert oder die Entfernung zwischen Sender und Empfänger verringert werden.

Ein bekanntes Verfahren zur Rauschreduktion beruht auf Wiederholungsstrategien, indem Signale mehrmals hintereinander übertragen werden, um durch redundante Übermittlung der Codes eine Korrektur beim Empfänger solcher digitalen Signale durch entsprechende Algorithmen durchführen zu können.

Im sogenannten "Subnoise Betrieb", d.h. also für den Fall, daß die Leistung des Rauschens größer wird als die Leistung des Nutzsignales, wird die phasengesteuerte Regelung mit einer - üblicherweise verwendeten - PLL-Schleife schwieriger oder benötigt immer mehr Zeit. Schließlich versagt eine solche Methode, die kohärente Demodulation durchzuführen, ganz, weil das Signal durch das Rauschen stark gestört wird oder der Sender sich - wie zum Beispiel bei mobilen Stationen - bewegt und dadurch die Phasenbedingungen für den lokalen Oszillator sich kurzzeitig ändern.

Mit dem Ziel einer Verbesserung der Übertragungsqualität beschäftigt sich beispielsweise auch der Inhalt der US-Patentschrift 5 031 192.

Aus diesem Dokument ist es bekannt, ein Nutzsignal senderseitig Symbol für Symbol mit jeweils einem aus einer Mehrzahl zur Verfügung stehender Modulationsverfahren zu modulieren. Sender und Empfänger verständigen sich regelmäßig sich über zeitliche Abfolgemuster der verwendeten Modulationsverfahren, so dass der Empfänger das Nutzsignal aus dem vom Sender her erhaltenen Signal mit dem jeweils passenden Demodulationsverfahren rückgewinnen kann.

Die US 3,611,144 beschreibt eine empfängerseitige Modulation eines von einem Sender her erhaltenen Empfangssignals mit zwei unterschiedlichen orthogonalen Codes mit dem Ziel einer verbesserten nachfolgenden Ausfilterung von Störsignalen.

Die WO 91/18458 beschreibt ein Übertragungsverfahren, bei dem ein und dasselbe Nutzsignal auf einer Mehrzahl von Frequenzkanälen übertragen wird, wobei auf allen Frequenzkanälen ein DPSK (Differential Phase Shift Keying)-Verfahren Verwendung findet.

Ein grundsätzlicher Nachteil besteht bei allen bekannten Verfahren auch darin, daß die Qualität des empfängerseitig zurückgewonnenen Nachrichtensignals mit der Entfernung zwischen Empfänger und Sender mit Störungen auf der übertragungsstrecke stark abnimmt.

Um bei einer Nachrichtenübertragung auf einer störungsbehafteten Übertragungsstrecke eine gewünschte Reichweite mit einer vorgegebenen Störsicherheit zu erreichen, darf die Sendeleistung deshalb einen vorbestimmten Wert nicht unterschreiten.

Zum einen hat die somit erforderliche große Sendeleistung den Nachteil, daß die abgestrahlte Leistung während des Sendebetriebs entsprechend hoch ist, was insbesondere bei batteriebetriebenen Geräten, wie in Mobiltelefonen, wegen der raschen Batterieerschöpfung störend ist. Zum anderen bestehen Befürchtungen, daß die von dem Sender ausgehende elektromagnetische Strahlung zu einer Schädigung des menschlichen Körpers führen kann, was insbesondere bei Mobiltelefonen wegen des vergleichsweise geringen Abstands zum Benutzer zu berücksichtigen ist.

Bei einem weiteren aus der US-Patentschrift 4 644 523 bekannten Verfahren werden verschiedene spektrumgespreizte Teilsignale in einem Empfänger korreliert. Es handelt sich jedoch nicht um die Signale eines Senders, sondern um diejenigen von mehreren Sendern, welche- auf unterschiedlichen Übertragungswegen zu dem Empfänger gelangen. Daher ist dieses Verfahren beispielsweise für die Mobiltelefonie ungeeignet.

Der Erfindung liegt die Aufgabe zugrunde, ein Übertragungsverfahren der eingangs genannten Art zu schaffen, welches bei hoher Übertragungsqualität und geringer Sendeleistung durch Verbesserung des Rauschabstands unter anderem auch eine Erhöhung der Reichweite ermöglicht.

Diese Aufgabe wird durch ein Verfahren nach Anspruch 1, eine Senderschaltung nach Anspruch 17, eine Empfangerschaltung nach Anspruch 19 sowie durch eine Nachrichtenübertragungsanordnung nach Anspruch 31 gelöst.

Bei dem eingangs genannten Verfahren zur Übertragung einer einem Signal als Nutzsignal aufgeprägten Nachricht von einem Sender zu einem Empfänger, bei dem das in analoger oder digitaler Form zeitlich veränderliche Nutzsignal mehreren unterschiedlichen Modulationsverfahren unterworfen wird und diese unterschiedlich modulierten Signalanteile mit dem Ausgangssignal des Senders über einen Übertragungskanal zum Empfänger gelangen, ist vorgesehen, daß die mehrfache Modulation desselben Signals durch in der Senderschaltung in nach unterschiedlichen Modulationsverfahren arbeitende Modulatorelemente zur Erzeugung der unterschiedlich modulierten Signalanteile als einander mindestens teilweise überlagerte Signalkomponenten des auf den Übertragungskanal ausgesendeten Signals erfolgt, und daß empfangsseitig eine Demodulation des aus dem Übertragungskanal aufgenommenen, die mehreren unterschiedlich modulierten Signalkomponenten aufweisenden Signals durch mindestens zwei unterschiedliche Demodulatorelemente vorgenommen wird, wobei in einer Korrelationsanordnung erster Art im Zusammenwirken mit einem mindestens in der Korrelationsanordnung vorgesehenen korrelativen Element eine relative überhöhung des Nutzsignals durch Unterdrückung von insoweit unkorrelierten Störsignalen erfolgt.

Die Erfindung schließt dabei die technische Lehre ein, das Nutzsignal redundant in Form von mehreren sich mindestens zeitweise überdeckenden, unterschiedlich modulierten Signalanteilen zwischen Sender und Empfänger zu übertragen, wobei durch korrelative Maßnahmen bei der Demodulation im Empfänger das zurückzugewinnende Nutzsignal gegenüber den nicht korrelierten Störsignalen des Übertragungskanals überhöht wird. Besondere Signal- und Impulsformen bzw. eine Kaskadierung der vorgenannten Maßnahmen lassen eine an die jeweiligen Anforderungen angepaßte Störungsherabsetzung des Nutzsignals zu, welche sich insbesondere für die Übertragung von Nutzsignalen eignet, die durch die Art des Betriebs bei Mehrbenutzersystemen an ein taktgesteuertes Raster gebunden ist.

Gemäß der Erfindung können diese Signalanteile aufgrund ihrer besonderen Eigenschaften im Empfänger nicht nur zur Amplitudenerhöhung durch entsprechende Kompressionsverfahren mit angepaßten Dispersionsfiltern verwendet werden, sondern können aufgrund ihrer besonderen hochkorrelativen Eigenschaften auch zur zusätzlichen mehrfachen korrelativen Unterdrückung begleitender Rauschsignale gegenüber dem Nutzsignal herangezogen werden. Die besondere Modulation und die spezielle Zusammensetzung dieser Signalbestandteile erlauben eine wesentliche Heraufsetzung des Signal/Rauschverhältnisses bei der analogen Signalaufbereitung in der Empfängerschaltung. Auf diese Weise läßt sich über eine Verbesserung des Signals/Rauschverhältnisses im Empfänger wahlweise eine Verringerung der Sendeleistung bzw. eine Vergrößerung der Reichweite oder eine Verringerung der Fehlerrate erzielen.

Zur Korrelation werden zunächst Korrelationskriterien einer ersten Art benutzt, welche parallel erscheinende auf unterschiedlichen im Sender angewandte Modulationsverfahren basierende Signalanteile gemeinsam zur Heraushebung des Nutzsignals gegenüber Störanteilen heranziehen. Zum anderen werden bei Weiterbildungen der Erfindung aber auch Korrelationskriterien einer zweiten Art benutzt, welche die repetitiven, periodischen Signaleigenschaften nach Art der Autokorrelation zur Störherabsetzung benutzen. Beide Korrelationsverfahren bevorteilen sich gegenseitig, indem sie in einem Fall bisher ungenutzte innerhalb der verschiedenen Modulationsverfahren bestehende Kreuzkorrelationen ausnutzen, um das Nutzsignal gegenüber den Störungen anzuheben. Im anderen Fall wird der Umstand ausgenutzt, daß in der Periodizität der übertragenen Signale eine die Signaldetektierbarkeit fördernde Eigenschaft zu sehen ist. Ergänzend wirken ferner auch noch das empfangene Signal in der Empfängerschaltung zeitlich komprimierende Dispersionsfilter korrelierend, indem auch sie das Nutzsignal gegenüber Störanteilen hervorheben. Diese verschiedenen Möglichkeiten überlagert führen zu einer mehrdimensionalen korrelativen Verknüpfung bei der Demodulation, welche sich in unterschiedlichen Kombinationen bei einer Vielzahl von Anwendungsfällen einsetzen läßt.

Mit den - weiter unten beschriebenen Weiterbildungen - läßt sich eine an die jeweilige Modulatorschaltung invers angepaßte Demodulationsschaltung mit den Eigenschaften eines Schaltnetzwerks angeben, das bei der Demodulation unterschiedlichste Kriterien in Kombination im Sinne einer Dekodierung heranzieht, um die Korrektheit eines Nachrichtenelementes in dem empfangenen Signalzug zu bestätigen.

Es stellt sich der überraschende Vorteil ein, daß nicht nur die Signale der verschiedenen Teilnehmer eines Mehrteilnehmer-Systems besser voneinander trennbar sind, sondern, daß - insbesondere bei vorteilhaften Weiterbildungen der Erfindung - bei großem Störabstand auch eine sehr hohe Bitrate erzielbar ist. Gerade bei taktorientierten Mehrteilnehmersystemen ist es von Bedeutung, daß innerhalb des mit dem jeweiligen Taktrahmen zur Verfügung gestellten Zeitraums eine präzise Demodulation ohne merkbare Störbeeinflussung möglich ist. Störverminderungsverfahren, welche durch zeitliche Mehrfachübertragung die Signale mehrerer Teilnehmer korrelieren, sind demgegenüber wesentlich unvorteilhafter.

Das erfindungsgemäße Prinzip, das auf der mehrmaligen (mehrdimensionalen) Modulation jeweils nur einer analogen oder digitalen Nachricht im Sender als Aufbereitung zur Übertragung über einen - oder auch mehrere - Kanäle beruht und bei dem im Empfänger durch mehrfache Demodulationen und Korrelationen eine Verbesserung des Signal-zu Rauschverhältnisses und/oder der Bitfehlerrate erreicht wird, führt zu einer wesentlichen Unterdrückung der Auswirkung sowohl technischer als auch thermischer Störquellen, wie Fremdsender in Nachbarkanälen oder thermisches Rauschen. Das Prinzip läßt sich sowohl auf analoge als auch auf digitale Weise, durch Hard- und/oder Software verwirklichen.

Das erfindungsgemäße Verfahren kann für alle denkbaren nachrichtentechnischen Systeme verwendet werden und ermöglicht die Dimensionierung von komplexen Kommunikationssystemen mit erhöhter Reichweite, beträchtlicher Steigerung der Trennschärfe sowie weiteren optimierten übertragungstechnischen Eigenschaften.

Bei dem erfindungsgemäßen Verfahren zur Übertragung mehrdimensional modulierter Signale für ein Nutzsignal werden im Sender Mehrfachsignale generiert, über die Strecke transferiert, im Empfänger einzeln dekodiert oder demoduliert und auf mehrere Pfade aufgeteilt. Die dadurch entstehenden unterschiedlichen Signale gleichen Nachrichteninhaltes werden durch korrelierende Maßnahmen gegenüber dem Rauschen und anderen nicht korrelierten Störungen hervorgehoben, weil die Störsignale die besonderen Bedingungen bei der Demodulation des mehrfach modulierten Nutzsignales nicht erfüllen können. Maximal korreliert sind Signale hier, wenn dabei der Betrag des Korrelationskoeffizienten den Wert "eins" erreicht. Durch entsprechenden Vergleich dieser Pfade, lassen sich das Rauschen und störende Signale durch die genannten korrelativen Maßnahmen in einem Umfang unterdrücken, der bei der bisher üblichen eindimensionalen Modulation der Signale bei den herkömmlichen Übertragungsverfahren nicht erreicht werden konnte.

Eine Beschreibung des Prinzips des erfindungsgemäßen Übertragungsverfahrens kann auch wie folgt vorgenommen werden: Eine beliebige Nachricht, dargestellt als analoge Zeitfunktion oder diskrete (digitale) Zeitfunktion, mit Hilfe gewöhnlicher Modulationsverfahren, wie z. B. AM-, FM-, insbesondere Chirpmodulation, wird von einem Sender wenigstens zweifach moduliert zu einem Empfänger übertragen, so daß dort eine Aufteilung des ankommenden Signals in mindestens n verschiedene Zweige derart möglich ist, daß die dann in den unterschiedlichen Zweigen auftretenden Signale maximal miteinander korrelieren und die dem Signal auf dem Übertragungsweg überlagerten Rauschanteile oder Störer anderer Sender oder von Nachbarkanälen vergleichsweise minimal korreliert sind. Damit lassen sich die zeitlich parallelen und zeitlich aufeinander folgenden Signale durch mehrfach kreuzkorrelierende und autokorrelierende Signalverarbeitung vergleichen und hierdurch die die Signalübertragung störenden Anteile - also das thermische Rauschen und die abweichend korrelierten Störanteile anderer Sender oder gleichartiger Sender in Nachbarkanälen - in einem Umfang unterdrücken, der mit der Anzahl der durch die Mehrfachmodulation erzeugten Mehrfachkonventionen zwischen Sender und Empfänger zunimmt. Es lassen sich auf diese Weise eine Vielzahl von "Korrelationsvektoren" erzeugen, welche ein eindeutiges Filter für die zu detektierenden Nachrichtenelemente darstellt.

Das erfindungsgemäße Verfahren läßt eine große Anzahl von Weiterbildungen zu, welche auf besonderen Maßnahmen beruhen, die die vorteilhaften Eigenschaften der Erfindung in günstiger Weise ergänzen und damit auch eine günstige Anpaßbarkeit an die jeweilige Aufgabenstellung erlauben.

Insbesondere bei den nachfolgend zu beschreibenden Weiterbildungen ergeben sich auch noch die folgenden vorteilhaften Aspekte:

die wechselseitige komplementäre dispersive Kompression des Signales durch Paare von gegenseitig angepaßten Gruppenlaufzeitfiltern,

die zusammengefaßte Korrelation und Demodulation der parallelen Ausgangssignale durch Produktbildung,

die mehrfache Autokorrelation eines - insbesondere nach Gleichrichtung - periodisch auftretenden Signals, wobei an die vorgesehene Periodendauer angepaßte zyklische Eigenschaften des Nutzsignals ein weiteres Mittel zur Rauschreduktion darstellt,

die Möglichkeit der Einbettung des erfindungsgemäßen Verfahrens in bekannte Übertragungskonzepte,

die Kaskadierung von nach dem erfindungsgemäßen Verfahren arbeitenden Baugruppen, welche sich für Systeme höchster Übertragungsicherheit zu einem Netzwerk von Modulator-/Korrelatorelementen (auf der Empfängerseite) verschalten lassen, das individuellste Codierungen zuläßt. Bedeutsam ist hierbei auch, daß mit unterschiedlichsten (Modulations-)Codierungen versehene Sender- und Empfängerpaare mit einfacher codierten Systemen im selben Kanal- und Zeitraster betrieben werden können.

Gemäß anderer vorteilhafter Weiterbildungen der Erfindung lassen sich innerhalb des erfindungsgemäßen Konzepts für die einander zu überlagernden unterschiedlich modulierten Signalanteile des übertragenen Signals Signalkomponenten als "Teilsignale" angeben, welche ebenfalls in der späteren Überlagerung (Superposition) innerhalb des dargestellten Konzepts vorteilhafte Eigenschaften haben. Vorzugsweise werden als derartige Teilsignale mindestens zwei entgegengesetzt winkelmodulierte Impulse - in ihrer Grundform auch als "Chirpsignale" bezeichnet - mit im wesentlichen gleicher Dauer vorgesehen, wobei die Winkel- oder Phasenmodulation der beiden Impulse derart erfolgt, daß sich die Frequenz der einen Komponente während der Impulsdauer im mathematischen Sinne monoton steigend - und bei der zweiten Teilsignalkomponente monoton fallend ändert. Das Teilsignal ist also dadurch zu definieren, daß es gleichzeitig aus mindestens zwei winkelmodulierten Impulsen (Chirpsignalen) mit zueinander gegenläufig sich ändernder Frequenz besteht, wobei die relative Phasenlage der Komponenten zueinander zusätzlich auch zur Unterscheidung derartiger Signale verwendet werden kann.

Durch Mehrfachkorrelation mehrerer Chirpsignale kann in Form der Teilsignale eine automatische Korrelation im Empfänger erzielt werden, die über die durch die zeitliche Kompression erzielbare S/N-Verbesserung oben dargestellter Art hinaus durch zum Beispiel Multiplikation der Teilsignale einen weiteren zusätzlichen sehr gravierenden S/N-Gewinn bewirken kann.

Das liegt an der Möglichkeit, auch Kombinationen solcher Chirpimpulse in Form von Teilsignalen zu schaffen, die es bei Anwendung von Dispersionsfilteranordnungen ermöglichen, die in der Zeitachse ursprünglich unterschiedlich verlaufenden Signalkomponenten durch die Verzögerungseigenschaften der Filter zeitlich so zu verlagern, daß koinzidente Signale generiert werden, derart, daß diese zeitliche Verschiebung zur Korrelation der Nutzsignale bzw. zur Herabsetzung der Amplitude von Störereignissen genutzt werden kann.

Damit lassen sich durch Chirpimpulse als Teilsignale sogenannte Faltsignale bilden, die als hochkorrelierte Signale in günstiger Weise zur Nachrichtenübertragung genutzt werden können. Hochkorreliert sind sie deshalb, weil mehrere Modulationsparameter als "Codierung" für Sender und Empfänger vereinbart werden können und die Dispersionsfilter auch auf die Phasencharakteristik des gesendeten Teilsignales im Empfänger abgestimmt sein müssen. Das sind im einzelnen:

1. die Frequenzlage der Trägerfrequenz (Mittenfrequenz),

2. die Bandbreite der Frequenz der winkelmodulierten Impulse (Frequenzhub),

3. die Frequenzmodulations-/Zeit-Charakteristik der Sendeimpulskomponenten,

4. die Zeitdauer des Teilsignales,

5. die Richtung der Frequenzmodulation (monoton wachsende oder fallende Frequenz mit der Zeit) und deren Schachtelung,

6. die Phasenlage zu einem vorgegebenen Zeitpunkt innerhalb der Zeitdauer des winkelmodulierten Impulses und die relative Phasenlage der Komponenten zueinander sowie

7. die Amplitude des winkelmodulierten Impulses.

Bis auf den siebten können diese Parameter zwischen Sender und Empfänger frei vereinbart werden, um bei entsprechend gestalteten Empfängern als Informationsträger zu dienen. Sie erlauben damit eine breite Varianz der Parameter, die der Informationsübertragung zugute kommt.

Somit erlaubt die Variierbarkeit obiger Parameter, die über die Zeit- und Frequenzlage hinausgehen, einen zusätzlichen Gewinn, wenn die obengenannten Größen in unterschiedlichen Modulationen zwischen Sender und Empfänger vereinbart werden.

Diese Überlegungen zeigen, daß die hier verwendeten besonderen Teilsignale, quasi als spezielles "Trägersubstrat" zur Übertragung der eigentlichen Nachricht aufgefaßt werden können. Diese Modulation geschieht also unabhängig von der für die Nachricht vorgesehene Modulation, die möglichst zu der ersten orthogonal sein sollte. Diese Modulation stellt also eine zusätzliche Beziehung oder Korrelation zwischen Sender und Empfänger her und dient dazu, das Rauschen, vornehmlich das thermische Rauschen, und auch andere Störer zu eliminieren, weil diese jene Zusatzmodulation nicht aufweisen können.

Die hier beschriebenen mehrfach korrelierten nachrichtenbezogenen Modulationen der analogen oder digitalen Signale werden auf eine Trägerschwingung aufmoduliert, die in der Sendeeinrichtung während der Pulsdauer nicht wie üblich von einer in ihrer Frequenz konstanten Trägerfrequenz erzeugt wird, sondern die Trägerfrequenz wird hier zusätzlich derart mehrfach frequenzmoduliert, daß die beim Teilsignal zueinander reversen Frequenzmodulationskomponenten einerseits und die Amplitudenänderung als Signalinformation oder die Pulsabstandswerte (bei PPM) des frequenzmodulierten Trägers andererseits als Kombination voneinander unabhängiger Modulationsarten, sogenannter "zueinander orthogonaler Modulationsarten", gleichzeitig und zu unterschiedlichem Zweck vorgenommen werden, wobei die bekannten Modulationsarten zur Übertragung der Nachricht dienen und darüber hinaus die Frequenzmodulationskombinationen in der besonderen Form der Teilsignale als multikorrelierbare Signale unter Verwendung von Dispersionsfilteranordnungen zur korrelativen Rauschunterdrückung genutzt werden.

Die Folge derartiger korrelierter Teilsignale wird über die Übertragungsstrecke, die allgemein durch Störer anderer Sender und durch weiße Rauschanteile gestört wird, zum Empfänger übertragen. Der Begriff "Übertragungsstrecke" ist hierbei allgemein zu verstehen und umfaßt drahtlose Übertragungsstrecken, bei denen die Informationsübertragung vom Sender zum Empfänger mittels elektromagnetischer Wellen erfolgt, sowie leitungsgebundene Übertragungsstrecken, bei denen Sender und Empfänger vorzugsweise über Lichtwellenleiter, Koaxialkabel oder einfache elektrische Leitungen miteinander verbunden sind.

Da die in den Teilsignalen enthaltenen Chirpsignale einen Gewinn an Signal/Rauschverhältnis durch die Komprimierbarkeit der Signalamplitude erlauben, und die Dispersionsfilter so angeordnet werden können, daß deren zueinander inverse Eigenschaften zwei zueinander spiegelsymmetrische Ausgangssignale aus den Chirpsignalkomponenten der Teilsignale erzeugen, lassen sich diese zeitgleich auftretenden korrelierten Impulse addieren, multiplizieren oder subtrahieren, ausschneiden oder unterdrücken und erlauben auf diese Weise eine quasi-autokorrelative Hervorhebung des Signales gegenüber dem Rauschen.

Eine weitere sehr entscheidende Überlegung läßt sich aus dem Umstand ableiten, daß die Anstiegszeit des komprimierten Impulses der vollen Bandbreite des Chirpsignales entspricht und in seiner zeitlichen Position sehr genau innerhalb einer Empfangsanordnung definiert ist. Demzufolge ist dieses Übertragungsverfahren für eine Pulspositionsmodulation (PPM) geradezu prädestiniert. Selbst wenn man immer zwei Chirpimpulse aussenden würde, deren erster als Zeitreferenzpunkt für den Abstand zum zweiten ihm folgenden Impuls diente, wäre die gesamte Dauer nur 2,5 mal der Pulsdauer. Ein solches Signal kann für eine analoge Signalübertragung, aber auch zur Übertragung digitaler Signale verwendet werden, insofern wird also die durch die erhöhte Bandbreite ebenfalls erhöhte Kanalkapazität genutzt.

Die Dispersionsfilteranordnungen, wie sie später in Applikationsbeispielen aufgeführt werden, können gleichzeitig mehrere Funktionen erfüllen und reduzieren damit den notwendigen Aufwand in möglichen Empfängerstrukturen.

Erstens bewirken sie eine Überhöhung des Signals gegenüber dem Rauschen durch die bloße zeitliche Kompression der Teilsignalkomponenten.

Zweitens kann durch diese Anordnungen gleichzeitig erreicht werden, daß die Teilsignalkomponenten durch entsprechende Anordnungen der Filter zu koinzidenten spiegelsymmetrischen Signalen führen, die durch selbsttätige Korrelation zu einem weiteren Gewinn bezüglich des S/N-Verhältnisses führen.

Drittens kommt hinzu, daß bei einer Multiplikation der koinzidenten und komprimierten Signale bei einer autokorrelativen Multiplikation von Signalen gleicher Frequenzlage (spiegelsymmetrische Frequenzlage) ohne weitere Filter automatische, multiplikative und kohärente Demodulation der komprimierten Signale bewirkt wird, die sonst nur durch PLL-Schaltungen oder andere Schaltungen erzielt werden könnte.

Leitet man im Empfänger das Teilsignal, wie es eingangs definiert wurde, über zwei zueinander parallel geschaltete Dispersionsfilter mit zueinander reverser komplementärer Dispersion, entstehen an den beiden Ausgängen dieser Filter zwei spiegelsymmetrische Signale.

Die mehreren Dispersionsfilter haben bei winkelmodulierten Teilsignalen zwei invers zueinander wirkende Kennlinien. Während der Phasengang über der Frequenz jeweils parabelförmig ist, ist die daraus abgeleitete Gruppenlaufzeit über der Zeit eine Gerade, die mit steigender Frequenz auch ansteigt, während das andere Filter in der Charakteristik der Gruppenlaufzeit komplementär wirkt, also die Gruppenlaufzeit mit steigender Frequenz größer wird.

Die Gruppenlaufzeitcharakteristik ist also bei linearfrequenzmodulierten Impulsen eine Gerade, bei entsprechend nicht-linearer Frequenzmodulation stellt die jeweilige Gruppenlaufzeit des Dispersionsfilters die jeweilige innere Funktion zur Modulationscharakteristik dar. Bei komplementär nicht-linear modulierten Faltsignalkomponenten müssen also die demodulierten Dispersionsfilter entsprechende komplementäre Gruppenlaufzeitcharakteristiken aufweisen.

Da die superponierten Anteile des Teilsignales aus zwei Komponenten bestehen und diese beiden Anteile auf zwei zueinander invers wirkende, parallelgeschaltete Dispersionsfilter geschaltet werden, finden vier Vorgänge gleichzeitig statt:

Bei der Komponente, die eine sich mit der Zeit erhöhende Frequenz (positiver Frequenzverlauf) aufweist, werden durch eines der beiden parallel geschalteten Filter mit einer negativen Gruppenlaufzeitcharakteristik über der Frequenz die höheren Frequenzanteile verzögert. Hierdurch werden die ursprünglich positiv gechirpten Signale komprimiert, wobei die gegenläufige, negativ gechirpte Teilsignalkomponente zur doppelten Dauer des Eingangsimpulses zeitlich expandiert wird.

Das andere Filter wirkt umgekehrt, weil es die niedrigeren Frequenzen stärker verzögert als die hohen Frequenzen (positive Gruppenlaufzeitcharakteristik), wobei die von hohen Frequenzen zu niedrigeren Frequenzen verlaufende Komponente komprimiert und die von niedrigeren zu hohen Frequenzen verlaufende Pulskomponente zur doppelten Dauer des Eingangsimpulses expandiert wird.

Die beiden Dispersionsfilter führen also jeweils bei einem der beiden in ihrer Überlagerung den Teilsignal bildenden winkelmodulierten Impuls zu einer zeitlichen Kompression mit einer dementsprechenden Amplitudenerhöhung, wohingegen der andere Impulsanteil zur doppelten Dauer expandiert wird, was zu einer entsprechenden Amplitudenverringerung führt.

Da das Rauschen am Eingang im Vergleich zu einem derartigen Signal auch hierbei nicht korreliert ist, aber aufgrund der Dispersionseigenschaften der Dispersionsfilter nicht gleichförmig verändert wurde, ist das Rauschsignal am Ausgang der beiden Filter zum Signal unkorreliert.

Somit kann man im analogen Bereich des Empfängers durch analoges Signalprocessing bestimmte Prinzipien anwenden, die zur Rauschunterdrückung genutzt werden können, und zwar zum großen Teil unabhängig voneinander, wie Simulationen gezeigt haben.

Zur praktischen Umsetzung der systembedingten Dispersionsfilter dienen hierbei heute nach dem Stand der Technik bevorzugt Oberflächenwellenfilter (SAW-Filter: Surface Acoustic Waves) oder Laufzeitleitungen mit frequenzabhängiger Gruppenlaufzeit, da sich derartige Filter mit hoher Reproduktionsgenauigkeit und Stabilität herstellen lassen. Darüber hinaus bieten derartige Filter den Vorteil, daß sich Amplitudengang und Phasengang unabhängig voneinander dimensionieren lassen, was die Möglichkeit eröffnet, das in jedem Empfänger erforderliche schmalbandige Bandpaßfilter und das Dispersionsfilter in einem Bauteil zu verwirklichen. Die Ausführung der Dispersionsfilter als SAW-Filter-Modul ermöglicht weiterhin vorteilhaft die Integration mehrerer Dispersionsfilter zusammen mit Tiefpaßfiltern, Addierern und Subtrahierern auf einem Substrat, so daß ein kompaktes SAW-Bauteil als Kern der erfindungsgemäßen Anordnung geschaffen werden kann.

Bevorzugt wird also eine SAW-Filter- oder Verzögerungsleitung in einer Baueinheit auf einem Substrat, bestehend aus zwei parallelen und zueinander revers wirkenden Dispersionsfiltern mit zwei Ein- und Ausgängen und zusätzlichen Ausgängen jeweils für Summe und Differenz der Ausgangssignale, realisiert. Diese Funktionen können bei heutiger Schaltungstechnik auf einem einzigen Substrat untergebracht werden.

Das erfindungsgemäße Übertragungsverfahren ist hinsichtlich der senderseitig vorgenommenen Frequenzmodulation ersichtlich nicht auf eine lineare Frequenzänderung während der Impulsdauer beschränkt. Entscheidend ist, daß die Laufzeitcharakteristik der empfängerseitig vorgesehenen Dispersionsfilter an die senderseitig vorgenommene Frequenzmodulation der beiden in ihrer Überlagerung den Teilsignal bildenden Impulse derart angepaßt ist, daß am Ausgang der empfängerseitig angeordneten Dispersionsfilter jeweils ein kombiniertes Signal erscheint, das aus einem zeitlich komprimierten Impuls mit entsprechend erhöhter Amplitude und einem zeitlich expandierten Impuls mit entsprechend verringerter Amplitude besteht.

Diese vielfach zu kombinierenden Signale können nun entweder addiert, subtrahiert, oder multipliziert werden und, wie gezeigt, hierdurch oder durch Unterdrücken oder Ausschneiden der koinzidenten Anteile zur Verbesserung des S/N- Verhältnisses im Empfänger genutzt werden.

Bei dem erfindungsgemäßen Mehrfachkorrelationsverfahren werden periodische oder quasi-periodische Signale durch eine Verzögerungsleitung um die Periodendauer versetzt und mit dem eintreffenden - nicht über eine Verzögerungsleitung geleiteten - Signal multipliziert. Die Gleichförmigkeit des Signales nach einer Periodendauer führt zur Quadrierung der dann koinzidenten Signalamplituden. Das Rauschen jedoch, weil über die Verzögerungsleitung nicht korrelierbar, wird hierbei unterdrückt. Die Autokorrelation gehört zu den effizientesten - allerdings nichtlinearen - Verfahren um periodische oder quasi-periodische Signale gegenüber dem Rauschen hervorzuheben, also den Signalrauschabstand zu erhöhen.

Der gleiche physikalische Effekt läßt sich sehr vorteilhaft für die Teilsignale erzielen. Da die Teilsignale derart zusammengesetzt wurden, daß es durch zwei parallel geschaltete Dispersionsfilter mit zueinander inverser Dispersionrichtung zwei zueinander symmetrische kombinierte und koinzidente Ausgangssignale erzeugt, die dadurch gekennzeichnet sind, daß in deren zeitlicher Mitte in beiden Zweigen sich jeweils komprimierte Signalanteile befinden, die durch zeitliche Kompression überhöht sind, ergibt die Multiplikation dieser überhöhten auf einen engen Zeitbereich komprimierten Signale eine Quadrierung der Signalamplituden.

Das Rauschen jedoch ist nicht korreliert und wurde außerdem durch die Dispersionsfilter in seinem zeitlichen Verlauf gedehnt, also auch in seiner Amplitude abgesenkt. Die Multiplikation der Rauschanteile führt also zu einer im Verhältnis zu dem quadrierten Signal sehr viel kleineren Amplitude.

Demnach tritt ein ähnlicher physikalischer Effekt wie bei der Autokorrelation periodischer Signale hier bei einem aperiodischen Signal auf. Obwohl die mehrfache Auto- oder Kreuzkorrelationsgleichung für Teilsignale anders aussehen würde als für periodische Signale, weil nicht die Signale durch eine Verzögerungsleitung um die Periodendauer versetzt werden, sondern zwei frequenzabhängige Verzögerungsleitungen mit zueinander reverser Dispersionsrichtung vorliegen, die auf das Faltsignal wechselseitig so wirken, daß die komprimierten Signale und die jeweils gedehnten Signale in einer Art zeitlicher Spiegelsymmetrie koinzident auftreten und bei der wechselseitigen Multiplikation eine gravierende Rauschunterdrückung bewirkt wird.

Während die normale Autokorrelation periodische oder quasi-periodische Signale voraussetzt, ist sie auf digitale Folgen, zum Beispiel Impuls-Code-Modulationsverfahren, nicht anwendbar. Das Faltsignal jedoch ist ein Signal bestimmter Dauer, das sich nicht wiederholt. Trotzdem ist es in sich selbst, wie nachgewiesen wurde, automatisch korrelierbar.

Die Erzeugung der winkelmodulierten Impulse, die in ihrer Überlagerung jeweils ein Teilsignal bilden, kann nach dem Stand der Technik auf verschiedene Arten erfolgen, von denen im folgenden einige kurz beschrieben werden.

In einer anderen vorteilhaften Variante der Erfindung wird zunächst näherungweise ein Dirac-Impuls erzeugt und einem Tiefpaßfilter zugeführt, dessen Filterkennlinie kurz vor Erreichen der Grenzfrequenz eine Überhöhung aufweist und den Dirac-Impuls somit in einen si-Impuls (Spaltimpuls) wandelt, dessen Form durch die bekannte si-Funktion si(x) = sinx/x beschrieben wird. Das si-förmige Ausgangssignal des Tiefpaßfilters wird anschließend auf ein Amplituden-Modulatorelement gegeben, welcher der Trägerschwingung eine si-förmige Hüllkurve aufprägt. Wird das auf diese Weise erzeugte Signal einer Parallelschaltung zweier dispergierender Filter mit zueinander reverser Charakteristik zugeführt, so erscheinen am Ausgang der beiden Filter zwei zueinander revers winkelmodulierte Chirpsignale, bei deren Addition oder Subtraktion zwei unterschiedliche Teilsignale entstehen, die als hier sogenannte "Summen- oder Differenzsignale" - beides sind Teilsignale mit unterschiedlicher relativer Phasenlage zueinander - bezeichnet werden können.

Nach einer weiteren vorteilhaften Ausgestaltung der Erfindung erfolgt die Erzeugung der frequenzmodulierten Impulse im Sender durch eine digitale Singalverarbeitungseinheit, was vorteilhaft die Realisation beliebiger Frequenzverläufe während der Impulsdauer ermöglicht.

In der Regel liegen die zu übertragenden Informationen in digitaler Form als binäres Signal vor, wobei die Aufprägung dieser Informationen auf die Teilsignale in einer einfachen Variante der Erfindung dadurch erfolgt, daß nur bei einem logischen HIGH-Pegel des informationstragenden Eingangssignales ein Teilsignal übertragen wird, während ein logischer LOW-Pegel des Eingangssignals zu einer Übertragungpause führt, wobei auch eine Umkehrung dieser Modulation möglich ist. Entscheidend ist bei dieser Variante der Erfindung, daß nur ein logischer Pegel des informationstragenden Eingangssignales aktiv übertragen wird.

In einer weiteren bevorzugten Ausführungsform der Erfindung wird dagegen sowohl ein logischer HIGH-Pegel als auch ein logischer LOW-Pegel des informationstragenden Eingangssignals aktiv übertragen, was zu einer erhöhten Störsicherheit führt. Hierzu werden senderseitig in Abhängigkeit von dem jeweiligen binären Wert des Eingangssignals zwei unterschiedliche Teilsignale erzeugt.

So ist es günstig, bei einem HIGH-Pegel des informationstragenden Eingangssignals ein Teilsignal zu übertragen, das aus der Summe zweier entgegengesetzt winkelmodulierter Impulse besteht. Bei einem LOW-Pegel des Eingangssignals wird dann entsprechend ein Teilsignal erzeugt, das aus einer Subtraktion zweier entgegengesetzt winkelmodulierter Impulse besteht. Demnach unterscheiden sich diese zwei unterschiedlichen Teilsignale durch die jeweilige Phasenlage der Teilsignalkomponenten zueinander.

Ferner sind diese Signale für fast alle bisher bekannten Modulationsverfahren anwendbar. Ideal jedoch sind sie für die Puls-Positions-Modulation (PPM) geeignet, bei der die Reduktion der Bitrate hier nicht so ins Gewicht fällt, weil hierzu maximal nur zwei Pulse erforderlich sind, bei synchronen Verfahren sogar nur ein Impuls.

Weiterhin kann es günstig sein, sowohl logische LOW-Pegel als auch logische HIGH-Pegel des informationstragenden binären Eingangssignals aktiv durch jeweils ein Teilsignal zu übertragen, wobei die Position der übertragenen Teilsignale in Abhängigkeit von dem jeweiligen Wert des informationstragenden Eingangssignals vorgegeben wird.

Die Erfindung ist in dieser Variante der Puls-Positions-Modulation nicht auf binäre Eingangssignale beschränkt, die lediglich zwei unterschiedliche Signalpegel aufweisen, sondern auch allgemein mit digitalen Eingangssignalen verwendbar, wobei entsprechend der möglichen Anzahl unterschiedlicher Signalpegel des Eingangssignals auch Teilsignale unterschiedlicher Position einen mehrfachen Bit-Level repräsentieren können.

Die Mehrfachparametrisierung (Multidimensionalität) für ein Signal scheint zunächst nicht unbedingt vorteilhaft zu sein, weil mehr Bandbreite oder mehr Zeit oder zusätzliche Sendeleistung zur Erzeugung der unterschiedlichen parallelen Signale für ein Signalelement mehr Kanalkapazität und Sendeleistung zu erfordern scheinen. Es wird im folgenden dargelegt, daß gerade bei dem hier dargestellten Übertragungsverfahren die bisherige Auffassung, daß die Breitbandigkeit und der vermehrte Zeitbedarf gleichzeitig einen Verlust an Kanalkapazität darstellen müssen, nicht zutrifft. Die Breitbandigkeit und der vermehrte Zeitbedarf können in Eigenschaften umgemünzt werden, die einzigartige Vorteile bieten.

Es handelt sich somit bei dem erfindungsgemäßen Verfahren um ein Verfahren mit zum Teil höherem Zeit- und Bandbreitenbedarf. In seiner allgemeinsten Form ist das erfindungsgemäße Verfahren auch ein Spreizverfahren für Bandbreite und Zeit und daher den bekannten CDMA-Verfahren verwandt.

Jedoch beruht es auf einer grundsätzlich anderen Zielsetzung und daher auch auf einer anderen Ausrichtung der Übertragungsstrategien. Während das CDMA-Verfahren pro Einzelkanal bestimmte Schlüssel in der Zeit- und Frequenzebene nutzt, um durch korrelative Maßnahmen selektiv die Einzelkanäle beim Empfänger als ihm zugehörig trennen zu können, nutzt das erfindungsgemäße Verfahren mehrere, vorteilhafterweise unabhängige Mehrfachmodulationen oder kombinierte Mehrfachmodulationen wie Mehrfachchirpsignalelemente pro Einzelkanal, um durch Mehrfachkorrelation Rausch- und Fremdsignalunterdrückung bewirken zu können und zusätzlich - und das ist in diesem Zusammenhang entscheidend - auch und vorteilhafterweise durch eben dieselben Korrelationsstrategien Kanäle, z. B. auf der Zeitachse voneinander trennen zu können und damit in Kombination mit Zeitmultiplexverfahren ideale Voraussetzungen zu schaffen, mehrere Kanäle in einem Sammelkanal eindeutig trennbar mit optimaler Ausnutzung der Kanalkapazität zu betreiben.

Die Mehrfachmodulationsstrategie des erfindungsgemäßen Verfahrens ist besonders in Verbindung mit der Multichirpsignaltechnik sehr effizient. Damit ist dem Fachmann ein vielfältig korrelierbäres Signal zur Hand gegeben, das Lösungen für die modernen Aufgaben der Mehrteilnehmer-Verbindungstechnik und vor allem in der mobilen Kommunikation anbietet, die bisher gesucht wurden und mit den verschiedenen erfindungsgemäßen Verfahren gefunden werden können.

Das erfindungsgemäße Verfahren mit Multichirpsignalen ist für sich selbst synchronisierende, also asynchron arbeitende, Zeitmultiplexverfahren mit höchsten Ansprüchen besonders geeignet, da es hohe Trennschärfe und Selektivität bei gleichzeitiger großer Empfindlichkeit bereitstellt. Die Gründe dafür sollen beispielhaft anhand einer bestimmten Modulationskombination erläutert werden. Hierzu sei ein Faltsignal im Sender erzeugt, das aus zwei superponierten komplementären insbesondere Chirpsignalen für zwei durch die relative Phasenlage gegebene Zustände für "Nullen" und "Einsen" einer beliebigen Datenfolge besteht. Das erfindungsgemäße Verfahren wird für ein festes oder mobiles Multikanalsystem mit m Teilnehmern, die mit einer Zentralstation bidirektional kommunizieren, genutzt.

1. Die Bandbreite für den Einzelkanal, die in diesem Beispiel der gesamten Sammelkanalbandbreite B entsprechen soll, ist also die höchste zur Verfügung stehende Bandbreite, wobei für jeden der m Teilnehmer gelte:

$$B1 = B2 = B3 = \ldots\ldots = Bm = B$$

2. Die Faltsignale der einzelnen Teilnehmerstrecken haben die periodischen Zeitsequenzen:

$$Ts1, \ Ts2, \ Ts3, \ldots\ldots Tsm \ und$$

3. Die insbesondere Chirpdauer der Faltsignale, die die einzelnen Teilnehmer mit der Zentralstation austauschen, betrage individuell:

$$T1, \ T2, \ T3, \ \ldots\ldots\ Tm,$$

4. Dann gilt für die individuellen insbesondere Chirpkonventionen, den Dehnungsfaktor y [W/W] und die Dauer d [sec] des komprimierten Impulses:

$$y1 = B \ T1 = T1/ \ d$$

$$y2 = B \ T2 = T2/ \ d$$

$$y3 = B\ T3 = T3/\ d$$

$$ym = B\ Tm = Tm/\ d$$

Aus diesen Vorgaben ergeben sich folgende Schlußfolgerungen:

Die Impulse bei den Empfängern werden zu si-Pulsen nach deren individuellen Dehnungsfaktoren komprimiert mit einer durchschnittlichen Dauer

$$d = 1/B.$$

Das ergibt für die Anstiegszeit der si-Pulse aufgrund der Bandbreite die höchste zur Verfügung stehende Auflösung für die zeitliche Position auf der Zeitachse, bei dem kürzesten bei dieser Bandbreite möglichen Impuls. Daraus läßt sich die erste wichtige Schlußfolgerung ziehen:

Für die beim Empfänger zu diskriminierenden Impulse nehmen die komprimierten Impulse die kürzeste mögliche Zeit ein, und haben eine Anstiegszeit, die der vollen Sammelkanalbandbreite entspricht.

Damit ist ein Zeitmultiplexverfahren für sehr kurze Zeitpositionsabstände über einen sehr kurzen Gateimpuls (Strobepuls) ermöglicht, um das Einzelkanalsignal zu selektieren, so daß sich für den Zeitmultiplexbetrieb ein optimales Zeitraster ergibt.

Selektiv und damit einzelkanaltrennend gegenüber den Nachbarkanälen wirken folgende Eigenschaften des Verfahrens:

die Selektivität vermittels der unterschiedlichen - insbesondere Chirpbeschleunigungen -

$$m1,\ m2,\ m3,\ldots\ldots\ldots mm,$$

und

$$-m1,\ -m2,\ -m3,\ldots\ldots\ldots -mm,$$

die Selektivität der parallelen Korrelationen, beispielsweise durch das Produkt und die Summe der Quadrate der Faltsignalkomponenten aufgrund deren Koinzidenz,

die Selektivität der sequentiellen Korrelation (Autokorrelation) aufgrund der unterschiedlichen Folgeperioden der einzelnen individuellen insbesondere Chirpsignalsequenzen

$$Ts1,\ Ts2,\ Ts3,\ldots\ldots Tsm,$$

die Selektivität auf der Zeitachse, insbesondere durch die vorteilhafterweise verwendete automatische Taktregeneration in Verbindung mit einem mitgezogenen Takt. Die Summe dieser multiplen Selektivität wirkt wie die multiplikative Überlagerung mehrerer voneinander unabhängiger Korrelationsfunktionen.

Damit sind Systeme auf vielerlei Weise dimensionierbar, die nicht nur das Rauschen in hohem Umfang unterdrücken, sondern aufgrund der Mehrfachkonventionen für ein Signalelement eine extreme Selektivität aufweisen, mit Eigenschaften, die es für die komplexen Bedingungen moderner Multiline Kommunikationsverfahren hervorragend geeignet machen.

Ein weiterer sehr entscheidender Vorteil des erfindungsgemäßen Verfahrens besteht auch darin, daß ein asynchroner Betrieb auch dann möglich ist, wenn das Signal sehr viel kleiner wird als das Rauschen am Eingang des Empfängers.

Gerade weil Mehrfachsignale übertragen werden, ergeben sich diese Eigenschaften direkt aus der multidimensionalen Signalerzeugung beim Sender. Bei richtiger Wahl der Übertragungsmodalitäten ist es möglich, sämtliche zur Korrelation erforderlichen empfängerinternen Synchronbedingungen optimal zu erfüllen, weil durch das Doppel- oder Mehrfachsignal eine automatische Trägerrückgewinnung und eine automatische Taktregeneration ermöglicht wird und darüber hinaus die zeitliche Kompression und die kaskadierte Multikorrelation das Signal derart gegenüber dem Rauschen bevorteilen, daß seine Erkennung möglich wird, und daß ein asynchroner Betrieb zwischen Sender und Empfänger möglich wird mit allen Vorteilen, die sich daraus für das Übertragungsprotokoll ergeben.

Der Phasenbezug wird beim Sender und somit auch im Empfänger durch den Sender bestimmt. Er kann jeweils beim Sender paarig so gewählt werden, daß die über zwei Dispersionsfilter getrennten Signale wieder phasenrichtig, also kohärent demoduliert werden können.

Ferner führt die danach folgende sequentielle Prüfung auf Gleichzeitigkeit in der Autokorrelation bedingt durch die Periodizität, die auch der Sender bestimmen kann, zur Regeneration des Takts. Implementiert man im Empfänger einen über einen Quarz erzeugten "synthetischen Takt", so kann dieser jeweils durch den automatischen Takt mitgezogen werden, derart, daß selbst bei Einzelausfällen des automatischen Takts ein Ausschneiden der Vorzeicheninformation möglich ist. Dieser zusätzlich mitgezogene Takt erlaubt ein Arbeiten des Empfängers selbst bei extremen Bedingungen.

Das erfindungsgemäße Verfahren ermöglicht eine automatische Taktregeneration. Die auf diese Weise erzeugten Taktimpulse weisen jedoch noch leichte zeitliche Schwankungen (Jitter) auf. Die automatische Taktregeneration hat aber den entscheidenden Vorteil, nach wenigen gesendeten Pulsen eine Detektion der Information zu ermöglichen.

Der im wesentlichen vom Rauschen befreite Takt kann bevorzugt einer PLL zugeführt werden, die die letzten Jitter beseitigt, wobei das Einschwingen durch die nach dem erfindungsgemäßen Verfahren fast rauschfreien automatisch regenerierten Taktimpulse sehr schnell erfolgen kann.

Außerdem besteht die Möglichkeit, das empfangene Signal selbst zur Steuerung eines synthetischen Taktgenerators heranzuziehen, um den Takt der einlaufenden Impulse mit einem durch eine über einen durch einen Quarz gesteuerten Oszillator höherer Frequenz zu vergleichen. Hierbei werden die aufgenommenen Taktimpulse in ein Schieberegister überführt und in einem Komparator einem Mustervergleich mit einem synthetischen Bitmuster zugeführt. Ergibt sich eine Verschiebung des Musters der einlaufenden Impulse gegenüber dem gespeicherten Bitmuster, so werden einzelne Impulse des taktgesteuerten Oszillators ausgelassen, um wieder Synchronität zu erzeugen. Da die zu vergleichenden Muster redundant sind, können auch einzelne Impulse beim Empfang ausfallen, ohne daß die Takterzeugung unterbrochen wird.

Der auf diese Weise mitgeführte, synthetische Takt ist eine fast optimale Rekonstruktion des gesendeten Taktes.

Die Kanalkapazität C[bit/s] ist definiert als Produkt von Bandbreite B und dem Signal/Rauschabstand oder

$$C = B \cdot 3,32 \cdot \log\left(\frac{S+N}{N}\right) \quad [bit / s]$$

Bei dem erfindungsgemäßen Übertragungsverfahren wird die Sammelkanalbandbreite vorteilhafterweise für das gesamte System genutzt. Gleichzeitig wird durch die zusätzliche Rausch- und Störsignalunterdrückung die Kanalkapazität nach dieser Definition auch noch verbessert.

$$R_m = \frac{1}{T_m} \cdot \log_2(L) \quad \left[\frac{bit}{s}\right]$$

Die Übertragungsrate im einzelnen Kanal ist beschränkt durch die zeitliche Länge der verwendeten Faltsignale $T_m$. Es ergibt sich daraus eine maximale Übertragungsrate $R_m$ für den Einzelkanal von

$$R_m = \frac{1}{T_m} \cdot \log_2(L) \quad \left[\frac{bit}{s}\right]$$

wobei L die Anzahl der unterschiedlichen Zustände (Level) darstellt. Das heißt, die übertragungsrate beträgt bei zwei Zuständen

$$R_{2,m} = \frac{1}{T_m} \quad \left[\frac{bit}{s}\right]$$

und in dem hier behandelten Beispiel, bei dem konservativerweise mindestens vier Zustände (L = 4) übertragen werden können,

$$R_{4,m} = \frac{2}{T_m} \quad \left[\frac{bit}{s}\right]$$

Ausgehend von diesen Betrachtungen des einzelnen Kanals können nun komplexere Systeme entworfen werden.

Die sehr hohe Selektivität der einzelnen Kanäle gegenüber dem Rauschen und vor allem anders korrelierten Signalen des gleichen Gesamtsystems kann hierbei vorteilhaft ausgenutzt werden. Durch den Umstand, daß sich die insbesondere Chirpsignale komprimieren lassen und zwar zu (sinx)/x-Nadelimpulsen mit einer der Gesamtbandbreite entsprechend kurzen Anstiegszeit, ergibt sich eine ideale Auflösung auf der Zeitachse zur Detektion dieser Nutzsignale.

$$\delta[s] = \frac{1}{B}$$

Es läßt sich nachweisen, daß die mittlere Breite d [s] eines komprimierten Impulses ist. Der Zeitraum zwischen den einzelnen Impulsen $T_m$ kann innerhalb des Kanals zwar für den Einzelteilnehmer nicht genutzt werden, jedoch für die zentrale Station.

In einem größeren Übertragungssystem besteht hier die Möglichkeit, im Zeitmultiplexverfahren weitere physikalische Kanäle zu realisieren, die weder den ursprünglichen Kanal stören, noch von diesem gestört werden. Nimmt man konservativerweise an, daß zwei Nachbarnadeln, d.h. zwei Nadelimpulse aus verschiedenen Kanälen, im Abstand d = 2.d diskriminiert werden können, so folgt der Nadelabstand

$$d[s] = \frac{2}{B}$$

und der Zeitraum $T_m$ zwischen den Impulsen eines Kanals kann optimal genutzt werden. Auf diese Weise entstehen im Zeitmultiplexverfahren

$$m = \frac{T_m}{d}$$

weitere physikalische Kanäle. Die Übertragungsrate des gesamten Systems beträgt damit mindestens

$$R_{ges} = m \cdot R_{4,m} = \frac{T_m}{d} \cdot \frac{2}{T_m} = B \left[\frac{bit}{s}\right]$$

Damit gilt aber für die zentrale Station die volle Bitrate. Somit hat man ein für diese Anwendung optimales System, bei dem die zentrale Station die volle Bitrate zur Bedienung aller Teilnehmerstationen zur Verfügung hat und die Teilnehmer eine genügend große Bitrate - je nach Bedarf - erhalten können.

Heute sind Bitraten für Telefonkommunikation zwischen 20 bis 64 kbit/s üblich. Nimmt man an, ein Netz werde bei 2,44 GHz Mittenfrequenz mit einer zulässigen Gesamtbandbreite von 80 MHz betrieben, dann ergibt sich bei einer geforderten Bitrate von 32 kbit/s nach der letzten Formel theoretisch für die maximal möglichen Verbindungen ein Wert von

$$m = \frac{B}{R_m} = \frac{80 MHz}{32 kbit/s} = 2500 \, [Kanälen]$$

Dieser zunächst theoretische Wert müßte um 30 % für die Overheadkapazität gekürzt werden und für den Vollduplexbetrieb halbiert werden. Aber das ergibt immer noch 875 Teilnehmerkanäle im echten Duplex, vorausgesetzt die Organisation zwischen den einzelnen Teilnehmern und der Zentralstation wird so gewählt, daß unterschiedliche BT-Produkte und unterschiedliche Folgeperioden für die einzelnen Teilnehmer möglich sind.

Diese Werte können erreicht werden, obwohl insbesondere Chirpsignale weit größerer Dauer verwendet werden und deren BT-Produkt sehr viel größer ist als jenes, das sich aus der Pulslänge und der Auflösung auf der Zeitachse ergibt. Die Erklärung hierfür folgt aus dem Umstand, daß die insbesondere Chirpsignale, die Energieimpulse langer Dauer und kleiner Leistung darstellen, beim Empfänger in Leistungspulse sehr kurzer Dauer, also Pulse sehr hoher zeitlicher Energiedichte, durch Kompression transformiert werden können.

Die Aussendung mindestens zweier solcher Pulse pro Nachricht und Einzelkanal während derselben Zeitdauer also hat zusätzlich die Möglichkeit geschaffen, das Rauschen im Zeitraum *"außerhalb" der komprimierten Pulse* im Empfänger durch Mehrfachkorrelation erheblich zu unterdrücken. Hierdurch ist die Selektion auf der Zeitachse und auch die Unterdrückung der Nachbarkanäle möglich, also auch die Nutzung der gesamten Zeit zur Übertragung der Nachbarkanäle für andere Teilnehmer.

Wie durch viele Beispiele hier erläutert und dargestellt, erlaubt die Übertragung von mehrdimensionalen Signalen deren Mehrfachkorrelierbarkeit beim Empfänger und damit die Unterdrückung von thermischem Rauschen und anderen Störsignalen. Insbesondere bewirkt die mehrfache Korrelierbarkeit auch eine Selektion des Einzelkanales gegenüber Nachbarkanälen gleichartiger Signale mit mehrfach abweichenden Konventionen. Diese Selektivität gilt grundsätzlich bei verschiedensten Konventionen, ist aber besonders vorteilhaft bei der Mehrfachkonvention, die Mehrfachchirpsignale bieten.

Die mehrfach gechirpten Signale haben einen zusätzlichen Vorteil, der in ihrer Natur liegt und der sich aus dem Energieerhaltungssatz ableiten läßt. Beim Sender können Mehrfachchirpsignale für eine bestimmte Einzelverbindung durch Superposition generiert werden. Dabei kann deren durchschnittliche Leistung relativ klein bleiben. Da das Produkt aus dem Quadrat der Effektivspannungen und der Dauer eines Impulses seine Energie darstellt, gilt

$$U_1{}^2 \cdot T_1 \;=\; U_2{}^2 \cdot \delta;$$

oder wenn $U_1$ die Effektivspannung des Sendechirpimpulses darstellt und $T_1$ dessen Dauer und $U_2$ die effektive Amplitude der Spannung des komprimierten Pulses darstellt und $\delta$ dessen Dauer in sec wird:

$$R_m \left[ \frac{bit}{s} \right] = \frac{1}{T_m} \cdot \log_2(L)$$

wobei $\psi$ den Dehnungsfaktor und dessen Kehrwert den Kompressionsfaktor, also das Verhältnis der Leistungen $P_2$ des komprimierten Impulses zur Leistung des gesendeten insbesondere Chirpimpulses $P_1$ darstellt, das gleich ist dem Verhältnis der Dauer des gesendeten Pulses zur Momentandauer $\delta$ des komprimierten Impulses. Demnach ist die Leistung des Sendeimpulses umso kleiner je größer der Dehnungsfaktor ist.

Dieser zunächst theoretische Wert müßte um 30% für die Overheadkapazität gekürzt werden und für den Vollduplexbetrieb halbiert werden. Aber das ergibt immer noch 875 Teilnehmerkanäle im echten Duplex, vorausgesetzt die Organisation zwischen den einzelnen Teilnehmern und der Zentralstation wird so gewählt, daß unterschiedliche BT - Produkte und unterschiedliche Folgeperioden für die einzelnen Teilnehmer möglich sind.

Diese Werte können erreicht werden, obwohl Chirpsignale weit größerer Dauer verwendet werden und deren BT Produkt sehr viel größer ist als jenes, das sich aus der Pulslänge und der Auflösung auf der Zeitachse ergibt. Die Erklärung hierfür folgt sich aus dem Umstand, daß die insbesondere Chirpsignale, die Energieimpulse langer Dauer und kleiner Leistung darstellen, beim Empfänger in Leistungspulse sehr kurzer Dauer, also Pulse sehr hoher zeitlicher Energiedichte, durch Kompression transformiert werden können.

Die Aussendung mindestens zweier solcher Pulse pro Nachricht und Einzelkanal während derselben Zeitdauer also hat zusätzlich die Möglichkeit geschaffen, das Rauschen im Zeitraum *"außerhalb" der komprimierten Pulse* im Empfänger durch Mehrfachkorrelation erheblich zu unterdrücken. Hierdurch ist die Selektion auf der Zeitachse und auch die Unterdrückung der Nachbarkanäle möglich, also auch die Nutzung der gesamten Zeit zur Übertragung der Nachbarkanäle für andere Teilnehmer.

Wie durch Beispiele dargestellt ist, erlaubt die Übertragung von mehrdimensionalen Signalen deren Mehrfachkorrelierbarkeit beim Empfänger und damit die Unterdrückung von thermischem Rauschen und anderen Störsignalen. Insbesondere bewirkt die Mehrfachkorrelierbarkeit auch eine Selektion des Einzelkanales gegenüber Nachbarkanälen gleichartiger Signale mit mehrfach abweichenden Modulationen. Diese Selektivität gilt grundsätzlich bei verschiedensten Modulationen, ist aber besonders vorteilhaft bei der Mehrfachkonvention, die Mehrfachchirpsignale bieten.

Das heißt aber, daß die Sendeleistung pro Einzelkanal besonders klein ist. Das heißt ferner, daß die Teilnehmer an einem Mobilfunknetz mit relativ kleiner Leistung auskommen, was bezüglich der Strahlenbelastung des Menschen als vorteilhaft erachtet werden kann. Für die zentrale Sendestation bedeutet dies, daß die Summe der für die einzelnen Kanäle ausgesandten um den Faktor

$1/y$

kleineren Leistungen um den selben Faktor kleiner ist. Natürlich muß der Sender entsprechend der Zahl der Teilnehmer m eine um den Faktor m höhere Leistung aufbieten, was aber aus energetischen Gründen nicht vermeidbar ist. Also ergibt sich für den zentralen Sender eines Mehrteilnehmernetzes eine Gesamtleistung, die um den Faktor der Anzahl der Teilnehmer höher ist als die der einzelnen Teilnehmer.

Die erhöhte Empfindlichkeit durch die Verwendung der Chirpsignale kann genutzt werden, um die Reichweite zu erhöhen oder bei gleicher Reichweite die Leistung pro Kanal herabzusetzen.

Demzufolge können auch die Eigenschaften in elektromagnetischer Hinsicht als günstig bezeichnet werden. Durch die guten Rauscheigenschaften und die Eigenschaften der Chirpsignale bedingt kann die Sendeleistung allgemein und insbesondere bei den einzelnen Teilnehmern einer aus Transceivern bestehenden stationären oder mobilen Mehrteilnehmerstruktur bei den Teilnehmern gesenkt werden. Auch kann die Anzahl der zentralen Stationen wegen der größeren Reichweite gesenkt werden. Auch dies führt, wenn man so will, zu einer Herabsetzung der human exposure. Darüber hinaus verbessert die Erniedrigung der Sendeleistungen die EMI-Bedingungen beträchtlich.

Die verwendeten Signale weisen auch eine gute Verträglichkeit mit anderen Sendestationen auf, die konventionelle Sendesignale emittieren; sie stören diese nicht nur nicht wegen der verringerten Sendeleistung, sondern darüber hinaus stellen sie keine diskreten Signale dar, so daß die Bedingungen der elektromagnetischen Kompatibilität vergleichsweise sehr günstig sind.

Darüber hinaus sind Chirpsignale dadurch, daß sie Energiesignale darstellen, die beim Empfänger durch die zeitliche Kompression in Energiedichtesignale also Leistungssignale gewandelt werden, Signalelemente, die durch Störungen nur zu einem Teil gestört oder zerstört werden können, so daß Fading-Erscheinungen oder kurzzeitige Störsignale anderer Sender anderer Modulationsarten weit geringere Störeffekte haben als sonst üblich.

Das führt wiederum zu einem beachtlichen Vorteil des erfindungsgemäßen Verfahrens. Es läßt sich parallel zu anderen in unterschiedlicher Betriebsart betriebenen Sende-/Empfangsstrecken im gleichen Frequenzband nutzen, weil es einmal die anderen Nachrichtenkapazitäten weniger stört und auch von diesen weniger gestört werden kann. Diese geringe Störfähigkeit gegenüber Dritten (aktive EMC) und die hohe Störimmunität gegen Dritte (passive EMC) sind ebenfalls sehr günstige Eigenschaften dieses zunächst exotisch erscheinenden Übertragungsverfahrens. Die Summe der hier nur auszugsweise genannten fundamentalen Vorteile jedoch wird dieses Verfahren bald zu einem Maßstab machen, der nach Standardisierung drängt.

Ein weiterer Vorteil in dem Umstand, daß die erfindungsgemäßen Systeme, je nach Applikation, je nach Standort und je nach Art der Anforderungen, die an ein System unidirektional oder bidirektional als stationäres oder mobiles Zwei- oder Mehrteilnehmersystem gestellt werden, angepaßt werden können. Durch zwei- oder mehrdimensionale Sendesignale lassen sich, besonders bei bidirektionalen Transceiversystemen auch adaptive Systeme, also anpassungsfähige Systeme gestalten. Mikrocontroller gesteuerte Sende- und Empfangssysteme sind heute schon Stand der Technik.

Insbesondere die hier dargestellten Beispiele solcher erfindungsgemäßen Systeme - und hier wieder besonders vorteilhaft jene, die auf Mehrfachchirpsignalen beruhen - eignen sich besonders für computergesteuerte hochflexible Kommunikationsnetze, die mit den herkömmlichen unidimensionalen Verfahren nur bedingt realisierbar sind. Diese Eigenschaften sind:

Die Anpassungsfähigkeit des erfindungsgemäßen Verfahrens in der Mehrfach-Chirpsignal-Version an die Entfernung zwischen Sender und Empfänger. Durch die Aussendung eines mehr oder weniger großen BT-Produktes besteht die Möglichkeit, die Sendeleistung oder das Nachrichtenvolumen jeweils je nach Standort oder Störanfälligkeit kontrollieren, messen, einstellen und damit optimal nutzen zu können.

Da künftig Sendefrequenzen mit immer höheren Werten und damit höheren Bandbreiten genutzt werden, ergibt sich beim erfindungsgemäßen Verfahren auch die Möglichkeit, die BT-Produkte sowohl in der Zeit als auch in der Bandbreite zu variieren, um einer speziellen Verbindung je nach Bedarf mehr oder weniger Übertragungsrate zur Verfügung zu stellen. All diese Regelmöglichkeiten werden bei diesem Verfahren zum Schluß ein Organisationsproblem, das zwischen Sender und Empfänger als komplexe Aufgabe gelöst werden muß.

Das erfindungsgemäße Übertragungsverfahren ist jedoch nicht auf die vorstehend exemplarisch beschriebenen Modulationsverfahren beschränkt, sondern läßt sich mit einer Vielzahl von Modulationsverfahren kombinieren, die u.a. in der eingangs genannten Druckschrift beschrieben sind, auf deren Inhalt insoweit Bezug genommen wird. Sogar die modernen Spreizmodulationsverfahren können mit dem winkelmodulierten Trägersubstrat versehen werden, um hier eine Reduktion des weißen Rauschens zu bewirken, was bisher nicht möglich war.

Andere vorteilhafte Weiterbildungen der Erfindung sind in den Unteransprüchen gekennzeichnet bzw. werden nachstehend zusammen mit der Beschreibung der bevorzugten Ausführungsbeispiele der Erfindung anhand der Figuren näher dargestellt. Es zeigen:

Figur 1a ein Blockschaltbild einer Sendeanordnung als Beispiel zur Anwendung des erfindungsgemäßen Übertragungsverfahrens.

Figur 1b bis 1f verschiedene Korrelationsanordnungen als Blockschaltbilder zur Anwendung in verschiedenen Ausführungsformen von Empfängern zum Empfang des von dem in der Figur 1a dargestellten durch den Sender erzeugten und übertragenen Signals.

Figur 2a bis 2p den Signalverlauf an verschiedenen wichtigen Punkten innerhalb der in den vorangegangenen Figuren dargestellten Blockschaltbilder,

Figur 3a bis 3d verschiedene Ausführungsformen von Empfängern unter Verwendung der erste Korrelationsanordnungen nach den Figuren 1b bis 1f als Beispiele für Empfängeranordnungen zur Nutzung des übertragungsverfahrens,

Figur 4 ein Blockschaltbild einer Sendeanordnung als weiteres Ausführungsbeispiel zur Anwendung des erfindungsgemäßen Übertragungsverfahrens mit Mehrfachmodulation auf der Senderseite und Mehrfachkorrelation auf der Empfängerseite,

Figur 5 ein Blockschaltbild einer Schaltung zur mehrdimensionalen Modulation einer Nachricht mit zwei um 90° versetzten Trägern und deren Demodulation mit Hilfe einer doppelt kohärenten Produktdemodulation,

Figur 6 ein Blockschaltbild einer Schaltung zur mehrdimensionalen Modulation einer Nachricht mit zwei unterschiedlichen Trägern und deren Demodulation mit Hilfe der dementsprechend doppelten Träger,

Figur 7 ein Blockschaltbild einer Schaltung zur mehrdimensionalen Modulation einer Nachricht durch zwei komplementäre Dispersionsfilter und deren äquivalente Demodulation mit Hilfe zweier komplementärer Dispersionsfilter für asynchronen Betrieb,

Figur 8 ein Blockschaltbild einer Schaltung zur mehrdimensionalen Modulation einer Nachricht durch vier Dispersionsfilter und deren äquivalente Dekodierung mittels vier dispersiver Filter und mehrdimensionaler Korrelation für asynchronen Betriebe

Figur 9 ein Blockschaltbild einer Schaltung zur mehrdimensionalen Dekodierung einer Nachricht durch zwei Dispersionsfilter und kohärente Produktdemodulation und durch nachfolgende autokorrelative Taktgeneration eines Gateimpulses zur Multiplikation mit der Vorzeicheninformation,

Figur 10 ein Blockschaltbild zur mehrdimensionalen Dekodierung einer Nachricht durch zwei Dispersionsfilter und kohärente vorzeichengerechte Produktdemodulation und Quadrierung zur Bildung der Periodizität für die autokorrelative Taktgeneration eines Gateimpulses zur Multiplikation mit der Vorzeicheninformation,

Figur 11a ein Beispiel eines zu übertragenden Signals,

Figur 11b das Signal gemäß Figur 11a in einer anderen Darstellungsweise,

Figur 11c je ein Up- und ein Down-Chirp-Signal,

Figur 11d bis f verschiedene Signalverläufe an Punkt 1 von Figur 10,

Figur 11g und h ein Rauschsignal ohne bzw. mit Nutzsignal,

Figur 11i den Signalverlauf an Punkt 2 von Figur 10,

Figur 11j den Signalverlauf an Punkt 3 von Figur 10,

Figur 11k den Signalverlauf an Punkt 4 von Figur 10,

Figur 11l den Signalverlauf an Punkt 5 von Figur 10,

Figur 11m den Signalverlauf an Punkt 6 von Figur 10,

Figur 11n das Ausgangsnutzsignal 6 von Figur 10,

Figur 12 ein Blockschaltbild zur mehrdimensionalen Dekodierung einer Nachricht durch zwei Dispersionsfilter mit um 90° versetzten Ausgängen zur filterlosen kohärenten vorzeichengerechten Produktdemodulation und Quadrierung zur Kreuz- und Autokorrelation,

Figur 13a ein Blockschaltbild zur mehrdimensionalen Dekodierung einer Nachricht durch zwei Dispersionsfilter mit um 90° versetzten Ausgängen zur Quadrierung zur Kreuz- und Autokorrelation zwecks Rauschunterdrückung,

Figur 13b ein Blockschaltbild zur mehrdimensionalen Dekodierung einer Nachricht durch zwei Dispersionsfilter und vorzeichengerechte Produktdemodulation und Quadrierung und nachgeschalteten Auto- und korrelatives Elemente zwecks Taktgeneration eines Gateimpulses zur Multiplikation mit der Vorzeicheninformation sowie

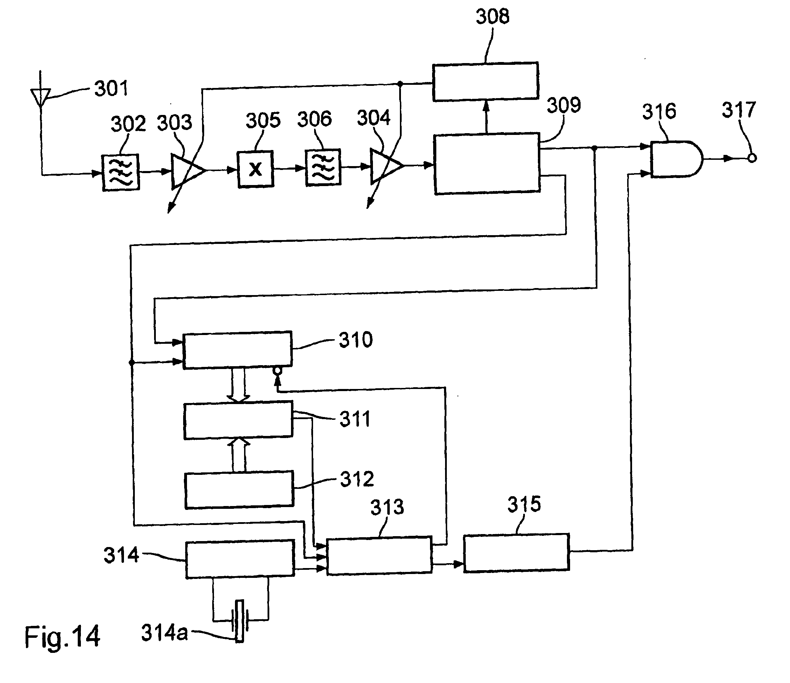

Figur 14 ein weiteres Blockschaltbild einer Schaltung zur Taktregeneration als vorteilhafte Weiterbildung der Schaltungen nach den zuvor beschriebenen Ausführungsbeispielen.

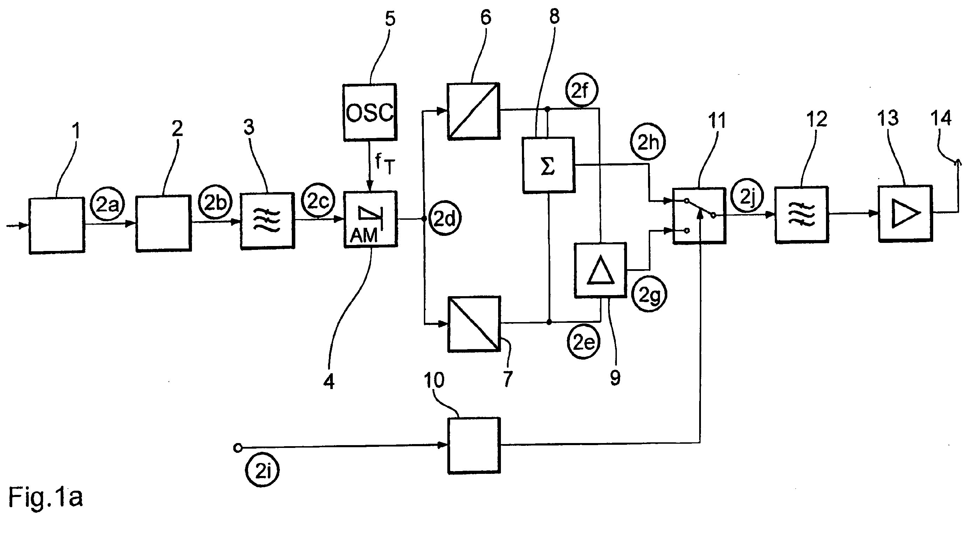

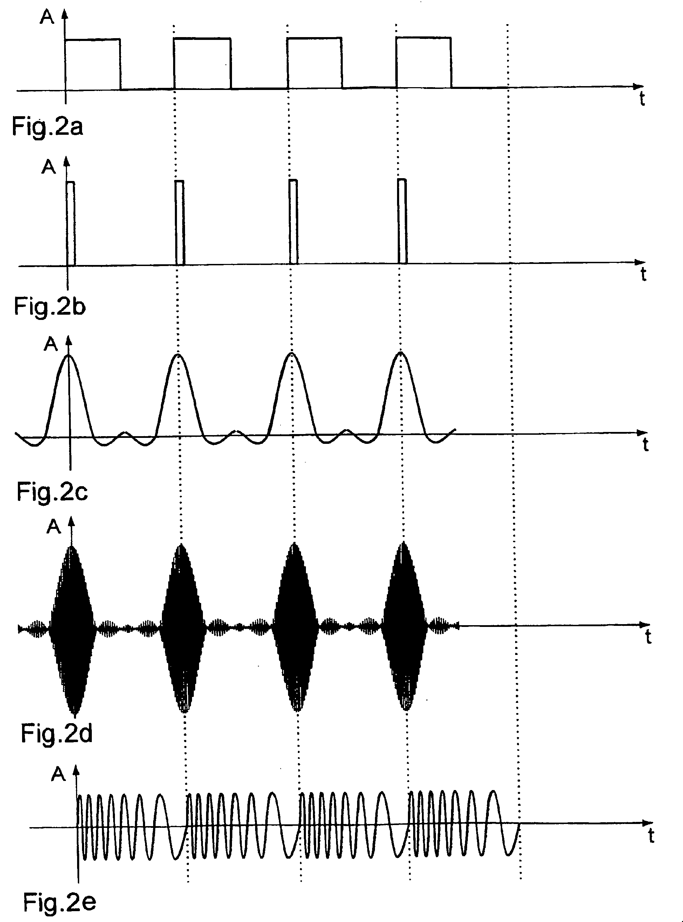

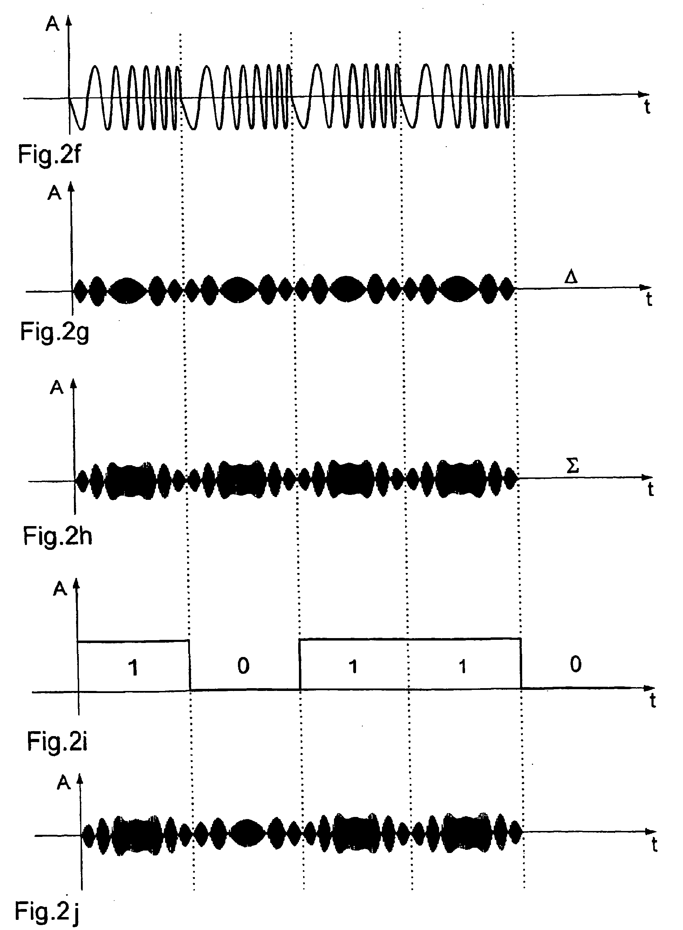

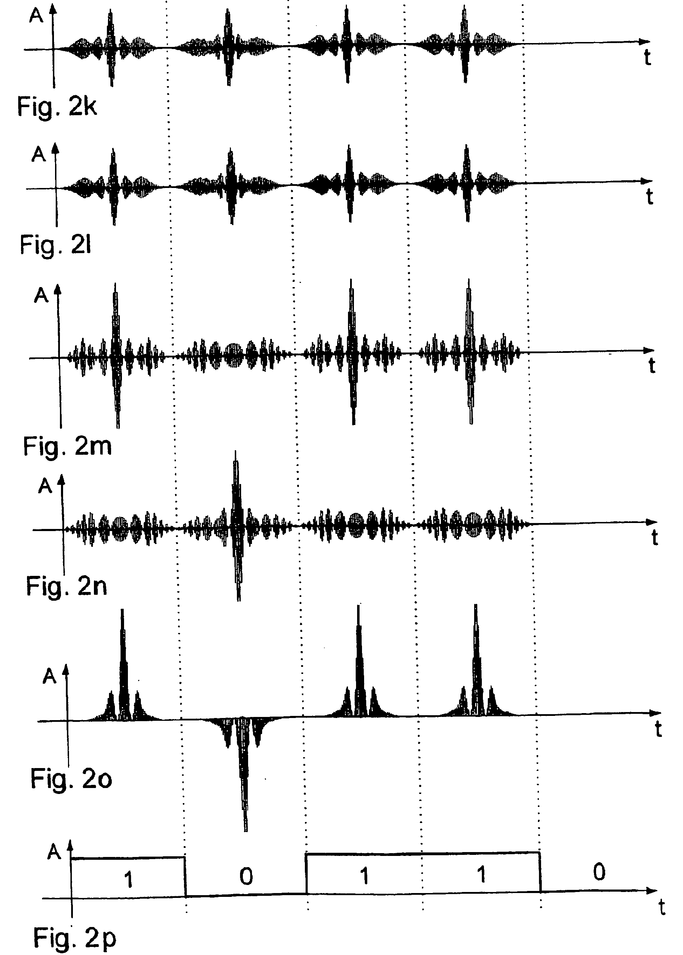

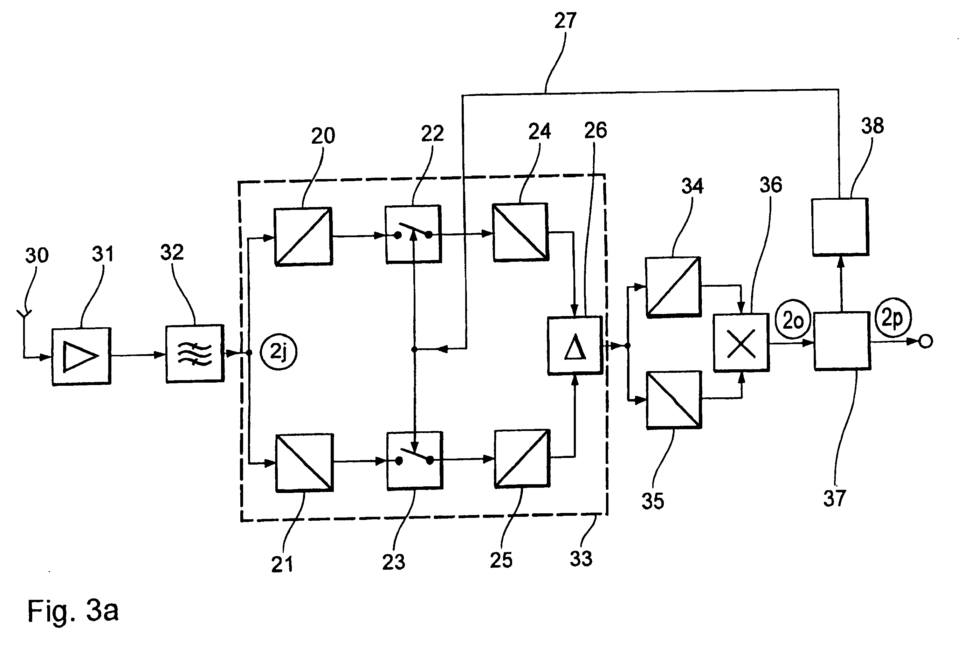

Der in Figur 1a als Blockschaltbild dargestellte Sender zeigt ein Ausführungsbeispiel zur Übertragung eines in digitalisierter Form vorliegenden, beispielsweise binären, Nutzsignales, dessen impulsförmige (zeitliche) Abschnitte Teilsignale bilden, welche in zwei unterschiedlich modulierte Signalkomponenten (Signalanteilen) gemeinsam über eine störungsbehaftete Übertragungsstrecke an einen der in den Figuren 3a bis 3d dargestellten Empfänger gelangen. Die Übertragung erfolgt bei vorgegebenen Anforderungen an Reichweite und Störsicherheit mit einer relativ geringen Sendeleistung. Bei einem batteriebetriebenen Sender wird dadurch die Batterielebensdauer erhöht, und vor allem die Umweltbelastung durch elektromagnetische Strahlung (EMI) - auch als Elektro-Smog bezeichnet - im Sinne der Belastung durch elektromagnetische Einwirkung erniedrigt. Darüber hinaus weist der Sender aufgrund seiner relativ geringen Sendeleistung ein verringertes Störpotential gegenüber anderen Sende-Empfangsstrecken (EMC - Electro-Magnetic-Compability) - verglichen mit anderen Nachrichtenübertragungssystemen - auf.
Das in Figur 1a dargestellte System bildet eine Grundkonfiguration, welche mit anderen Teilen weiter unten dargestellter Systeme kombinierbar ist. Die kreisförmig umrandeten Bezugszeichen enthalten hierbei - wie auch in den folgenden Figuren verwendet - jeweils Verweise auf die Darstellung des zugehörigen Signalverlaufs in den entsprechend bezeichneten Figuren.
So zeigt Figur 2i den Signalverlauf des binären Eingangssignals. Die vorstehend erwähnte Übertragung mit einer relativ geringen Sendeleistung wird in dem dargestellten erfindungsgemäßen Übertragungssystem dadurch ermöglicht, daß senderseitig Teilsignale erzeugt werden, die empfängerseitig - wie noch detailliert beschrieben werden wird - durch Dispersionsfilter zeitlich komprimiert werden, was zu einer entsprechenden Amplitudenerhöhung führt und durch zusätzliche korrelative Signalverarbeitung eine Verbesserung des Signal/Rauschverhältnisses bewirkt.
Zur Erzeugung der Teilsignale weist der Sender zunächst einen Impulsgenerator 1 auf, der - wie in Figur 2a dargestellt - eine kontinuierliche Folge von äquidistanten Rechteckimpulsen erzeugt. Die von dem Impulsgenerator 1 erzeugte Impulsfolge dient hierbei jedoch lediglich der Erzeugung von Teilsignalen und beinhaltet zunächst keine Informationen. Nachfolgend wird die von dem Impulsgenerator 1 erzeugte Rechteckimpulsfolge dem Impulsformer 2 zugeführt, der die Aufgabe hat, die einzelnen Rechteckimpulse jeweils in sehr kurze Stoßimpulse (Quasi-Dirac-Impulse) zu wandeln. Der Impulsformer 2 bildet die als mathematische Idealvorstellung nicht erreichbaren Dirac-Impulse hierbei durch kurze Nadelimpulse nach, wie in Figur 2b dargestellt.

Die auf diese Weise erzeugte Folge von Nadelimpulsen wird anschließend einem Tiefpaßfilter 3 zugeführt, dessen Filterkennlinie kurz vor der Grenzfrequenz eine Überhöhung aufweist und die die nadelförmigen Impulse in Teilsignale (si-Impulse) transformiert, wie dies detailliert in Figur 2c dargestellt ist.

Nachfolgend wird diese Impulsfolge mittels eines Amplitudenmodulators (Multiplikators) 4 auf eine von dem Oszillator 5 erzeugte hochfrequente Trägerschwingung mit der konstanten Trägerfrequenz $f_T$ aufmoduliert, um eine drahtlose Übertragung zu ermöglichen. Am Ausgang des Amplitudenmodulators 4 erscheint somit eine Folge von äquidistanten Trägerfrequenzimpulsen mit jeweils si-förmiger Hüllkurve, wie in Figur 2d dargestellt. Wichtig ist in diesem Zusammenhang, daß die am Ausgang des Amplitudenmodulators 4 erscheinende Impulsfolge unabhängig von dem in Figur 2i wiedergegebenen digitalen Eingangssignal ist und somit keine Information trägt.

Die auf eine Trägerfrequenz aufmodulierte Impulsfolge wird anschließend zwei parallel geschalteten Dispersionsfiltern 6, 7 zugeführt, die jeweils ein vorgegebenes frequenzabhängiges differentielles Laufzeitverhalten (Gruppenlaufzeitverhalten) aufweisen und - wie in den Figuren 2e und 2f dargestellt - winkelmodulierte Impulse erzeugen. Sie bilden in unterschiedlichen Schaltungszweigen angeordnete Modulatorelemente im Sinne der Erfindung.

Die in den Figuren 2a bis 2n dargestellten Kurvenverläufe sind vor allem in der Zeitachse absichtlich nicht maßstabsgerecht gezeichnet, um den jeweiligen Kurvenverlauf und seinen Inhalt besser zu verdeutlichen. In Wirklichkeit sind die komprimierten Signale sehr viel schmaler und die Chirpsignalanteile sehr viel dichter auf der Zeitachse angeordnet.

Das Dispersionsfilter 6 weist hierbei eine mit der Frequenz zunehmende Gruppenlaufzeit auf und erzeugt somit - wie in Figur 2f dargestellt - winkelmodulierte Impulse mit einer während der Impulsdauer zunehmenden Frequenz. Die Frequenz eines Impulses am Ausgang des Dispersionsfilters 6 nimmt also zu Beginn des Impulses kontinuierlich und monoton von einem unterhalb der Trägerfrequenz $f_T$ liegenden Wert $f_T - \Delta f/2$ auf einen oberhalb der Trägerfrequenz $f_T$ liegenden Wert $f_T + \Delta f/2$ zu. Ein derartige Impuls mit ansteigender oder fallender Frequenz wird "Chirp-Impuls" genannt.

Die Gruppenlaufzeitcharakteristik des Dispersionsfilters 7 weist dagegen eine mit der Frequenz abnehmende Laufzeit auf, so daß am Ausgang des Dispersionsfilters 7 winkelmodulierte Impulse - wie in Figur 2e dargestellt - mit einer während der Impulsdauer abnehmenden Frequenz erscheinen.

Die Ausgangssignale der beiden Dispersionsfilter 6, 7 werden anschließend zur Erzeugung der Teilsignale (hier in Form von Faltimpulsen) einem Addierer 8 sowie einem Subtrahierer 9 als Konzentratoren zugeführt, so daß zwei unterschiedliche Teilsignale zur Informationsübertragung zur Verfügung stehen. Die Auswahl des zu übertragenden Teilsignales erfolgt hierbei in Abhängigkeit von dem jeweiligen Wert des in Figur 2i wiedergegebenen binären Eingangssignals, das zur Bereitstellung definierter Signalpegel zunächst einem Bitdiskriminator 10 zugeführt wird und anschließend das Schalterelement 11 ansteuert. Bei einem HIGH-Pegel des Eingangssignals wird das von dem Addierer 8 erzeugte Summensignal ausgewählt, wohingegen ein LOW-Pegel des Eingangssignals zu einer Auswahl des Differenzsignals der beiden winkelmodulierten Impulse führt. Am Ausgang des Analogschalters 11 erscheint also, wie in Figur 2j dargestellt, eine äquidistante Folge von unterschiedlichen Teilsignalen entsprechend dem jeweiligen Wert des informationstragenden Eingangssignals.

Das am Ausgang des Analogschalters 11 erscheinende Signal wird anschließend von einem Bandpaßfilter 12 gefiltert, das auf die Trägerfrequenz $f_T$ des Oszillators 5 und auf die Bandbreite $\Delta f$ der Teilsignalkomponenten abgestimmt ist und somit außerhalb des Übertragungsbandes liegende Störsignale ausfiltert. Das auf diese Weise gewonnene Signal wird dann, wie üblich, von einem Sendeverstärker 13 verstärkt und über die Sendeantenne 14 abgestrahlt.

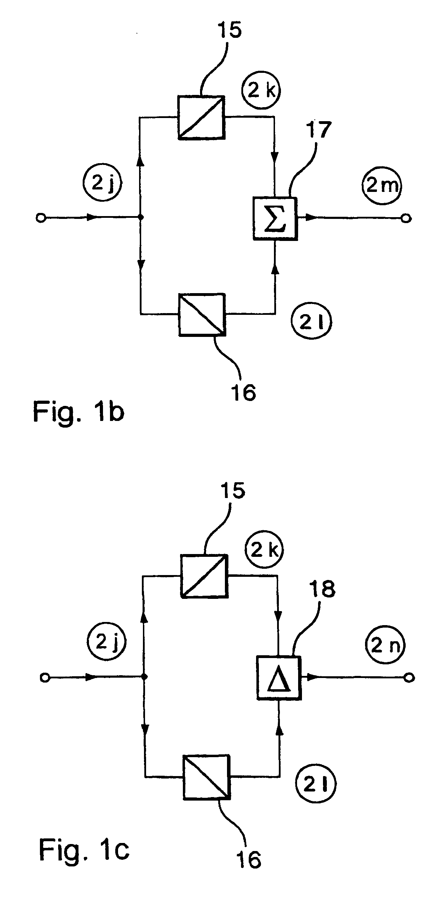

Die Figuren 1b bis 1f zeigen unterschiedliche korrelative Korrelationsanordnungen für den Empfänger. Grundsätzlich können derartige Korrelationsanordnungen im analogen Teil eines Empfängers am Eingang des Empfängers hinter einem bandbegrenzenden Eingangsfilter, das hier nicht dargestellt ist, plaziert werden, oder sie könnten im ZF-Teil eines Empfängers vorgesehen werden. Alle Korrelationsanordnungen der Figuren 1b bis 1f sind vom Typ der hier genannten ersten Art für Parallelanordnungen und dienen zur Herabsetzung des Rauschens bzw. der Störanteile innerhalb von Teilsignalen.

Figur 1b zeigt eine Additionsstufe. Das empfangene Teilsignal 2j wird über ein Koppelelement parallel zwei Dispersionsfiltern 15 und 16 zugeführt. Das frequenzabhängige differentielle Laufzeitverhalten dieser Filter ist hierbei revers zueinander, wobei das positiv wirkende Dispersionsfilter eine differentielle Laufzeitcharakteristik aufweist, die eine parabolische Kennlinie zwischen der Frequenz und der differentiellen frequenzabhängigen Verzögerung aufweist. Hierzu sei die zugehörige Parabel von 15 nach oben offen. Das Dispersionsfilter 16 hat eine hierzu reverse Charakteristik, das heißt, ihr differentielles frequenzabhängiges Laufzeitverhalten stellt eine nach unten offene Parabel dar. Man kann diese Kennlinien auch durch die Gruppenlaufzeit kennzeichnen, wobei komplementäre Gruppenlaufzeitkennlinien im Zeit- und Frequenzverhalten einmal einen positiven bzw. negativen (steigenden oder fallenden) Verlauf der Kennlinien aufweisen.

Die Diagonalen in den Blockschaltungssymbolen 15 und 16, die in unterschiedliche Richtungen ansteigen, sollen den unterschiedlichen Charakter der Dispersionsfilter kennzeichnen, wobei die ansteigende Diagonale hier ein sogenanntes "positiv wirkendes Dispersionsfilter" und die abfallende Diagonale ein "negatives Dispersionsfilter" im Sinne der Beschreibung darstellt.

Wie in der Beschreibung dargestellt, sind auch andere differentielle Laufzeitkennlinien möglich und auch erforderlich, wenn senderseitig insbesondere Chirpsignalkomponenten anderer Frequenzmodulationscharakteristik als Trägersubstrat aufmoduliert werden.

An den Ausgängen der beiden Dispersionsfilter 15 und 16 erscheint jeweils ein kombiniertes Signal, das aus einem zeitlich komprimierten Impuls mit entsprechend erhöhter Amplitude und überlagert hierzu aus einem zeitlich expandierten Impuls besteht. Die beiden Ausgangssignale 2k und 2l stellen zeitlich gleichartig verlaufende zur Mittellage des komprimierten Impulses symmetrische Signalverläufe dar. Die Ausgangssignale der Dispersionsfilter werden über eine Addierstufe 17 additiv überlagert. Das am Ausgang der Summierstufe erscheinende Signal zeigt einen reduzierten Störsignalanteil im Verhältnis zum Signal, weil bei dem Signal die koinzidenten Amplituden addiert werden und beim Rauschen die in der Phasenlage und Amplitude statistisch auftretenden Werte nur bezüglich ihrer Leistung addiert werden. Das Ausgangssignal 2m weist also eine Signal/Rauschverbesserung auf.

Ein Multiplexer am Eingang der Korrelationsanordnungen teilt den Signalweg auf zwei parallele Schaltungen nach Figur 1b auf. Er schaltet im Takt der Teilsignalfolge (synchronisierbarer Betrieb) die einzelnen Faltimpulse wechselnd einmal auf eines der Module und im Folgetakt auf das andere Modul. Durch die solchermaßen erfolgte Splittung werden die Rauschanteile auf die Dauer des Teilsignales beschränkt und hierdurch wird der somit erzeugte überlagerte "Rauschimpuls" ebenfalls durch die Dispersionsfilter gedehnt, was zu einer Reduzierung der Rauschanteile beiträgt.

Für Figur 1c gilt entsprechendes wie für Figur 1b, wobei auch hier zwei parallel invers zueinander geschaltete Dispersionsfilter 15 und 16 den das Teilsignal bildenden Faltimpuls jeweils in einen komprimierten und expandierten Anteil verwandeln und diese beiden Signale über eine Differenzstufe subtrahiert werden. Da Addition und Subtraktion zueinander komplementäre Vorgänge darstellen, ist die Signal/Rauschverbesserung die gleiche wie für die Summation. Im übrigen gilt das für Figur 1b Gesagte.

Da nach Figur 1a jedoch Summen- und Differenzsignale 2h und 2g generiert wurden, können hier die Summenstufe nach Figur 1b und die Differenzstufe nach Figur 1c die Summen- und Differenzsignale diskriminieren. Demzufolge ist auch die Summenstufe 17 und die Differenzstufe 18 parallel geschaltet. Damit ist nur ein Dispersionsfilterpaar 15 und 16 erforderlich. Vorteilhafterweise erfolgt die Anordnung auf einem einzigen SAW-Filter-Substrat. Die aus der Summen- und Differenzbildung hervorgehenden Signale 2m und 2n, die ein reduziertes Rauschen aufweisen, werden dann im Empfängerzug weiterverarbeitet.

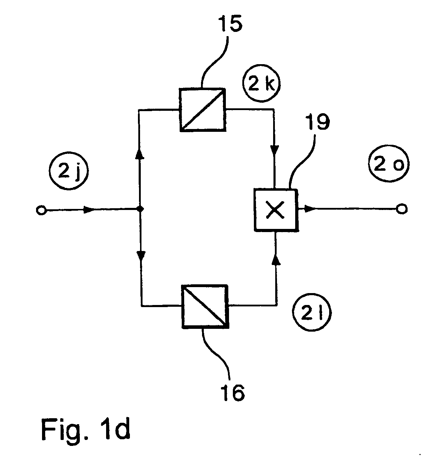

Figur 1d zeigt eine multiplikativ arbeitende korrelative Rauschreduktionsstufe für Faltsignale und stellt ebenfalls ein Modul dar, das innerhalb eines Verstärkerzuges verwendet werden kann. Der Faltimpuls 2j wird hierbei ebenfalls zwei invers zueinander wirkenden Dispersionsfiltern 15 und 16 zugeführt, an deren jeweiligem Ausgang das kombinierte Signal 2k und 2l entstehen, in dessen Mitte sich jeweils ein komprimierter Impuls befindet, wohingegen die expandierten Komponenten zueinander invertiert sind. Das Produkt dieser Multiplikation besteht aus einer Mischung der trägerfrequenten Signale 2k und 2l, was zu einer verdoppelten Trägerfrequenz führt. Da die Signale 2k und 2l in der Zeit-und Frequenzachse spiegelsymmetrisch gleich sind, werden die Signalamplituden - und insbesondere deren komprimierter Anteil - quadriert. Da die Frequenzlage und die Frequenzanteile dieser miteinander multiplizierten Signale gleich sind, entstehen bei der Multiplikation die Summen und-Differenzen der Frequenzen der miteinander multiplizierten kombinierten Signale. Die Spektren werden einmal zur doppelten Frequenz verschoben und zum anderen findet eine direkte phasenstarre kohärente Demodulation statt. Der Ausgang 2o zeigt also ein kombiniertes Signal mit doppelter Frequenzlage, gleichzeitig aber kann man einen Tiefpaß dem Ausgang nachschalten und erhält so direkt das demodulierte niederfrequente Signal. Diese Stufe, die ein korrelatives Element im Sinne der Erfindung in Form einer Störunterdrückungsschaltung bildet, quadriert die zeitlich zusammenfallenden Signale und unterdrückt das nichtkorrelierte Rauschen periodischer oder quasiperiodischer Signale. Demnach führt dieses Modul nach Figur 1d vorteilhafterweise gleichzeitig drei analoge Vorgänge durch:

1. Das Faltsignal wird mit seinen revers zueinander symmetrisch gelegenen Chirpsignalkomponenten durch die zueinander revers wirkenden Dispersionsfilter gleich zweimal komprimiert (Erhöhung der Signalamplitude).

2. Durch die korrelative Multiplikation der koinzidenten Signalanteile wird das Signal gegenüber dem Rauschen hervorgehoben (korrelative Rauschunterdrückung).

3. Durch die Multiplikation entsteht ein kombiniertes Signal doppelter Frequenzlage im Vergleich zur ursprünglichen Trägerfrequenz und gleichzeitig das niederfrequente demodulierte Signal. (Produktdemodulation). Neben der automatischen Rauschunterdrückung und der automatischen Signalüberhöhung bewirkt also die Schaltung nach Figur 1d noch eine automatische Demodulation und führt damit wichtige Funktionen des Empfängers aus.

Figur le stellt ein Korrelationsmodul anderer Art dar, das sich ebenfalls durch hervorragende Störunterdrükkungseigenschaften auszeichnet. Speziell für Signale nach Art des Faltsignals 2j ist dieser Typ von Rauschunterdrückung bei synchronisierbarer Datenübertragung gut geeignet. Sie zeichnet sich ebenfalls aus durch eine Aufsplittung des Signals über eine Gabel in zwei Signalzweige, deren oberer in der Figur dargestellter eine Reihenschaltung eines positiven Dispersionsfilters 20, eines analogen Schalters 22 und eines negativen Dispersionsfilters 24 aufweist.

In dem in der Figur dargestellten unteren Zweig ist entsprechend die Reihenschaltung aus einem negativen Dispersionsfilter 21, einem Analogschalter 23 und einem positiven Dispersionsfilter 25 dargestellt. Die Signale beider Zweige werden über eine Differenzstufe 26 einem Ausgang zugeführt. Die Schaltung ist am besten verständlich, wenn man sich die in der Mitte gelegenen Schalter 22 und 23 als zunächst geschlossen vorstellt. Bei dieser Konfiguration darf am Ausgang der Schaltung, also hinter der Differenzstufe 26, kein Signal erscheinen, weil die in den beiden Zweigen jeweils revers zueinander wirkenden Dispersionsfilter 20 und 24 beziehungsweise 21 und 25 wegen ihrer zueinander gegenläufigen Charakteristik die frequenzabhängigen Verschiebungen, die das jeweils erste Filter bewirkt, im zweiten wieder aufgehoben werden. Demzufolge müssen sich Signal- und Rauschanteile, die auf die Verzweigung gegeben werden, bei geschlossenen Schaltern am Ausgang der beiden Zweige nach 24 und 25 durch die Differenzstufe 26 aufheben, so daß am Ausgang weder Rauschen noch Signal erscheinen kann.

Da aber am Ausgang der beiden revers zueinander wirkenden Dispersionsfilter 20 und 21 genau wie in den vorher beschriebenen Anordnungen, zum Beispiel nach Figur 1d, spiegelsymmetrische koinzidente kombinierte Signale erzeugt werden, die jeweils aus einer komprimierten und einer expandierten Komponente bestehen, kann der Schalter durch ein Schaltsignal über den Eingang 27 so betätigt werden, daß er beispielsweise während der kurzen Zeit der mittleren Dauer 8 des komprimierten Signals dieses durch Unterbrechung des Signalweges in beiden Zweigen quasi "herausschneidet" und so dem kombinierten Signal in beiden Zweigen die jeweils komprimierte Komponente entnimmt, derart, daß die Signale in beiden Zweigen ungleich werden und jeweils - zumindest näherungsweise - nur aus ihren expandierten Komponenten bestehen. Da aber die Faltsignale aufgrund ihrer zueinander reversen Chirpsignalkomponenten hinter dem ersten Paar der parallel geschalteten Dispersionsfilter 20 und 21 zueinander revers zur doppelten Dauer expandierte insbesondere Chirpsignale erzeugen, werden durch den Schalter diese gedehnten Komponenten kurzzeitig in deren zeitlicher Mitte unterbrochen, so daß am Ausgang der Schalter 22 und 23 auch jeweils zueinander reverse gedehnte Komponenten übrig bleiben, in deren Mitte ein vergleichsweise kurzes Stück durch die Unterbrechung ausgeschnitten wurde.

Da für diese gedehnten Anteile in beiden Zweigen die zeitliche Position der Frequenzanteile bestehen bleibt, werden diese beiden expandierten Signale in beiden Zweigen durch das zweite Dispersionsfilterpaar 24 und 25 wieder in die ursprüngliche Länge komprimiert. Demnach hebt das Dispersionsfilter 24 die Expansion, die durch das Dispersionsfilter 20 im oberen Zweig bewirkt wurde, auf. Gleiches geschieht durch das Dispersionsfilter 25 für die Verschiebung durch das Filter 21 im unteren Zweig.

Da die mittlere Dauer des komprimierten Impulses δ je nach zeitlichem Kompressionsfaktor ψ sehr viel kleiner ist als die doppelte Dauer des ursprünglichen Teilsignales Δt, ist der Fehler, der beim Ausschneiden des komprimierten Impulses für die jeweils expandierten Signalanteile entsteht, nur klein.

Am Ausgang der Dispersionsfilter 24 und 25 liegen also jetzt nach der Ausschneidetechnik zwei jeweils zueinander reverse insbesondere Chirpimpulse vor, die bei der Differenzbildung wegen der gegenläufigen Frequenzen nicht sich aufheben können, einfach weil es ungleiche Signale sind.

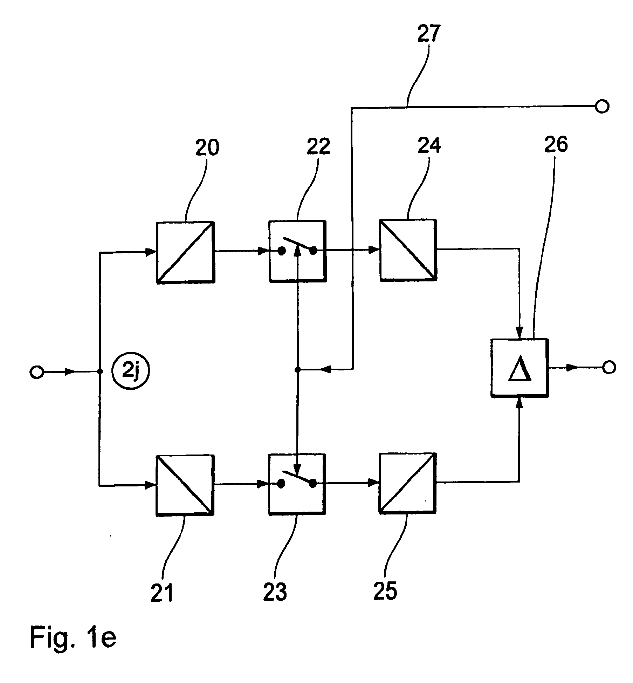

Diese Rauschreduktionseinheit nach Figur 1e ist in mehrfacher Hinsicht theoretisch und praktisch interessant, weil sich einfach nachweisen läßt, daß bei immer größer werdendem Verhältnis Δt/δ=ψ der Fehler, der durch die Ausschneidetechnik begangen wird, immer kleiner wird oder, was das gleiche besagt, die Rauschreduktion immer besser wird.

Für das Rauschen gilt also prinzipiell das gleiche wie für das Signal. In beiden Zweigen wird das Rauschen, das durch das Dispersionsfilter 20 entsprechend seiner spektralen Verteilung verschoben wird, durch das Dispersionsfilter 24, das revers zu 20 wirkt, bis auf den prozentual kleinen Mittelteil, der durch die Schalter unterbrochen wurde, rekombiniert. Gleiches gilt im unteren Zweig nach Figur 1e. Demnach wird das Rauschen in beiden Zweigen bis auf den ausgeschnittenen Anteil, der energetisch klein ist, im oberen und unteren Zweig gleich sein und sich durch die Differenzstufe 26 herausheben. Das heißt also, je nach zeitlichem

Kompressionsfaktor ψ erscheint am Ausgang dieser ersten Korrelationsanordnung nach Figur le wieder ein Teilsignal, dem in der Mitte wenige Schwingungsanteile fehlen und dessen Rauschanteile durch die Differenzbildung weitgehend unterdrückt werden.

Die solchermaßen im S/N-Verhältnis verbesserten Faltsignale können innerhalb der Schaltung weitergegeben werden und zusätzlich zum Beispiel durch eine Schaltung nach Figur 1d nochmals korrelativ bearbeitet werden, wobei weitere Rauschanteile eliminiert werden.

Hier zeigt sich ein Vorteil dieser ersten Korrelationsanordnungen. Da sie auf physikalisch unterschiedlichen Effekten bezüglich der Elimination der Störanteile beruhen, lassen sie sich unabhängig voneinander auch kombinieren. Ähnliche Ergebnisse lassen sich auch erzeugen, wenn man das kombinierte Signal bei der Ausschneidetechnik nicht für die Dauer des komprimierten Impulses unterbricht, sondern umgekehrt, nur für diese Dauer $\delta$ die Schalter schließt, also den komprimierten Impuls selektiert, der dann durch die Dispersionsfilter wieder in beiden Zweigen zur ursprünglichen Länge expandiert wird. Hierbei bleibt der nur kurzzeitige Rauschanteil, der auf $\delta$ entfällt, zwar erhalten, aber er wird durch die Dispersionsfilter wieder auf die ursprüngliche Dauer expandiert; sein Energieanteil ist jedoch sehr viel kleiner als ursprünglich für die Zeit $2\Delta t$.

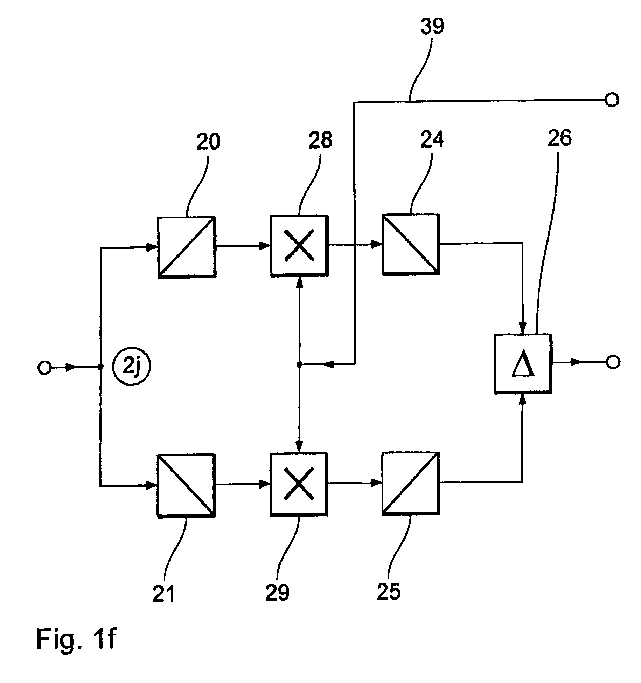

Figur 1f zeigt eine weitere Abwandlung der Schaltung nach Figur 1e. Hier sind lediglich die Schalter 22 und 23 in den Längszweigen durch Multiplikatoren 28 und 29 ersetzt. Da Schalter und Multiplikatoren ähnliche Wirkung erzielen können, ist es in der Schaltung nach 1f besonders vorteilhaft, das Ausschneiden nach Schaltung Figur 1e durch ein multiplikatives Unterdrücken nach Figur 1f zu ersetzen, weil dieses nach der Optimalfiltertheorie die geringste Verzerrung des gedehnten Impulses ermöglicht.

Da hier die prinzipielle Wirkungsweise dieselbe ist wie bei dem Ausführungsbeispiel gemäß Figur 1e, wird auf eine eingehendere Beschreibung verzichtet. Wichtig ist jedoch, daß die synchronisierten Multiplikationsimpulse, die auf der Leitung 39 den beiden Multiplikatoren parallel zugeführt werden, praktisch Signale mit der Amplitude "eins" sind, die synchron getaktet in der zeitlichen Mitte der Teilsignale der kombinierten Signale am Eingang der Multiplikatoren gemäß dem Verlauf einer Spaltfunktion (si-Funktion) zu Null geschaltet werden, derart, daß sie eine Umkehrung der normierten Hüllkurve des komprimierten Signalanteiles des kombinierten Signals während der Zeit $\delta$ darstellen. Hierdurch unterdrücken sie multiplikativ genau diesen komprimierten Anteil. Die Unterdrückungssignale also stellen nichts anderes dar als eine invertierte si-Funktion, die an "Null" geklemmt ist. Allerdings setzt diese Schaltung einen synchronen Betrieb voraus, der aber durchaus zur Demodulation einer Pulsfolge üblich ist.

Anhand der Figuren 1b bis 1f wurden korrelative Elemente dargestellt, die grundsätzlich unabhängig voneinander eingesetzt werden können, weil sie sich durch unterschiedliche physikalische Einwirkungen auf das kombinierte Signal auszeichnen.

Figur 3a zeigt eine solche Kombination der Korrelationsanordnungen nach Figur 1e und Figur 1d. Das von der Antenne 30 kommende trägerfrequente Faltsignal kann durch einen Vorverstärker 31 verstärkt und über einen Bandpaßfilter 32 von außerhalb der Empfangsbandbreite liegenden Störsignalen befreit werden. Das hochfrequente Faltsignal 2j wird dann in der Korrelationsanordnung 33, das identisch bei der Figur 1e beschrieben wurde, in seinem Signal/ Rauschverhältnis verbessert und darauf folgend durch die korrelative Stufe, wie sie in Figur 1d beschrieben wurde, von weiteren Rauschanteilen befreit und gleichzeitig durch multiplikative Demodulation 36 in das NF-Signal zurückverwandelt werden.

In der Baugruppe 37 ist ein Tiefpaß zur Ausfilterung der niederfrequenten Signalanteile vorgesehen. Ferner kann über eine Schwelle das Signal diskriminiert und in seiner Pulslänge geformt werden. Außerdem befinden sich in der Baugruppe 38 Synchronisationsstufen, die Schaltimpulse für die Schalter 22 und 23 derart generieren, daß ihre zeitliche Position in der Mitte der kombinierten Signale - bezogen auf den Ausgang des Dispersionsfilters 20 bzw. 21 - gelegen ist. Die Dauer des Schaltimpulses ist vorteilhafterweise etwas geringer als die mittlere Pulsdauer $\delta$ des komprimierten Signals. Eine der Baugruppe 37 nachgeschaltete Detektorstufe 63 gibt ein Ausgangssignal ab, wenn ihr Eingangssignal mindestens einen vorgegebenen, den der verbleibenden Störsignale oder deren sich in dieser Stufe auswirkenden Anteil übertreffenden, Schwellen- oder Energiepegel erreicht. Diese Detektorstufe ist als an die erfindungsgemäße Schaltung in der Weise besonders angepaßt, als sie - entsprechend der erreichten Störunterdrückung - auf die durch mögliche trotz Unterdrückung verbleibende anteilige Störimpulse hervorgerufene Ausgangssignale gerade nicht anspricht. Dies kann durch Ausnutzung einer korrelativen Eigenschaft in Verbindung mit einer anderen weiter unten dargestellten Schaltung erfolgen oder durch Vergleich mit einer festen Vergleichsgröße (Schwelle nach einem Amplituden-oder Energiekriterium eingestellt, welches nicht von einer Störung herbeigeführt sein kann). Desweiteren kann die Detektion zulässiger Signale auch durch Vergleich des Ausgangssignals mit einer komplexeren Signalform oder einem Signalmuster erfolgen. Ein Beispiel hierfür sind bekannte Verfahren zur Fehlererkennung mittels eines Prüfbits oder anderer mathematischer Verfahren zur Fehlererkennung.

Neben den relativen, (d.h. korrelativen) und - im Falle der sequentiellen (Auto-)Korrelation - repetitiven (also periodischen) Korrelationskriterien kann so zusätzlich auch noch ein absolutes Detektionskriterium verwendet werden, welches aufgrund einer festliegenden Eigenschaft die Zugehörigkeit des empfangenen Nutzsignals zu einem erwarteten Nutzsignal feststellt. Dazu gehört - wie erwähnt - die Überschreitung eines einen zu erwartenden restlichen Störpegel überschreitende Amplitude oder Leistung bzw. das Erreichen einer Mindestähnlichkeit mit einem im Empfänger gehaltenen Mustersignal.

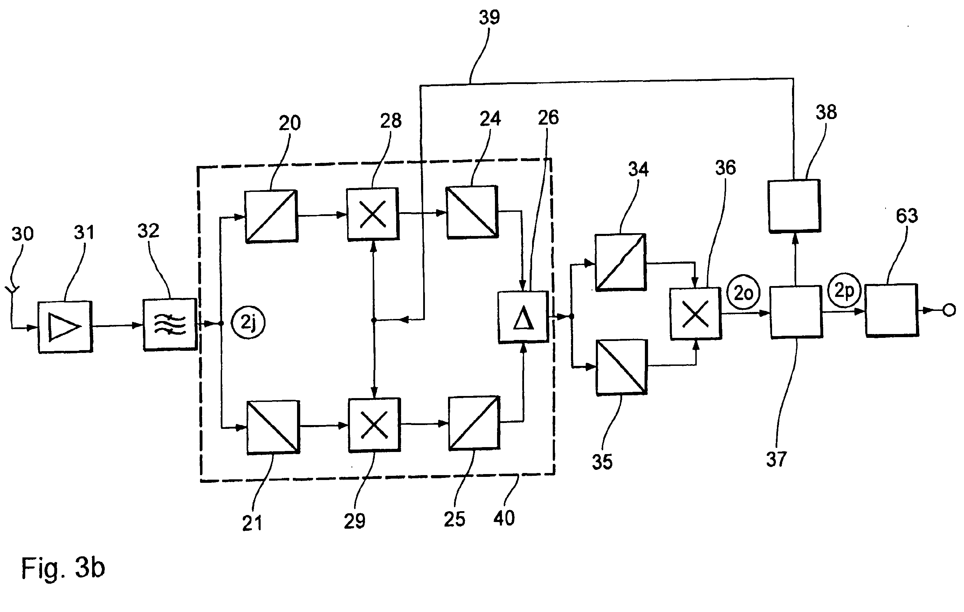

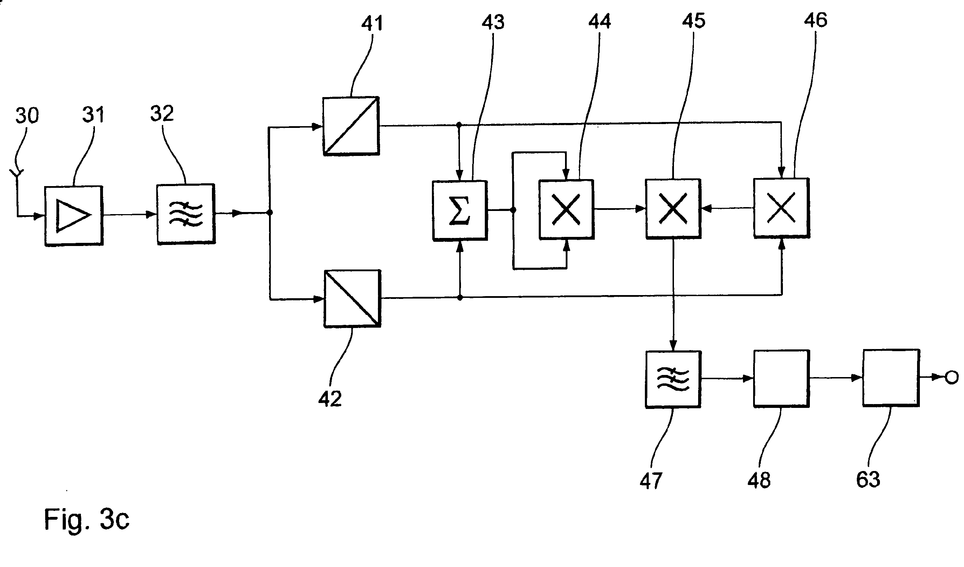

Diese Detektorschaltung ist entsprechend auch in den Ausführungsbeispielen gemäß den Figuren 3b und c sowie den weiteren Ausführungsbeispielen vorgesehen und stellt eine weitere Verbesserung der Übertragungsqualität sicher.

Das Ausführungsbeispiel gemäß Figur 3b ist funktionell grundsätzlich übereinstimmend mit dem gemäß Figur 3a ausgestaltet, sieht aber statt der Schalter 22 und 23 Multiplikatoren 28 und 29 vor, wobei über die Leitung 39 den Multiplikatoren, wie bei der Schaltung nach Figur 1f beschrieben, invertierte und zu "Null" geklemmte Spaltimpulse zugeführt werden. Die Form solcher Impulse kann je nach zu erwartendem Störsignal optimiert werden.

Figur 3c zeigt ein Ausführungsbeispiel einer Empfängerschaltung in der zwei der Korrelationsanordnungen nach Figur 1b und nach Figur 1d verwendet werden. Die Schaltung funktioniert wie folgt: Das trägerfrequente Signal an der Antenne 30 wird über einen Vorverstärker 31 und einen nachfolgenden Bandpaß für die Trägerfrequenzbandbreite geleitet. Am Ausgang dieses Bandpasses wird das Faltsignal verzweigt und wie bekannt über die zwei parallel geschalteten, revers zueinander wirkenden Dispersionsfilter 41, 42 geführt. Die Ausgänge der beiden Dispersionsfilter werden einmal auf eine Summierstufe 43 und parallel hierzu auf eine Multiplikationsstufe 46 geleitet, wobei die Additionsstufe so wirkt wie für Figur 1b und die Multiplikationsstufe so wie für Figur 1d beschrieben. Am Ausgang der Summierstufe 43 erscheint also ein Signal, dessen S/N-Verhältnis durch additive Korrelation verbessert ist.

Das Signal liegt im trägerfrequenten Bereich und wird auf die Quadrierstufe, die aus einem Multiplikator 44 besteht, gegeben, um an seinem Ausgang ein Signal zu erhalten, das in einem Trägerfrequenzbereich liegt, wobei dessen Mittenfrequenz der doppelten Trägerfrequenz des ursprünglichen Faltsignales entspricht.

Gleichzeitig entsteht am Ausgang der Quadrierstufe nicht nur ein Signal mit doppelter Trägerfrequenz, sondern auch das niederfrequente Signal durch die quadratische Mischung. Der Ausgang des Multiplikators 46, der als korrelativer Multiplikator wirkt, enthält ebenfalls das trägerfrequente Signal mit doppelter Trägerfrequenz und gleichfalls das N/F-Signal. Multipliziert man diese beiden Ausgänge, den Ausgang des Multiplikators 46 mit dem Ausgang der Quadrierstufe 44 wiederum miteinander über die Multiplikationsstufe 45, werden die koinzidenten Signale im HF- und NF-Bereich wiederum korrelierend, also rauschunterdrückend multipliziert, da der Ausgang des Multiplikators 46 auch das quadrierte NF-Signal enthält, kann über einen Tiefpaß 47 und eine Pulsformerstufe 48 das ursprüngliche niederfrequente Signal, als beispielsweise binäre Pulsfolge oder auch als PPM-Folge, je nach verwendeter Grundmodulationsart entnommen werden.

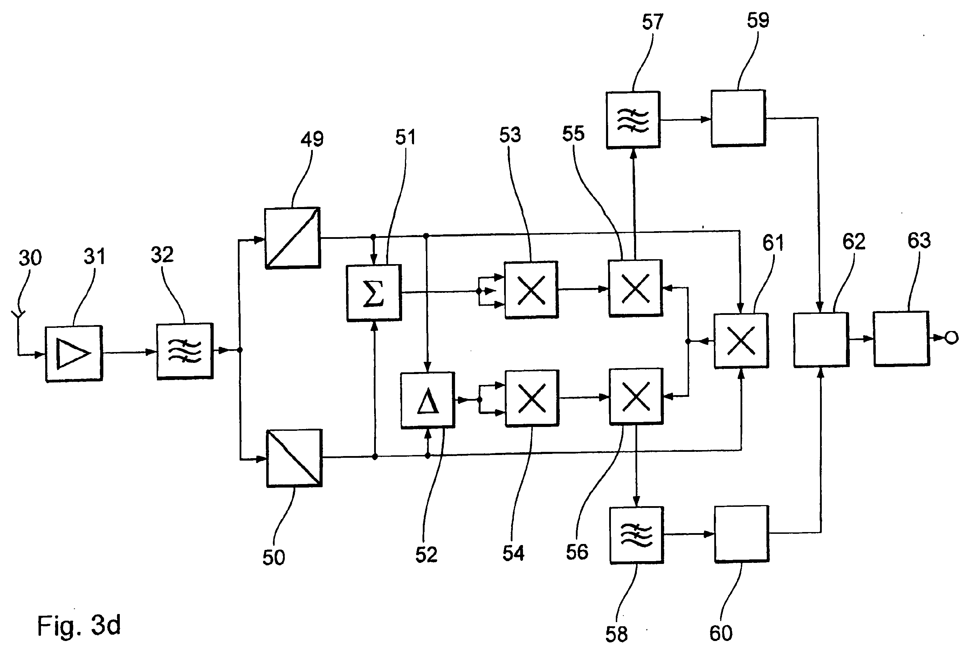

Figur 3d stellt eine Erweiterung einer Schaltung mit den in der Schaltung gemäß Figur 3c verwendeten Prinzipien insofern dar, als hier die Schaltung nach Figur 3c noch um eine differenzbildende Stufe 52 mit nachfolgender Quadrierstufe 54 und Multiplikator 56, Tiefpaß 58 und Pulsformerstufe 60 analog zu Figur 3c erweitert wurde. In Figur 3d also wird nicht nur die Summe der kombinierten Signale aus den Dispersionsfiltern 49 und 50 über die Summenstufe 51 genommen, sondern parallel hierzu die Differenz der kombinierten Signale über die Differenzstufe 52 und beide Signale, das aus der Summier- und das aus der Differenzstufe stammende, werden mehrfach multiplikativ analog zu den nach Figur 3c dargestellten Prinzipien demoduliert. Insofern stellt die Schaltung nach Figur 3d eine Möglichkeit dar, die Summen- und Differenzsignale, wie sie nach Figur 1a im Sender erzeugt wurden, im Empfänger nach Figur 1a getrennt zu demodulieren.

Um das Verständnis für die hier dargestellten vielfachen Möglichkeiten zu erleichtern, werden nachfolgend nochmals zusammenfassend die Grundgedanken und Möglichkeiten erläutert:

Die hier beispielhaft gemäß Figur 1a eine Sender- und gemäß Figuren 3a bis d Empfängerschaltungen bildenden Blockschaltungen sind aufgrund der generellen Aufgabenstellung nur prinzipieller Natur und zeigen als Beispiel, wie die unterschiedlichen Korrelationsanordnungen gemäß Figur 1b, 1c, 1d, 1e und 1f als Bausteine zur Rauschabstandsverbesserung im Empfänger benutzt werden können und sie zeigen, wie bei der analogen Teilsignalverarbeitung zwei parallel geschaltete zueinander inverse Dispersionsfilter mit anschließenden korrelativen Summen-, Differenz-, Multiplizier- und Quadrierstufen für die spiegelsymmetrischen kombinierten Signale zur Rauschunterdrückung oder iterativen Rauschunterdrückung in verschiedensten Schaltungen zu mehr oder weniger aufwendigen Blöcken zusammengestellt werden können. Sie bieten also als Bausteine eine Fülle von Möglichkeiten, Erste Korrelationsanordnungen mit wenig Aufwand, also kostengünstig, oder mit mehr Aufwand, dann aber auch effizienter, zur S/N-Verbesserung im analogen Teil eines Empfängers anwenden zu können. Bei den Korrelationsanordnungen nach Figur 1e oder Figur 1f mit in den Längszweigen befindlichen Schaltern oder Multiplikatoren, die beide auf der Zeitachse bei synchronisierbarem Betrieb arbeiten, läßt sich je nach Kompressionsfaktor eine erhebliche Störsignalunterdrückung erzielen. Die dargestellten Korrelationsanordnungen lassen sich einzeln oder zu mehreren in die nachfolgend dargestellten Sende- bzw. Empfangsschaltungen einbeziehen.

Das verfahrens- und fertigungstechnisch Besondere bei den dargestellten Schaltungsbaugruppen ist, daß bei der Verwendung von dispersiven Filtern in Form von Verzögerungsleitungen mit frequenzabhängiger Gruppenlaufzeit sich auf einem Substrat mehrere derartige Elemente als Multidispersionsfilter anordnen lassen. Durch entsprechende Anschlüsse lassen sich universell verwendbare Dispersionsfiltermodule bilden, bei denen man - je nach Applikation und Kombination - spezielle Erste Korrelationsanordnungen auf Silicon-Chips integrieren oder mit diesen zusammenschalten kann, auf denen sich dann zum Beispiel auch Multiplikatoren oder Schalter befinden.

Die die Faltimpulse bildenden Teilsignale bieten also durch ihre speziellen mehrfachkorrelierbaren Eigenschaften durch symmetrische Systemstrategien preiswerte und effektvolle Möglichkeiten zur Entwicklung moderner Übertragungssysteme, die sich durch eine erhebliche Verbesserung des Signal/Rauschverhältnisses auszeichnen und die damit einen energiesparenden, sicheren Kommunikationsbetrieb zur Nachrichtenübertragung ermöglichen, und die außerdem dazu dienen können, die Belastung für den Menschen herabzusetzen.

Bei den nachfolgend dargestellten Ausführungsbeispielen wird zusätzlich zu den üblichen Bauelementebezeichnungen ein mit einem "X" versehener Block als Kennzeichnung für einen Vier-Quadranten-Multiplizierer verwendet.

Ein mathematisches "Wurzel"-Zeichen wird zur Kennzeichnung eines Begrenzers mit Quadratwurzelfunktion benutzt.

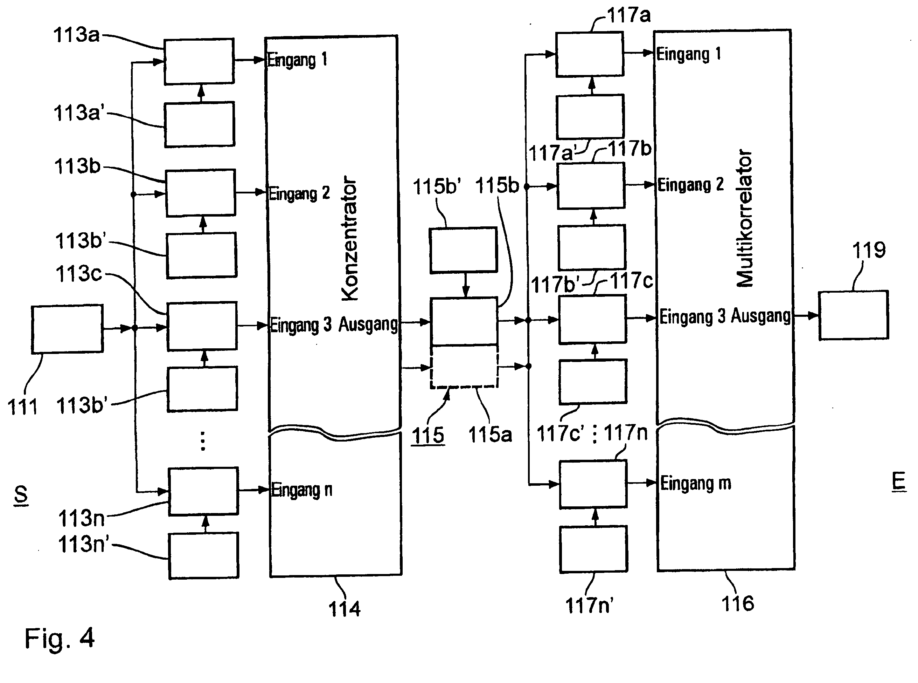

Die Aufgabe, das Signal/Rauschverhältnis trotz eines längeren Übertragungsweges im Empfänger zu verbessern, wird erfindungsgemäß dadurch gelöst, daß eine sogenannte "mehrdimensionale Modulation" d.h. eine Übertragung mit mehreren voneinander unabhängigen Modulationen vorgenommen wird. Auch bei dem Ausführungsbeispiel gemäß Figur 4 zeigt sich dieses Prinzip:

Das in Figur 4 dargestellte System enthält - in Form der Nachrichtenquelle 111 - einen ersten Kodierer 113a als Modulatorelement für eine erste Modulationsart (Modulation 1) einen zweiten Kodierer 113b für eine zweite Modulationsart (Modulation 2), einen dritter Kodierer 113c für eine dritte Modulationsart (Modulation 3), bis hin zu einem n-ten Kodierer 113n für eine n-te Modulationsart. Jeder Kodierer 113a .. 113n kodiert ein und dasselbe Nachrichtensignal gemäß der ihm zugehörigen Modulation 1, 2, ... n. Der Begriff "Nachrichtensignal" umfaßt hier einerseits ein Analogsignal, also ein sich kontinuierlich änderndes Signal, andererseits ein Digitalsignal, beispielsweise in Form eines Einzelimpulses aus einem Impulszug. Der Begriff "Kodierer für Modulation 1" bezeichnet einen Modulator, der entsprechend einem vorbestimmten funktionalen Zusammenhang in Abhängigkeit von der vorliegenden Zeitfunktion des Eingangssigals eine Amplituden-/Frequenz-Zuordnung vornimmt. Gemäß einer Ausführungsform ist der erste Kodierer 113a zum Beispiel ein Amplitudenmodulator, der das Nachrichtensignal aus der Nachrichtenquelle einer Amplitudenmodulation unterzieht. Der zweite Kodierer 113b kann dasselbe Nachrichtensignal zum Beispiel einer Phasen- oder Frequenzmodulation unterziehen. Der Begriff "Nachrichtensignal" bedeutet hier auch jede Behandlung eines einen Anteil des Nachrichtensignals in einer späteren Verarbeitungsstufe aufweisenden Signals, so daß zusätzlich auch Modulationsstufen vorgesehen sein können, welche das Nachrichtensignal insgesamt erfassen. Die weiteren in Figur 4 dargestellten Kodierer können wiederum dasselbe Nachrichtensignal einer noch anderen Modulation oder Kodierung unterziehen. Es ist dabei zu bemerken, daß die Anordnung der hier als "Kodierer" bezeichneten Modulatorelemente nicht auf die dargestellte parallele Anordnung, die hier aus Gründen der Übersicht erfolgte, beschränkt ist. Diese Kodierer können seriell nacheinander in der Weise angeordnet sein, daß ein bereits moduliertes Signal erneut einer Codierung unterzogen wird. Ein Beispiel dafür können pulsartige Signale sein, welche als solche dann der dargestellten Modulation mit mehreren Konventionen unterzogen werden. Die schematische Anordnung nach Figur 4 ist daher insgesamt auch als Kodiernetzwerk zu verstehen, bei dem Schaltungsteile kaskadiert sind. Insgesamt besteht eine große Variabilität beim Zusammenschalten der vor- und nachstehend dargestellten Schaltungsteile. Dies gilt insbesondere für die Schaltungen auf der Empfängerseite, welche zur Störherabsetzung nach dem dargestellten Konzept der mehrdimensionalen Dekodierung nahezu beliebig kaskadiert werden können.

Die von den einzelnen Kodierern 113a, 113b, ... 113n ausgegebenen kodierten Signale werden auf jeweils einen zugehörigen Eingang 1, Eingang 2 eines Konzentrators 114 gegeben. Bei diesem Konzentrator kann es sich zum Beispiel um einen Summierer, einen Subtrahierer, einen Multiplizierer oder ein anderes Bauelement handeln, welches die einzelnen Ausgangssignale der Kodierer verknüpft, damit dann das so verknüpfte Signal auf die Übertragungsstrecke 115 abgegeben wird. In einem Sonderfall, nämlich bei einer aus mehreren Zweigen 115a und 115b bestehenden übertragungsstrecke 115, können auch separate kodierte Nachrichtensignale von einzelnen Kodierern über separate Zweige dieser Übertragungsstrecke 115 geführt werden.

Am Ende der Übertragungsstrecke 115 erfolgt eine Auftrennung der empfangenen Signale durch eine Reihe von Dekodierern 117a bis n. Dabei dekodiert jeder einzelne Dekodierer das empfangene Signal entsprechend der ihm zugewiesenen Modulationsart, also im vorliegenden Fall gemäß der Modulation 1, gemäß der Modulation 2 etc. Am Ausgang der einzelnen Dekodierer 117a bis n erscheinen dann die dekodierten Signale oder demodulierten Signale, und diese einzelnen dekodierten Signale werden auf einen Eingang 1, einen Eingang 2 eines Mehrfachkorrelators 116 gegeben. Der Mehrfachkorrelator 116 korreliert die verschiedenen dekodierten Signale, um das ursprüngliche Nachrichtensignal wiederzugewinnen, welches dann in die Nachrichtensenke 119 ausgegeben wird.

Das Korrelieren der einzelnen dekodierten Signale in dem Mehrfachkorrelator 116 besteht im einfachsten Fall aus einem Signalvergleich, einer Multiplikation, einer Summenbildung oder dergleichen. Wesentlich bei diesem Schritt ist die Nutzung des Umstandes, daß durch die Korrelation die Nutzsignale gegenüber den Störsignalen hervorgehoben werden. Da die Nutzsignale voraussetzungsgemäß korreliert sind, werden sie im Empfänger E durch die Korrelation verstärkt, während die nicht oder nur geringfügig korrelierten Störsignale (Rauschen) durch die Korrelation abgeschwächt werden.

Während es sich bei dem Konzentrator 114 um ein verhältnismäßig einfaches Bauelement handelt, bei dem gegebenenfalls schon die Zusammenführung von unterschiedlich modulierten Signalanteilen nach Art eines Schaltungsknotens genügen kann, ist der dargestellte Multikorrelator in der Regel recht komplex. Nach dem Prinzip der mehrdimensionalen Korrelation lassen sich die Dekodierer nahezu beliebig kaskadieren. Die Ausgangssignale von zunächst die Grundkonventionen (Modulationsverfahren) der Senderseite invertierenden Dekodier-(Demodulations-)elemente lassen sich ergänzen durch weitere Demodulationselemente, welche die verwendeten Modulationsverfahren kombinieren. Durch die gleichzeitige korrelative Überhöhung des wiedererlangten Nutzsignals oder von dessen Anteilen erfolgt eine starke Herabsetzung von Störanteilen.

Es wird also die Information der Nachrichtenquelle über mehrere Kodierer - hier allgemein dargestellt zunächst durch n Kodierer - kodifiziert, wobei durch diese Kodierer, die technisch unterschiedlich ausgeführt sein können, gemäß unterschiedlichen Vorschriften, also entsprechend n Modulationen, dem Signalträger die Nachricht aufmoduliert wird.

Dementsprechend entstehen für eine Nachricht auf der Senderseite n Signale, die im hier sogenannten "Konzentrator" zusammengefaßt werden, um alle unterschiedlichen Signale gemeinsam über den Kanal übertragen zu können.

Kommen nun zu dem übertragenen Gesamtsignal Rauschen und andere Störer auf dem Übertragungsweg hinzu, stehen am Ende des Übertragungskanales die mehrfach kodierte Nachricht, die Störsignale und das Rauschen am Eingang des Empfängers zur Verfügung.

Entsprechend der n-mal kodifizierten Nachricht enthält der Empfänger eine entsprechende Zahl von m Dekodierern, bei denen jeder der Dekodierer die Nachricht gemäß der ihm zugeordneten Modulation dekodiert oder demoduliert. Dementsprechend müssen beim Empfänger die entsprechenden n Modulationen einzeln bekannt sein und entsprechende Vorrichtungen in Hard- oder Software dafür vorgesehen werden.

Diese m Dekodierer haben mindestens m entsprechende Ausgänge, da die einzelnen Ausgänge auch untereinander verknüpft werden können. Diese m Ausgänge zeichnen sich grundsätzlich dadurch aus, daß ihnen allen die ursprüngliche Nachricht gemeinsam ist. Jedoch - und das ist das Entscheidende - sind die an den Ausgängen der Dekodierer erscheinenden Stör- und Rauschsignale weitgehend unkorreliert oder anders korreliert als die Signale.

Dieser Umstand läßt sich auch anders beschreiben: Danach sind die Nachrichtensignale an den Ausgängen der unterschiedlichen Dekodierer in hohem Maße korreliert, die Störsignale jedoch vergleichsweise gering korreliert. Der einfache Grund hierfür liegt in dem Umstand, daß die Stör- und Rauschsignale den einzelnen Modulationen der Dekodierer nicht im gleichen Umfang wie die Nachrichtensignale entsprechen können. Das erfindungsgemäße Übertragungsverfahren macht sich genau diesen Umstand zunutze.

Je nach Modulation können zum Beispiel die Nutzsignale an den m Ausgängen alle koinzident erscheinen, also auf der Zeitachse eine gemeinsame Vorzugsposition einnehmen. Rauschen und Störsignale werden durch die unterschiedlichen Dekodierer jedoch zeitlich unterschiedlich verteilt.

Da gaußsches Rauschen statistisch den allgemeinsten Störer darstellt, sei das Verhalten einer solchen Übertragungsstrecke anhand des thermischen Rauschens zunächst sehr allgemein erklärt.

Zum Beispiel sei gemäß Modulation 1 ein nadelförmiges Signal amplitudenmoduliert worden, dann wird am Ausgang des Dekodierers für Modulation 1 eine kurzzeitige Spannungsüberhöhung am Ausgang des Amplitudendemodulatorelements erscheinen.

Wurde das Nutzsignal gemäß Modulation 2 frequenzmoduliert, im gleichen Frequenzband wie das amplitudenmodulierte Signal nach Modulation 1, dann wird der Dekodierer für Modulation 2 dieses frequenzmodulierte Signal ebenfalls demodulieren. Sofern die Gesamtanordnung so konfiguriert ist, daß am Ausgang des Dekodierers für Modulation 2 das Nutzsignal koinzident mit dem Nutzsignal am Ausgang des Dekodierers für Modulation 1 erscheint, kann man zum Beispiel die beiden Signale am Ausgang des Dekodierers für Modulation 1 und am Ausgang des Dekodierers für Modulation 2 addieren oder multiplizieren oder korrelieren.

Demzufolge wird die Summe der beiden Nutzsignale, normieren wir sie in der Amplitude jeweils mit dem Wert 1, in Summe den Wert 2 ergeben. Das gilt jedoch nicht für das thermische Rauschen. Hier addieren sich unter der Voraussetzung, daß sie vollständig unkorreliert sind, nur die Leistungen.

Dieser Gedanke läßt sich auf n solcher unterschiedlichen Kodifikationen ausdehnen. Das Beispiel der Summation der korrelierten Signale und des annähernd unkorrelierten Rauschens ist jedoch nur der einfachste Weg einer hier als Multikorrelator bezeichneten Anordnung, die sinnvoller- und vorteilhafterweise sehr viel komplexer und wirkungsvoller gestaltet werden kann.

Der Multikorrelator ist dabei also so aufgebaut, daß er als Anordnung von korrelativen Elementen und Autokorrelatorelementen verstanden werden kann, um die unterschiedlichen Störsignale von den gleichartigen Nutzsignalen unterscheiden zu können. Grundsätzlich bedeutet dies, die Korrelationsmatrix zu optimieren. Am Ausgang des Multikorrelators steht dann ein Nutzsignal zur Verfügung, bei dem die Störsignale weitgehend unterdrückt sind.

Diese Störsignalunterdrückung ist um so effizienter, je mehr möglichst voneinander unabhängige Modulationen benutzt wurden, je unabhängiger diese voneinander sind und je komplexer der Multikorrelator aufgebaut wird. Das ist durch analoge Schaltungen besonders wirkungsvoll, aber auch durch digitale Schaltungen möglich.

Wie gezeigt wird, lassen sich durch schaltungstechnische Maßnahmen korrelierende Anordnungen schaffen, die die Korrelation auf der Zeit- und/oder Frequenzachse nutzen, um das Nutzsignal gegenüber den Störsignalen zu bevorteilen und auf diese Weise eine erhebliche Verbesserung des Signals zu Rauschverhältnisses möglich machen. Die Mehrfachkonventionen werden dabei insbesondere so gewählt, daß mit der Kombination der Konventionen keine oder keine wesentliche Erhöhung der Kanalkapazität bei der Dimensionierung eines Netzwerkes verbunden ist, damit die Reduktion des Rauschens nicht mit einer für die Übertragung der Nachricht nicht erforderlichen Erhöhung der Kanalkapazität erkauft wird.

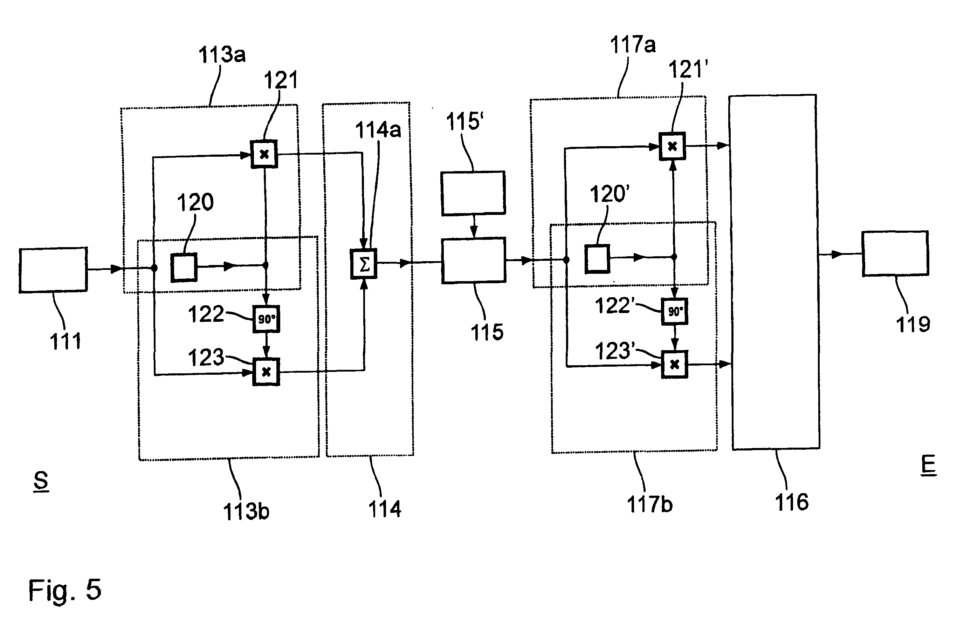

Daß dies möglich ist, wird am folgenden, in Figur 5 näher dargestellten, Ausführungsbeispiel erläutert. Dort ist eine senderseitige Anordnung gezeigt, bei der nicht wie sonst üblich die IQ-Modulation mit zwei um 90° versetzten Trägern dazu genutzt wird, um zwei Informationen zu übertragen, sondern gemäß des oben beschriebenen Prinzips eine einzige Nachricht zweimal moduliert wird, um sie anschließend zu summieren und zu übertragen. Beim Empfänger kann dann die Nachricht wiederum nach der gleichen Vorschrift über den Dekodierer (Demodulatorelement) für die Modulation 1 multiplikativ demoduliert werden und über den Dekodierer für Modulation 2 ein zweites Mal - genau wie beim Sender - mit einem gegenüber dem ersten rekonstruierten Träger um 90° versetzten Träger demoduliert werden. Da das Nutzsignal jetzt zweimal auf zwei Pfaden koinzident vorhanden ist, die jeweiligen Rauschanteile auf den beiden Zweigen jedoch nicht in diesem Umfang korreliert sind, ist es zum Beispiel möglich, die beiden Ausgangssignale des Dekodierers für die Modulation 1 und des Dekodierers für die Modulation 2 miteinander zu multiplizieren, aufgrund der Koinzidenz des Signals wird im Korrelator der Signal zu Rauschabstand sich verbessern. Die Störanteile in den beiden Zweigen sind zueinander weniger korreliert, da sie als Produkte mit zwei unterschiedlichen Phasen des gleichen Trägers vorliegen. Wichtig ist, daß bei diesem Beispiel die Kanalkapazität des Übertragungskanales nicht größer sein muß, da die Summe der um 90° versetzten Träger die gleiche Bandbreite einnehmen kann wie ein einfacher Träger. Dies ist damit ein einfaches Beispiel, wie zwei Modulationen zur Übertragung einer Nachricht genutzt werden können, um eine Rauschreduktion zu erwirken.

Figur 5 zeigt das Blockschaltbild dieser Ausführungsform des erfindungsgemäßen Systems zum Übertragen eines Nachrichtensignals im Detail. In der Figur sind ebenso wie in den weiteren Figuren gleiche und ähnliche Komponenten, die auch in anderen Figuren dargestellt sind, mit übereinstimmenden Bezugzeichen versehen.

Ein Oszillator 120 liefert ein Trägersignal mit einer vorbestimmten Frequenz. Das Trägersignal wird mit dem Nachrichtensignal in einen Multiplizierer 121 multipliziert. Das Ausgangssignal des Multiplizierers 121 gelangt an einen Eingang des Konzentrators 114, hier ausgebildet in Form eines Summierers 114a. Das Ausgangssignal des Oszillators 120 gelangt außerdem über einen 90°-Phasenschieber 122 an einen weiteren Multiplizierer 123. Der Phasenschieber 122 und der Multiplizierer 123 bilden den Kodierer 113b. Das Ausgangssignal des Multiplizierers 123 wird von dem Summierglied 114a mit dem Ausgangssignal des Multiplizierers 121 summiert und auf die Übertragungsstrecke 115 gegeben.

Rechts in Figur 4 erkennt man, daß der Empfänger E einen Dekodierer 117a und einen Dekodierer 117b für die Konventionen 1 und 2 aufweist, die einen korrespondierenden Aufbau besitzen wie die Kodierer auf der Seite des Senders 5. Die Komponenten in den Dekodierern 117a und 117b tragen entsprechende, gestrichene Bezugszeichen 120' bis 123'.

Das in Figur 5 gezeigte System hat Ähnlichkeit mit einem konventionellen Übertragungssystem, welches mit IQ-Modulation arbeitet, wobei allerdings hier erfindungsgemäß die beiden um 90° versetzten Träger nicht dazu verwendet werden, zwei verschiedene Nachrichten zu modulieren, sondern dazu dienen, ein und dieselbe Nachricht zu kodieren.

Am Ausgang der Demodulatoren 117a und 117b steht nun zweimal das Nachrichtensignal zur Verfügung, und zwar zeitlich koinzident. Diesen durch zeitliche Koinzidenz korrelierbaren Nutzsignalen stehen die nicht oder weniger korrelierten Rauschsignale gegenüber. Bei der Korrelation, zum Beispiel Multiplikation oder Addition im Korrelator 116 werden also die korrelierten Nutzsignale gegenüber den nicht oder wenig korrelierten Störsignalen hervorgehoben. Die vornehmlich auf der Übertragungsstrecke additiv zu dem übertragenen Nachrichtensignal hinzukommenden Störanteile können diesen Phasenbezug nicht aufweisen.

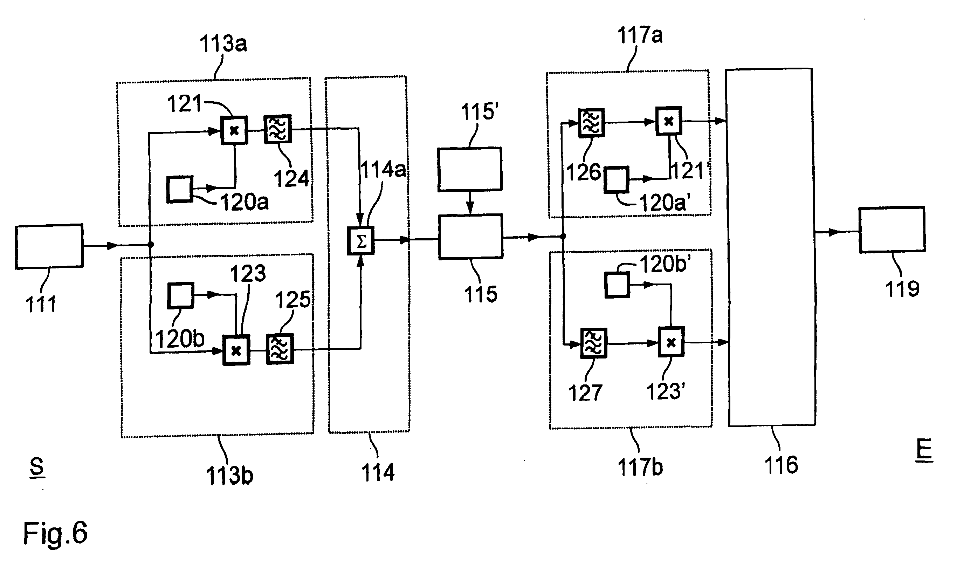

Figur 6 zeigt ein Blockschaltbild einer weiteren Ausführungsform der Erfindung. Die Ausführungsform nach Figur 6 ist der Ausführungsform nach Figur 5 ähnlich, nur daß statt der IQ-Modulation gemäß Figur 5 eine Modulation des aus der Nachrichtenquelle 111 kommenden Nachrichtensignals mit zwei unterschiedlichen Trägersignalen erfolgt. In dem ersten Kodierer 113a wird das Nachrichtensignal in einem Multiplizierer 121 mit einem Trägersignal einer ersten Frequenz multipliziert, welches von einem Oszillator 120a geliefert wird, ein Bandpaß 124 filtert das Ausgangssignal des Multiplizierers 121 und gibt es auf einen Eingang des hier als Summierglied 114a ausgebildeten Konzentrators 114.

In dem zweiten Kodierer 113b liefert ein Oszillator 120b ein Trägersignal mit einer anderen Frequenz als der Oszillator 120a des ersten Kodierers. Das Ausgangssignal eines Bandpaßfilters 125 wird auf einen zweiten Eingang des Summierglieds 114a gegeben.

In dem Empfänger E rechts in der Figur erfolgt das Dekodieren der empfangenen, gemäß den Konventionen 1 und 2 kodierten Nachrichtensignale in parallelen Zweigen mit Hilfe eines ersten Dekodierers 117a und eines zweiten Dekodierers 117b. Zwei Oszillatoren 120a' und 120b' setzen den von Bandpaßfiltern 126 und 127 gefilterten Signalen in den betreffenden Frequenzbändern wieder den ursprünglichen Träger gemäß der zugehörigen Konvention zu. Da die Rauschanteile in den beiden Frequenzbändern unterschiedlich sind, sind sie nicht oder nur schwach korreliert.

Figur 6 zeigt damit ein weiteres einfaches Beispiel, bei dem eine höhere Kanalkapazität genutzt wird, um die Rauschreduktion zu bewirken. Da die Rauschanteile in beiden Frequenzbändern unterschiedlich sind, sind sie wiederum unkorreliert.

Die Beispiele nach den Figuren 5 und 6 - wie auch die Kombination mit einem der in den Figuren 1 bis 3 dargestellten Ausführungsbeispiele zeigen, daß das erfindungsgemäße Prinzip grundsätzlich in vielen Variationen einsetzbar ist, daß es aber darauf ankommt, die mehrdimensionale Modulation von Nachrichten so zu gestalten, daß entsprechend der Applikation eine möglichst effiziente Ausnutzung der Kanalkapazität erfolgt. Die letztgenannten Beispiele zeigen ferner, wie jeweils zwei unterschiedliche Modulationen genutzt werden können, um eine Verbesserung des Signal-/Rauschverhältnis zu bewirken.

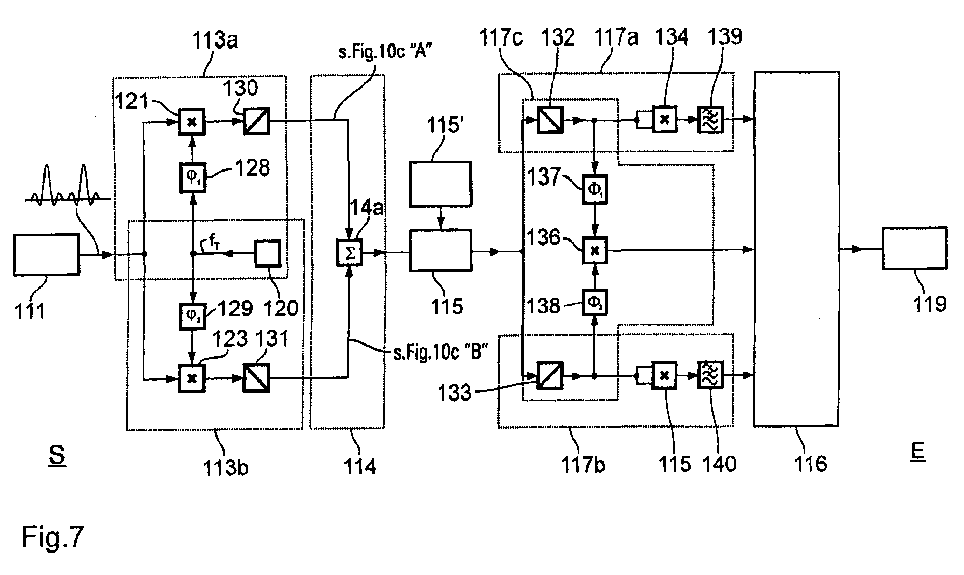

Figur 7 zeigt ein Blockschaltbild einer weiteren Ausführungsform der Erfindung. Grundsätzlich ist das erfindungsgemäße Verfahren anwendbar auf beliebige Nachrichten zur technischen Nachrichtenübertragung, also anwendbar sowohl auf analoge als auch auf digitale Nachrichtensignale. Das in dieser Figur dargestellte System eignet sich besonders zur Übertragung einzelner, jeweils in Form von digitalen Signalbits vorliegender digitaler Nachrichtensignale. Die Übertragung erfolgt mit Hilfe einer ersten und einer zweiten Konvention, gemäß denen das Nachrichtensignal von der Nachrichtenquelle 111 kodiert (moduliert) wird.

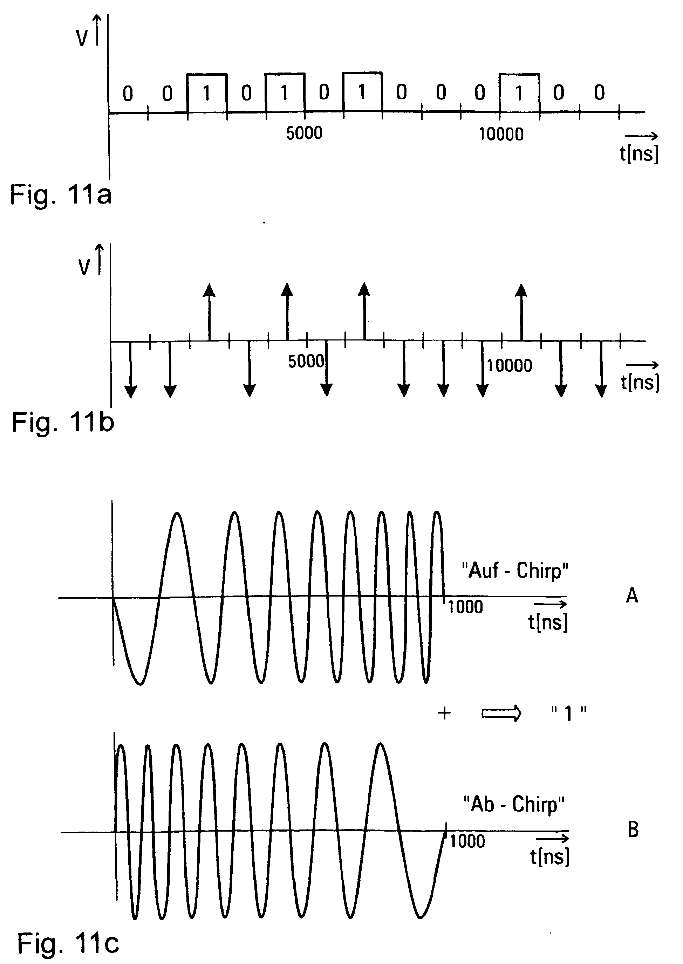

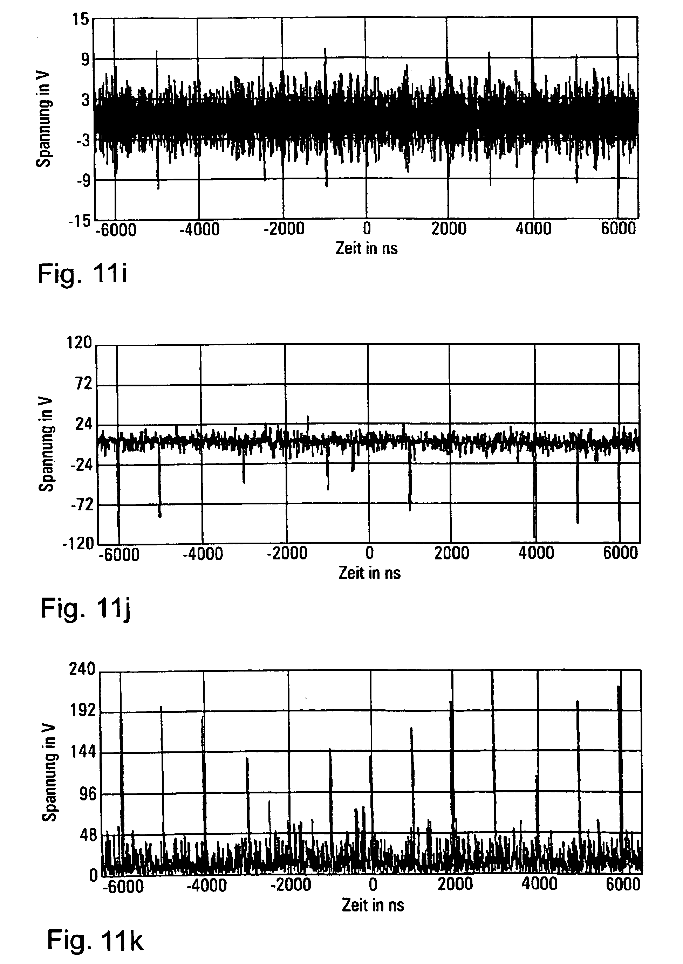

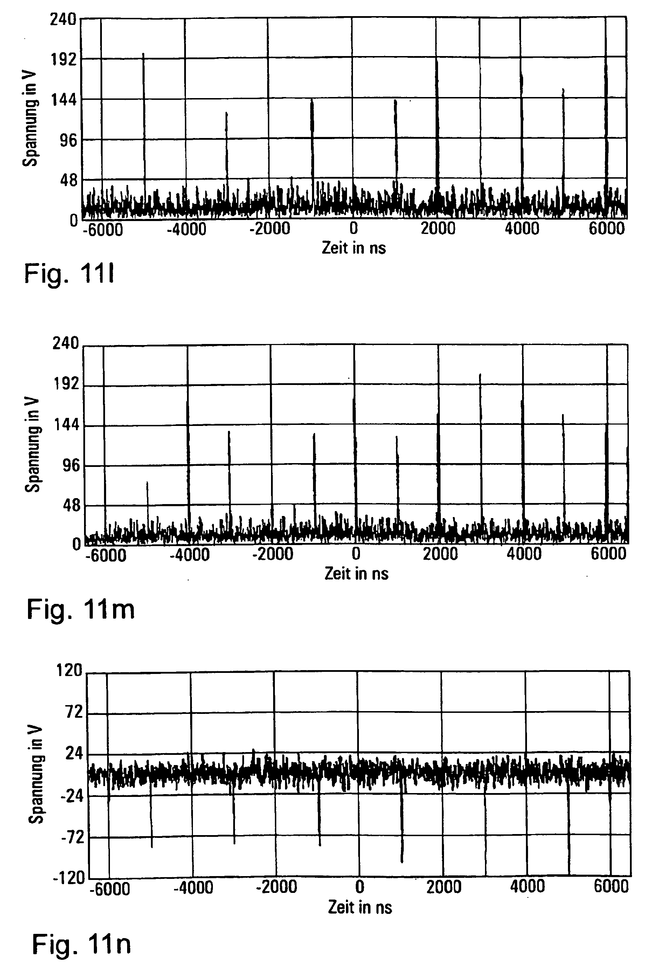

Angenommen, die Nachrichtenquelle 111 liefere als Nachrichtensignale digitale Basisbandsignale in Form von nadelförmigen Si-Impulsen (die Funktion Si entspricht der Funktion (sinx/x), wie sie links oben in Figur 6 angedeutet sind. Diese Si-Impulse werden von einem Trägersignal mit der Frequenz $f_T$, das von dem Oszillator 120 geliefert wird, einer Amplitudenmodulation unterzogen, wobei das Trägersignal mit der Frequenz $f_T$ für den ersten Kodierer 113a von einem Phasenschieber um die Phase $\varphi_1$ verschoben wird, während das Trägersignal für den zweiten Kodierer 113b durch einen Phasenschieber 129 um die Phase $\varphi_2$ verschoben wird. Durch die Modulation mit Hilfe der Multiplizierer 121 und 123 entstehen nadelförmige HF-Impulse mit einer Hüllkurve gemäß der (S-Funktion). In jedem Kodierer 113a und 113b befindet sich ein dispersives Filter, wobei der erste Kodierer 113a ein Dispersionsfilter 130 enthält, dessen Gruppenlaufzeitkennlinie komplementär zu der Kennlinie des in dem zweiten Kodierer 113b befindlichen Dispersionsfilters 131 ist. Auf diese Weise bilden die Dispersionsfilter 130 und 131 gegenläufig winkelmodulierte Chirpsignale, wie sie in Figur 11c bei "A" bzw. bei "B" dargestellt sind.

Die beiden auf den Summierer 114a gegebenen, gegenläufigen Chirpimpulse werden superponiert, d.h. überlagert und dann auf die Übertragungsstrecke 115 gegeben. Die in Figur 11c dargestellten Chirpimpulse weisen gegenläufige Frequenzbeschleunigungen $\mu$[Hz/s] auf, wobei hier der Spezialfall $\mu_2 = -\mu_1$ für die bei "A" bzw. "B" dargestellten Impulse gilt.

In den beiden Dekodierern 117a und 117b im Empfänger E gibt es zunächst zwei getrennte, parallele Signalpfade entsprechend den Konventionen 1 und 2. Jeder Signalpfad enthält ein Dispersionsfilter 132 bzw. 133, die entsprechend ausgebildet sind wie die Dispersionsfilter 130 bzw. 131 in den Kodierern 113a bzw. 113b. Die Gruppenlaufzeitkennlinien der Dispersionsfilter einander entsprechender Konventionen sind so gewählt, daß sich am Ausgang der beiden Dispersionsfilter 132 und 133 jeweils ein kombiniertes Signal ergibt, bestehend aus einem zeitlich komprimierten Impuls hoher Amplitude und einem zeitlich expandierten Impuls verringerter Amplitude.

Bevor auf die Signalverarbeitung im Empfänger E näher eingegangen wird, sollen einige Anmerkungen zu den bei der Ausführungsform nach Figur 7 übertragenen Faltimpulsen gemacht werden. Die Faltimpulse werden - wie bereits anhand von Figur 1a dargestellt - erzeugt durch Überlagerung von zwei gegenläufig winkelmodulierten Chirpsignalen. Gewonnen werden die Signale mit Hilfe der Dispersionsfilter, die als transversal arbeitende Laufzeitglieder ausgebildet sind und die zunächst gedehnten Chirpimpulse zu einem sehr kurzen, nadelförmigen Impuls hoher zeitlicher Energiedichte komprimieren.

Faltimpulse lassen sich mit relativ geringer Sendeleistung emittieren. Durch die im Empfänger erfolgende Kompression ergeben sie abhängig von der verwendeten Bandbreite und der Amplitude die kürzestmöglichen Impulse in der Nachrichtentechnik, nämlich Si-Nadelimpulse, wie sie entstehen, wenn ein Dirac-Impuls über ein Tiefpaß geleitet wird. Der Vorteil der Chirpimpulse besteht unter anderem darin, daß sie nur über entsprechend ausgebildete und der Chirpcharakteristik angepaßte Filter komprimierbar sind, das heißt, sie sind in ihrem Frequenz-Zeit-Verhalten korrelierbar. Ferner lassen sie sich zur Mehrfachübertragung superponieren (überlagern). Dies hat den Vorteil, daß sie sich auch bezüglich ihrer Position auf der Zeitachse - wie weiter unten dargestellt - mehrfach korrelieren lassen. Sie bilden als Teilsignale Elemente, welche sich insbesondere für Mehrbenutzerverfahren den einzelnen Teilnehmern getrennt zuweisen lassen.

Bei dem in Figur 7 dargestellten Ausführungsbeispiel wird durch die Dispersionsfilter das Rauschen, da es zur Gruppenlaufzeitkennlinie der Dispersionsfilter wegen seiner statistisch verteilten Frequenz-Zeit-Charakteristik nicht angepaßt ist, in den beiden Zweigen unterschiedlich auf der Zeitachse verteilt. Damit ist das Rauschen in den beiden Zweigen auf der Zeitachse nahezu unkorreliert.

Die Ausgangssignale der Dispersionsfilter 132 und 133 der Dekodierer 117a und 117b werden zur Demodulation auf einen zugehörigen Quadrierer 134 bzw. 135 gegeben und dann über jeweils einen Tiefpaßfilter dem Korrelator 116 zugeleitet.

Die Beschaffenheit der bei der Ausführungsform nach Figur 7 verwendeten Faltsignale ermöglicht noch eine weitere Art der Demodulation, hier als Dekodierung gemäß Konvention 3 bezeichnet. Ein Dekoder 117c enthält zwei Phasenschieber 137 und 138 und einen Multiplizierer 136. In dem Dekodierer 117c werden also die beiden von den Dispersionsfiltern 132 und 133 gelieferten Signale in durch die Phasenschieber 137 und 138 festgelegter Phasenlage multipliziert. Durch entsprechende Wahl der Phasenlage im Sender kann erreicht werden, daß die komprimierten Impulse (Nutzsignale) im Empfänger eine bestimmte Phasenlage aufweisen, so daß bei geeigneter Multiplikation eine kohärente Produktdemodulation möglich ist. Je nach Phasenlage der Signale in den beiden Zweigen im Empfänger erscheint am Ausgang des Multiplizierers 136 ein positives oder negatives Signal.

Nach dem ersten Schritt der Bildung der komprimierten Impulse durch die dispersiven Filter und dem zweiten Schritt der Demodulation des Nachrichtensignals im Empfänger schließen sich ein dritter und ein vierter Schritt zur Verarbeitung der Signale im Empfänger an. Der dritte Schritt besteht in Korrelation. Der vierte Schritt besteht in der sequentiellen Korrelation oder Autokorrelation. Auf diese beiden letzten Verarbeitungsschritte wird weiter unten noch näher eingegangen. Figur 7 zeigt damit ein komplexeres Ausführungsbeispiel für die Möglichkeiten der Mehrfachmodulation. Hierbei werden sogenannte "kombinierte Konventionen" zwischen Sender und Empfänger getroffen. Schlüsselüberlegung ist wieder die gleichzeitige Ausnutzung mehrerer Variabler einer Zeitfunktion zur Übertragung eines Signals oder eines Elementes einer Nachricht, beispielsweise eines Bits einer digitalen Nachricht.

Benutzt man hierzu insbesondere Chirpsignale, das sind spezielle frequenzmodulierte Signalelemente, die innerhalb eines bestimmten Zeitintervalls Dt einen bestimmten Frequenzhub Df monoton steigend oder fallend aufweisen, kann die Charakteristik dieser besonderen Frequenzmodulation, deren Änderung pro Zeiteinheit $\mu$ [Hz/s] oder in $[1/s^2]$, deswegen auch Frequenzbeschleunigung genannt, für Korrelationsstrategien besonders vorteilhaft genutzt werden, weil sie auf mehrfache Weise im Empfänger als Korrelationsbedingung wirken kann.

Der Grund hierfür liegt in der funktionellen Verknüpfung gleich zweier Variabler der Signalfunktion. Dann und nur dann, wenn die Frequenz f während der Dauer $D_t$ sich mit einem vorher zwischen Sender und Empfänger vereinbarten, ganz bestimmten Änderungsverlauf ändert, kann die Signalfunktion durch ein bestimmtes (angepaßtes) Dispersionsfilter im Empfänger, das einen entsprechend gegenläufigen Verlauf seiner Gruppenlaufzeit-Charakteristik aufweist, komprimiert werden. Solche Dispersionsfilter können als transversal arbeitende Laufzeitglieder ausgebildet werden und stellen optimale Bauelemente dar, um den zunächst ausgedehnten insbesondere Chirpimpuls zu einem sehr kurzen nadelförmigen Puls hoher zeitlicher Energiedichte zu komprimieren.

Diese Anordnung zur Nutzung des Prinzips und insbesondere die Verwendung doppelt oder mehrfach gechirpter Impulse, das sind z.B. zwei superponierte linear aufwärts und abwärts frequenzmodulierte Pulse gemeinsamer Dauer, hier auch "Faltimpulse" genannt, hat in mehrfacher Weise besonders vorteilhafte Eigenschaften bezüglich der hier gestellten Aufgabe. Faltimpulse lassen sich mit relativ geringer Sendeleistung emittieren; werden sie empfängerseitig komprimiert, ergeben sie entsprechend der verwendeten Bandbreite Amplitude die kürzesten Impulse, die in der Nachrichtentechnik übertragen werden können, nämlich Kurven der Form (sinx)/x - Nadelimpulse, wie sie aus Dirac-Impulsen entstehen, die über einen Tiefpaß endlicher Bandbreite geleitet werden. Ferner sind die insbesondere Chirpimpulse nur über entsprechend ausgebildete und der insbesondere Chirpcharakteristik angepaßte Filter komprimierbar, das heißt, in ihrem Frequenz-Zeit-Verhalten - also auch ohne parallele (Kreuzkorrelation entsprechend der genannten Korrelation erster Art) oder sequentielle Korrelation (Autokorrelation entsprechend der genannten Korrelation zweiter Art) - korrelierbar. Darüber hinaus lassen sie sich superponieren, also sich doppelt oder mehrfach übertragen und damit bezüglich ihrer Position auf der Zeitachse mehrfach korrelieren. Sie stellen also entsprechend der hier gestellten Aufgabe komplex korrelierbare und den für hier definierten Zweck sehr vorteilhafte Signale dar.

Figur 7 zeigt damit die mehrdimensionale Kodifikation einer Nachricht durch zwei komplementäre Dispersionsfilter. Hierbei wird angenommen, daß die Nachrichtenquelle digitale Basisbandsignale in Form von nadelförmigen (sinx)/x-Impulsen erzeugt. Diese werden mit unterschiedlichem Winkel, beispielsweise j1 und j2 gleichzeitig in zwei parallelen Zweigen mit dem Träger moduliert, derart, daß nadelförmige HF-Impulse mit einer (sinx)/x - Hüllkurve entstehen. In jedem der beiden Zweige befindet sich im Sender je ein Dispersionsfilter, deren Gruppenlaufzeit-Charakteristiken möglichst unterschiedlich, vorteilhafterweise zueinander komplementär sind, wobei deren Frequenzbeschleunigungen $\mu$ [Hz/s] gegenläufig seien, also im ersten Fall $\mu1$ und im zweiten Fall $\mu2 = -\mu1$ betragen möge. Gestaltet man außerdem im Sender diese Signale derart, daß die Phasenlage j1 und j2 der insbesondere Chirpkomponenten relativ zueinander definiert ist und als Modulation zwischen Sender und Empfänger gilt, daß z.B. folgende zwei Phasen für eine Zwei-Level-Übertragung derart vereinbart werden, daß

$$j2a = j1 + p/2,$$

oder beispielsweise

$$j2b = j1 - p/2,$$

für die zwei Signalpegel vereinbart werden, um digital "Nullen" und "Einsen" übertragen zu können, dann kann eine solche Signalfolge beim Empfänger in vier aufeinander folgenden unterschiedlichen Schritten bearbeitet werden.

Zunächst findet durch die Dispersionsfilter bei korrekter Anpassung eine zeitliche Kompression, also eine Art "Dispersionskorrelation" statt.

Das superponierte Chirpsignal wird in zwei bezüglich ihrer Phase zueinander unterschiedliche aber koinzidente Signale in den zwei getrennten Zweigen gespalten, die beide das ursprüngliche Signalelement in zwei zueinander bestimmten Phasenlagen repräsentieren. Die Dispersionsfilter komprimieren die ursprünglich längeren insbesondere Chirpsignalkomponenten zu zwei Impulsen erhöhter Energiedichte, also erhöhter Leistung, also auch gegenüber dem Rauschen überhöhter Amplitude.

Wird das ursprüngliche Signal in zwei Wege aufgeteilt, bei denen das komprimierte Signal zum Beispiel in der gleichen zeitlichen Position überhöht erscheint, also koinzident erscheint haben beide Signale in beiden Zweigen eine im Sender wählbare Phasenlage zueinander.

Das Rauschen, daß zur Gruppenlaufzeit-Charakteristik der Dispersionsfilter aufgrund seiner statistisch verteilten Frequenz-Zeit-Charakteristik nicht angepaßt ist, wird in den beiden Zweigen unterschiedlich auf der Zeitachse verteilt und ist damit in beiden Zweigen in der Zeitebene zueinander annähernd unkorreliert.

Im zweiten Schritt erfolgt eine Demodulation des Signals. Dies kann jeweils durch kohärente Demodulation oder durch einfache Demodulation, z.B. durch Gleichrichter oder auch durch Quadrierung erfolgen.

Quadriert man die Signale in den beiden Zweigen getrennt voneinander, so treten die Quadrate des Signals, die Quadrate des Rauschen (beide positiv) und ein Mischprodukt zwischen Signal und dem jeweiligen Rauschen auf.

Gleiches gilt für beide Zweige, jedoch sind hierbei die Signale koinzident, die Rauschanteile in beiden Zweigen sind in der Zeitebene annähernd voneinander unabhängig.

Zusätzlich ist zur Demodulation in den beiden Zweigen noch eine andere und anders geartete Demodulation möglich. Multipliziert man beide Pfade vor der Gleichrichtung miteinander, so werden je nach Phasenlage der koinzidenten Signale zueinander die Signale in der NF oder der doppelten Frequenz oder in beiden Bereichen erscheinen. Interessant in diesem Zusammenhang ist, daß die beiden komprimierten Nutzsignale in beiden Zweigen als träger- oder zwischenfrequente Signale senderseitig so bestimmt werden können, daß sie beim Empfänger in bestimmter Phasenlage relativ zueinander in beiden Zweigen auftreten, derart, daß bei der wechselseitigen Multiplikation diese nicht nur zur Levelvariation über den Phasenwinkel genutzt werden können, sondern daß die Phasenbezogenheit zu einer fehlerfreien kohärenten Produktdemodulation, wie sie sonst nur durch eine PLL-Regelung mit mehr oder weniger Genauigkeit erreicht wird, genutzt werden kann. Das bedeutet, daß bei diesem Verfahren der Sender gleich die Referenzphase zur Demodulation mitliefert und damit eine automatische "Subnoise"-Trägerrekonstruktion ohne die sonst zur Regelung notwendige Zeitkonstante mitliefert.

Damit ist ein dritter Ausgang geschaffen, der dadurch gekennzeichnet ist, daß zum Beispiel je nach Phasenlage ein negatives oder positives Signal am Ausgang erscheint. Das gilt für die Kombination zweier Phasen. Bei mehr als zwei Phasen lassen sich auch mehrere Level oder damit mehrere Ausgänge schaffen.

Den dritten und vierten Schritt bilden die parallele und die sequentielle Korrelation oder die Kreuz- und Autokorrelation, die später beschrieben werden.

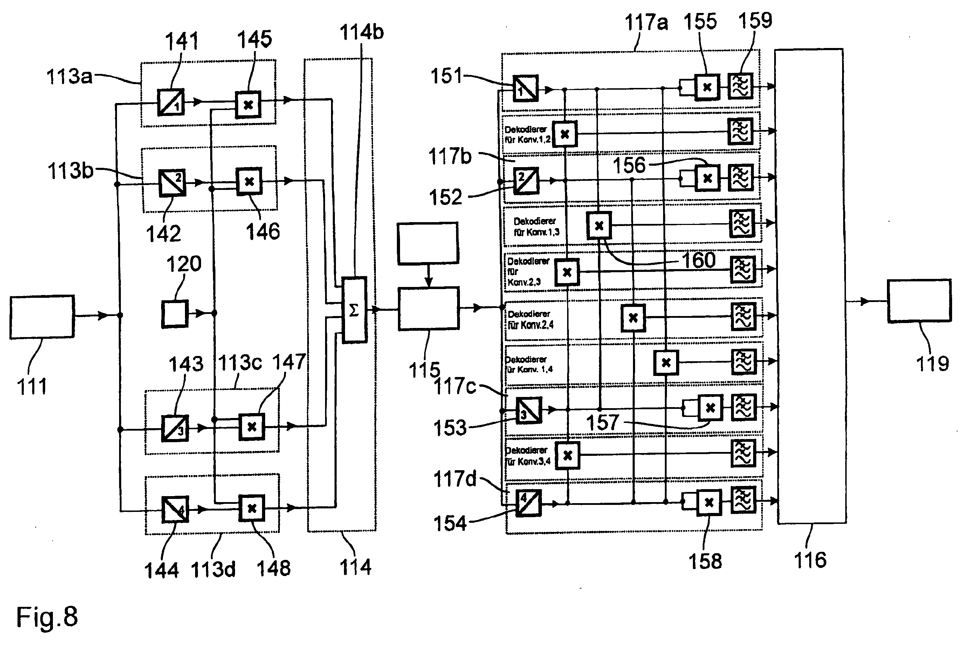

Figur 8 zeigt ein Blockschaltbild einer vierten Ausführungsform eines erfindungsgemäßen Systems zum Übertragen eines Nachrichtensignals. Diese Ausführungsform ist der Ausführungsform nach Figur 7 ähnlich. Das wiederum als Si-Nadelimpuls vorliegende Nachrichtensignal von der Nachrichtenquelle 111 wird parallel vier Dispersionsfiltern 141, 142, 143 und 144 zugeführt. Das Dispersionsfilter 141 besitzt eine Gruppenlaufzeitkennlinie zur Bildung eines Impulses, dessen Phasenlage zu der Phasenlage des Ausgangssignals des Dispersionsfilters 143 versetzt ist. Die Dispersionsfilter 142 und 144 dienen zur Erzeugung von gegenläufig winkelmodulierten Chirpsignalen. Die von den einzelnen Kodierern 113a bis 113d gelieferten Chirpsignale werden in dem Summierglied 114b des Konzentrators 114 zu Faltimpulsen geformt und auf die Übertragungsstrecke 115 gegeben.

Die Verarbeitung der am Ende der Übertragungsstrecke 115 von dem Empfänger empfangenen Signale erfolgt ähnlich wie bei der Ausführungsform nach Figur 6. Zum einen wird in vier parallelen Pfaden eine Filterung der Faltsignale durch Dispersionsfilter 151 bis 154 in den einzelnen Dekodierern 117a bis 117d vorgenommen. Die Ausgangssignale der Dispersionsfilter 151 bis 154 werden von den gleiche Eingangssignale empfangenden Multiplizierern 155 bis 158 quadriert und dann über Tiefpaßfilter, in Figur 8 allgemein mit 159 bezeichnet, auf den Mehrfachkorrelator 116 gegeben.

Wie oben in Verbindung mit Figur 7 für die beiden Kodierer 117a und 117b beschrieben, erfolgt zusätzlich ein Dekodieren gemäß einer weiteren Konvention, gebildet durch Kombination oder Verknüpfung der Konventionen 1 und 2.

Wie aus dem Blockschaltbild in Figur 8 ersichtlich ist, werden nicht nur die Ausgangssignale der Dispersionsfilter 151 und 152 multipliziert, sondern ferner die Ausgangssignale der jeweils benachbarten Dispersionsfilter in den einzelnen Dekodierern 117 b bis d. Es stehen aber noch weitere Verknüpfungsmöglichkeiten zur Verfügung, von denen eine durch einen Multiplizierer 160 repräsentiert wird, der die Ausgangssignale der Dispersionsfilter 151 und 153 der Dekodierer 117a und 117c multipliziert.

Bei dem hier dargestellten Ausführungsbeispiel zeigt sich besonders das erfindungsgemäße Prinzip der mehrdimensionalen Dekodierung bzw. Demodulation, bei dem die Anzahl der für die Demodulation des Nutzsignals herangezogenen Konventionen über die Zahl der im Sender benutzten Konventionen dadurch hinausgeht, daß auch die Kombinationen dieser Konventionen gültige Dekodierungsschlüssel bilden, welche durch ihre relative Unabhängigkeit von den ursprünglichen Konventionen eine weitere Heraufsetzung des Störabstands bei der Rückgewinnung des Nutzsignals ermöglichen. Die Kaskadierung kann dabei unter Rückgriff auf sequentielle Korrelationskriterien in Kombination (wie nachfolgend beschrieben) noch weiter heraufgesetzt werden.

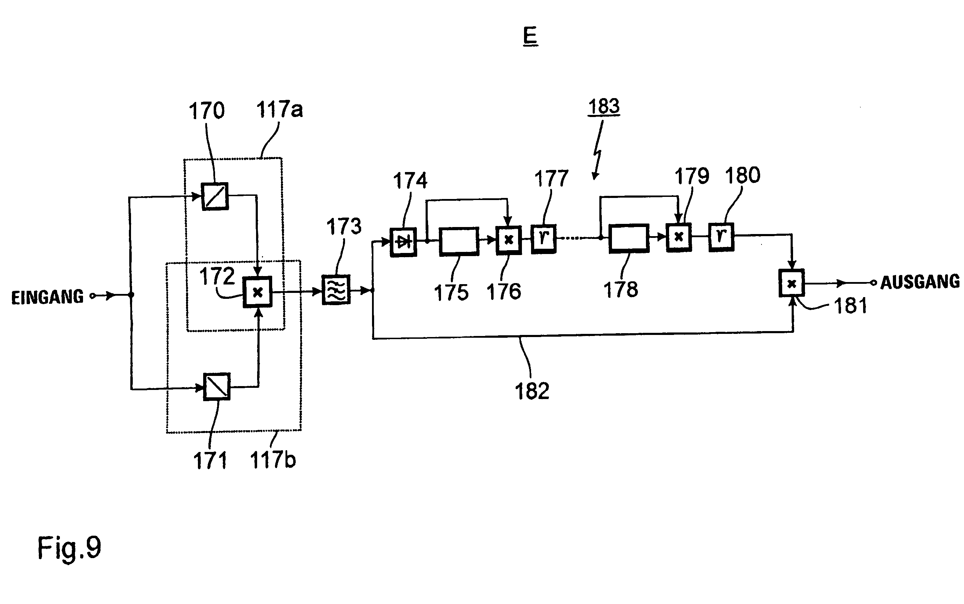

Figur 9 zeigt ein Blockschaltbild für einen Empfänger E gemäß einer anderen Ausführrungsform der Erfindung.

Die von dem in Figur 9 nicht gezeigten Empfänger empfangenen Signale seien Faltsignale, wie oben in Verbindung mit Figur 6 ausgeführt wurde. Im Sender werden die Chirpsignale so gestaltet, daß sie am Ausgang der beiden komplementären Dispersionsfilter 170 und 171 im Empfänger für eine logische "1" gleiche Phasenlage aufweisen, für eine logische "0" um 180° versetzt sind. Jeweils ein Dispersionsfilter 170 bzw. 171 bildet zusammen mit dem Multiplizierer 172 einen ersten Dekodierer 117a bzw. einen zweiten Dekodierer 117b. Das Ausgangssignal des Multiplizierers 172 ist ein positiver Impuls für eine logische "1", ein negativer Impuls für ein logisches Signal "0". Das über ein Tiefpaßfilter 173 geführte Signal stellt also auf einem Signalpfad 182 eine Vorzeicheninformation dar, da die Polarität des Signals auf dem Signalpfad 182 abhängt von dem logischen Pegel "1" bzw. "0" des Nachrichtensignals.

Der Multiplizierer 172 in Figur 8 dient einerseits zur kohärenten Demodulation der empfangenen und über die Dispersionsfilter 170 und 171 gegebenen Signale, zum anderen hat der Multiplizierer 172 die Funktion eines Kreuzkorrelators, weil er koinzidierende Signale an seinen Eingängen quadriert, wodurch sich der Signal/Rauschabstand erhöht.

In einem an das Tiefpaßfilter 173 anschließenden zweiten, zu dem Signalpfad 182 parallelen Signalpfad 183 wird das demodulierte Signal aus dem Tiefpaßfilter 173 mit einem Vollweggleichrichter 174 gleichgerichtet. Das Ausgangssignal des Gleichrichters 174 wird einerseits direkt auf einen Multiplizierer 176 und andererseits über einen Signalverzögerer 175 auf den Multiplizierer 176 gegeben.

Die Verzögerungszeit $T_s$ des Signalverzögerers 175 entspricht der Periodizität der vom Sender gelieferten Faltimpulse. Indem das unverzögerte Signal von dem Multiplizierer 176 mit der um eine Periodendauer verzögerte Version des Signals multipliziert wird, wird das Signal-/Rauschverhältnis verbessert. Diese Art der Autokorrelation oder sequentiellen Korrelation ist an sich bekannt.

Ein an den Multiplizierer 176 anschließender Quadratwurzel-Bildner 177 begrenzt das durch die Multiplikation erhöhte Signal. Anschließend erfolgt eine nochmalige Autokorrelation in der beschriebenen Weise mit Hilfe eines Verzögerungsglieds 178 und eines Multiplizierers 179, dem wiederum ein Begrenzer 118° nachgeschaltet ist.

In dem Signalpfad 183 wird durch die wiederholte Autokorrelation ein Taktsignal gewonnen, welches der Periodizität der im Sender erzeugten Faltimpulse bzw. Chirpsignale entspricht. Diese Taktsignale sind zeitlich koinzident mit den vorzeichenbehafteten Signalen auf dem unteren Signalpfad 182. Durch Multiplikation der beiden jeweils zeitlich entsprechenden Signale aus den Signalpfaden 182 und 183 in einem Multiplizierer 181 läßt sich ein von Rauschen weitestgehend befreites Nutzsignal erhalten.

Mit der in Figur 9 dargestellten Schaltung wird das am Eingang des Empfängers erhaltene Signal mehrfach korreliert entsprechend mehrfachen Konventionen, nämlich:

a) die beiden Dispersionsfilter 170 und 171 bilden aus den empfangenen Signalen eine komplementäre, dispersive Kompression des Signals, um komprimierte Signalimpulse zu bilden.

b) durch die Produktbildung im Multiplizierer 172 wird einerseits eine kohärente Demodulation und andererseits eine parallele oder Kreuzkorrelation erhalten.

c) durch die mehrfache Autokorrelation im Signalpfad 183 wird eine weitere Rauschreduktion erreicht.

Figur 9 zeigt ein sechstes Ausführungsbeispiel eines erfindungsgemäßen Systems für die Übertragung eines Nachrichtensignals.

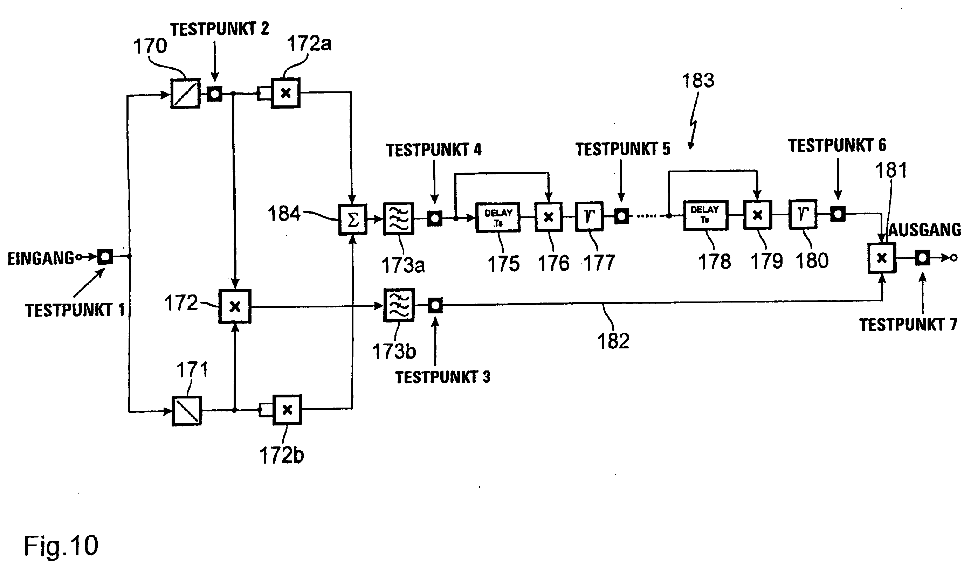

Die Ausführungsform nach Figur 10 ähnelt der Ausführungsform nach Figur 8, nur daß bei der Ausführungsform nach Figur 9 zwei Multiplizierer 172a und 172b für die kohärente Demodulation der Ausgangssignale der Dispersionsfilter 170 und 171 vorgesehen sind. Die durch die Quadrierung mit den Multiplizierern 172a und 172b erhaltenen, positiven Signale werden auf einen Summierer 84 gegeben und gelangen dann über ein Tiefpaßfilter 173a auf die nachgeordnete Autokorrelationskette, die identisch wie bei der Ausführungsform nach Figur 9 ausgebildet ist.

Die Vorzeicheninformation wird durch den Multiplizierer 172 gewonnen und gelangt über das Tiefpaßfilter 173b auf den Signalpfad 182.

Bei der in Figur 10 gezeigten Schaltung bildet das Summierglied 184 die Summe der Quadrate der Ausgangssignale der beiden Dispersionsfilter 170 und 171. Insofern stellt das Summierglied 184 einen Kreuzkorrelator dar. Wesentlich hierbei ist, daß die Quadrierung der Ausgangssignale der Dispersionsfilter zwar zeitlich koinzidente Signale liefert, jedoch nur für die Nutzsignale, nicht jedoch für die Rauschsignale, die nicht korreliert sind. Durch die Summierung in dem Summierglied 184 wird eine relative Rauschreduzierung erreicht.

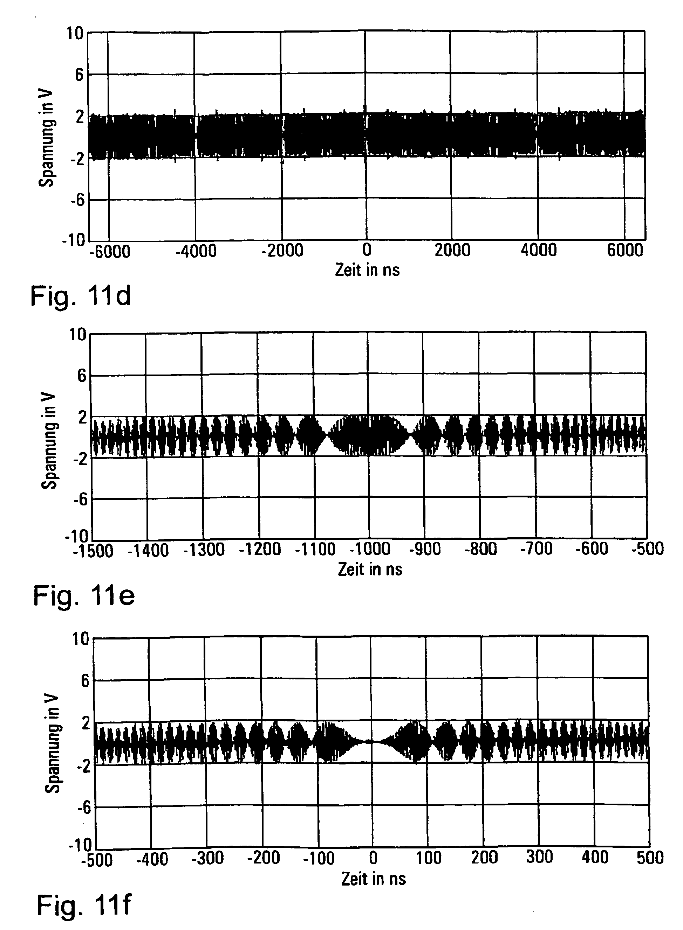

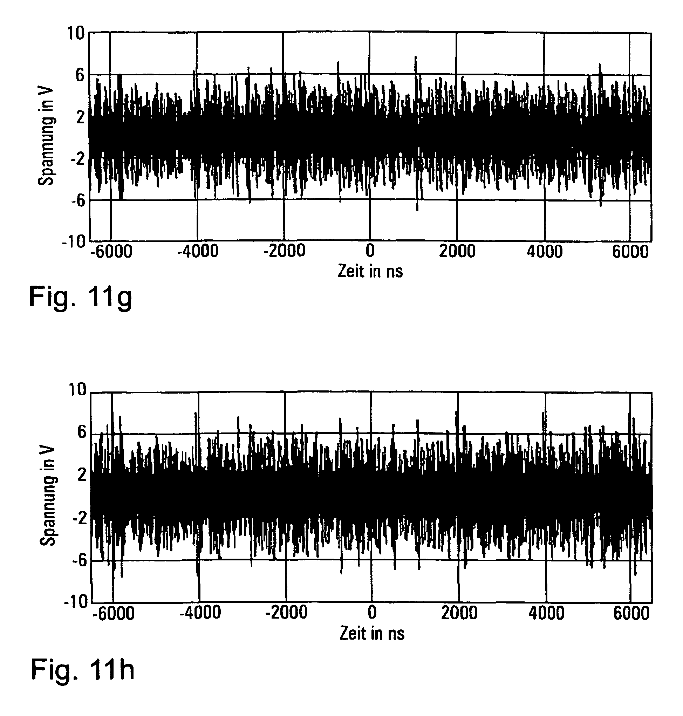

Zum besseren Verständnis der Signalverarbeitung und um zu zeigen, welche Leistungsfähigkeit das System aufweist, werden im folgenden an verschiedenen "Testpunkten" der in Figur 10 gezeigten Schaltung auftretende Signale in Figur 11 dargestellt und im folgenden diskutiert.

Figur 11a zeigt ein hier näher zu betrachtendes Beispiel für eine Folge von zu übertragenden Nachrichtensignalen in Form von Nullen und Einsen. Dargestellt sind insgesamt 13 Signalperioden, jeweils entsprechend einer "0" bzw. einer "1". Die in Figur 11a dargestellten Signale sind zum Beispiel Spannungssignale, wobei die einzelnen Nullen als Spannung von 0 V dargestellt sind, während die Einsen jeweils einen bestimmten Gleichspannungspegel aufweisen.

Figur 11b zeigt die Signalfolge gemäß Figur 11a in einer anderen Darstellungsweise. Jeder Periodendauer des Signalpegels nach Figur 11a ist entsprechend dem Signalpegel "0" oder "1" ein Pfeil oder Nadelimpuls mit negativen bzw. positiven Vorzeichen zugeordnet. Da durch die in Figur 9 dargestellte Schaltung am Ausgang ein vorzeichenbehaftetes Signal mit der gleichen Periodizität wie das vom Sender gelieferte Signal entsteht, und zwar jedes Nachrichtensignal in Form eines schmalen Impulses großer Amplitude positiver oder negativer Polarität, müßte am Ausgang des Multiplizierers 181 in Figur 9 bei korrekter Signälerkennung ein ähnliches Signal erscheinen, wie es in Figur 11b gezeigt ist.

Wie bereits oben in Verbindung mit Figur 7 erläutert, werden im Sender aus Chirpsignalen vom Typ "Up-Chirp" und "Down-Chirp", also Chirpsignale mit gegenläufiger, linearer Frequenzbeschleunigung, Faltsignale erzeugt. (Figur 11c)

Figur 11d zeigt das mit einer Software-Simulation erzeugte Signal am Testpunkt 1 als Folge der 13 Zustände der digitalen Signalfolge nach Figur 11a, nämlich der binären Ziffernfolge 0, 0, 1, 0, 1, 0, 1, 0, 0, 0, 1, 0, Figur 11e und 11f zeigen die zeitlich gegenüber Figur 11d auseinandergezogenen Signalverläufe für eine "aktive 0" bzw. eine "1". Der Begriff "aktive 0" bedeutet, daß die Null nicht etwa durch ein fehlendes Signal in der zugehörigen Zeitspanne übertragen wird, sondern durch ein in der oben erläuterten Weise geformtes Faltsignal.

Zu Anschauungszwecken ist in Figur 11g ein Rauschsignal ohne Nutzsignal dargestellt. Figur 11h zeigt demgegenüber die aus der Summe von Nutz- und Rauschsignalen gebildete Signalform.

Gemäß Figur 11g besitzt das ausschließlich durch Rauschen gebildete Signal eine gewisse Rauschleistung $N_o$, die gegenüber der Signalleistung E um 6 dB überhöht ist. Beide Signale E und No sind auf 80 MHz bei einer Mittenfrequenz von 2,44 GHz bandbegrenzt. Vergleicht man die in den Figuren 11g und 11h dargestellten Signale, so ist ersichtlich, daß das Nutzsignal in dem Rauschsignal gemäß Figur 11g nicht erkennbar ist. Mit herkömmlichen Maßnahmen wäre das Detektieren des Nutzsignals nicht möglich.

Figur 11i zeigt das Signal am Testpunkt 2, das heißt am Ausgang des Dispersionsfilters 170 in Figur 9. Dieses Nutzsignale und Rauschen enthaltende Signal am Ausgang des dispersiven Filters 170 zeigt gegenüber dem Signal vor dem Dispersionsfilter 170 gewisse erkennbare Spannungsspitzen an den Stellen, an denen die gewonnenen Nutzsignale liegen (vgl. Figur 11a), an anderen Stellen gehen die Signale jedoch völlig im Rauschen unter.

Figur 11j zeigt das Ausgangssignal des Tiefpaßfilters 173b nach der Multiplikation durch den Multiplizierer 172. Bei diesem Signal am Testpunkt 3 in Figur 10 handelt es sich um das vorzeichengerechte Produkt der Ausgangssignale der Dispersionsfilter 170 und 171. Im Gegensatz zu dem Signalverlauf gemäß Figur 11i zeigt der Signalverlauf in Figur 11 j bereits deutlich einzelne positive und negative Spannungsspitzen. Dieses Signal gelangt über den Signalpfad 182 auf den Multiplizierer 181.

Figur 11k zeigt das Signal am Testpunkt 4, also das über das Tiefpaßfilter 173a geleitete Summensignal aus den Quadraten der Ausgangssignale der Dispersionsfilter 170 und 171. Wie oben erwähnt, stellt das Summierglied 184 einen Kreuzkorrelator dar, der die beiden Signale in den beiden parallelen Dekodierern 170, 172a bzw. 171, 172b parallel oder zeitgleich korreliert. Wie in Figur 11k zu sehen ist, erhält man durch die Kreuzkorrelation deutliche Spannungsspitzen. Da dieses Signal zur Taktgewinnung dient, wird auf die Vorzeicheninformation bewußt verzichtet.

Der nächste Testpunkt 5 zeigt gemäß Figur 11l das Signal nach der ersten Autokorrelationsstufe, die durch das Verzögerungsglied 175, den Multiplizierer 176 und den Begrenzer 177 gebildet wird. Gegenüber dem Signalverlauf in Figur 11k ist der Rauschanteil des Signals noch weiter reduziert. Durch Vergleich der Figuren 11k und 11l erkennt man außerdem, daß das Nutzsignal ganz links auf der Zeitachse bei -6000 ns nicht mehr vorhanden ist. Dies ist zurückzuführen auf die hier gegebene Voraussetzung, daß die zu übertragende Signalfolge zu einem gegebenen Zeitpunkt beginnt, früher also keine Signale vorhanden sind, so daß der Multiplizierer 176 das erste auftretende Signal direkt empfängt, jedoch von der Verzögerungsleitung 175 noch kein Signal verfügbar ist.

Entsprechendes gilt für das Signal am Testpunkt 6 in Figur 11m. Durch die zweimalige Korrelation wird gemäß Figur 11m das Rauschen weiter unterdrückt, so daß gegenüber dem Rauschpegel beträchtlich erhöhte Spannungsspitzen als Taktsignal zur Verfügung stehen. Dieses Taktsignal gemäß Figur 11m wird mit dem Vorzeichensignal nach Figur 11j im Multiplizierer 181 multipliziert, so daß gemäß Figur 11n ein gut detektierbares Nutzsignal mit korrektem Vorzeichen zur Verfügung steht. Oben in Figur 11n sind die binären Ziffern "0" und "1" entsprechend der Polarität am Ausgang der Schaltung nach Figur 10 dargestellt.

Die beiden ersten Signale "0" sind in Klammern gesetzt, da sie hier systembedingt wegen der zwei Verzögerungsstufen in der Autokorrelationskette nicht verfügbar sind. Ein Vergleich der Figur 11n mit 11b zeigt, daß das Signal trotz des erheblichen Rauschanteils korrekt übertragen wurde.

Umfangreiche Simulationen dieser Schaltung haben unter der Voraussetzung eines idealen Detektors am Ausgang dieser Schaltung nach Figur 10 folgendes Ergebnis geliefert:

S/N-Verhältnis am Eingang der Schaltung

[dB] -7,5 -9,0 -10,5 -11

Bit-Fehlerrate bei Detektor

$<10^{-3}$ 0,0042 0, 0965 0,130

Wie oben erläutert, beinhalten die Schaltungen nach den Figuren 9 und 10 jeweils einen Multikorrelator mit einem parallelen oder Kreuzkorrelator und mit einem Autokorrelator. In Figur 10 wird der Kreuzkorrelator durch den Multiplizierer 172 gebildet, der Autokorrelator durch den Signalpfad 183, der zur Taktgewinnung dient. Bei der Schaltung nach Figur 9 besteht der Kreuzkorrelator aus dem Summierglied 184, der die Quadrate der Ausgangssignale der Dispersionsfilter 170 und 171 summiert. Der Multiplizierer 172 stellt ebenfalls einen Kreuzkorrelator dar, da er die Signale aus den parallelen Detektorpfaden multipliziert. Der Autokorrelator wird wiederum durch diese Signalverarbeitungskette im Sig-nalpfad 183 gebildet.

Man kann den Aufwand zur Ausbildung des Multikorrelators weiter steigern, um eine noch weitere Verbesserung des Signal-/Rauschabstandes zu erreichen.

Die Effekte und Schlußfolgerungen sind die gleichen wie bei Figur 7; jedoch ist die Anzahl der Ausgänge eine höhere und demzufolge läßt sich eine weit höhere Anzahl von Korrelationen bilden.

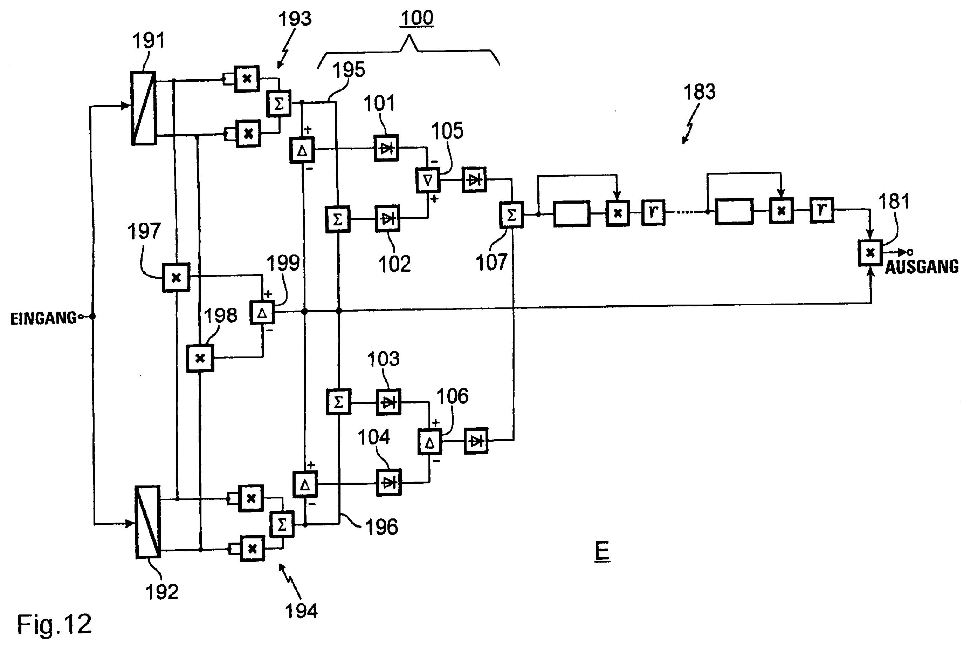

Figur 12 zeigt ein Blockschaltbild einer Schaltung mit ähnlichem Aufbau wie die in Figur 9 dargestellte, jedoch sind in diesem Beispiel statt zweier Kodierer beim Sender und Empfänger jetzt vier Kodierer für vier Modulationen beim Sender und Empfänger im Blockschaltbild eingezeichnet. Während in Figur 9 die zwei Pfade zu drei Ausgängen führen, sind dies in Figur 9 entsprechend den mehrfachen Kombinationen, die sich jetzt ergeben, zehn Ausgänge, vier Quadrate der vier Hauptpfade und sechs Produkte.

Figur 12 zeigt einen solchen komplexer ausgestalteten Mehrfachkorrelator. Es soll angenommen werden, daß im Sender die gleichen Faltsignale erzeugt werden, wie es oben bereits in Verbindung mit Figur 9 erläutert wurde. Im Empfänger E wird das von der Übertragungsstrecke empfangene Signal gleichzeitig zwei komplementären Dispersionsfiltern 191 und 192 zugeführt. Jedes Dispersionsfilter 191 besitzt zwei Ausgänge, wobei das Signal des zweiten Ausgangs gegenüber dem Signal des ersten Ausgangs um 90° in der Phase versetzt ist.

Die jeweiligen beiden Ausgangssignale der Dispersionsfilter 191 und 192 werden quadriert, die quadrierten Signale werden summiert. Die paarweisen Multiplizierer zum Quadrieren der Ausgangssignale bilden zusammen mit dem nachfolgenden Summierglied einen Produktdemodulator. An den Ausgängen der Summierer erscheinen auf den Leitungen 195 und 196 die keiner weiteren Filterung bedürfenden demodulierten, quadrierten Signale. Sie enthalten die demodulierten, quadrierten Nutzsignale, die quadrierten Rauschsignale und das jeweilige Mischprodukt aus Rauschen und Nutzsignal. Die Vorzeicheninformation wird bei der dargestellten Schaltung durch zwei Multiplizierer 197 und 198 und eine Differenzstufe 199 erhalten.

Die beiden Multiplizierer 197 und 198 multiplizieren jeweils die gleichphasigen Signale an den Ausgängen der Dispersionsfilter 191 und 192. In dem in Figur 12 mit 200 bezeichneten Schaltungsabschnitt erfolgt eine Kreuzkorrelation der unabhängig voneinander demodulierten Signale in den beiden Signalpfaden. Von den durch die Produktmodulatorelemente 193 und 194 gewonnenen quadrierten Signalen wird die Differenz der Produkte am Ausgangssignal des Differenzglieds 199 subtrahiert. Außerdem wird auf die jeweiligen Summen der Quadrate die Summe der Differenz der Produkte vom Ausgang des Differenzglieds 199 addiert. Durch diese Maßnahmen, das heißt die Differenzbildung und die Summenbildung, lassen sich die quadratischen Rauschanteile und das Mischprodukt der Rauschanteile weitgehend beseitigen.

Die Summen- und die Differenzsignale werden durch Vollweggleichrichter 201 bis 204 gleichgerichtet. Die dadurch entstehenden, vorzeichenlosen Signale werden paarweise durch Differenzglieder 205 und 206 voneinander subtrahiert, mit der Folge, daß sich die quadrierten Rauschanteile und die Produkte der Rauschanteile aus den beiden Pfaden aufheben. Dabei entstehende Signale unterschiedlicher Vorzeichen werden erneut gleichgerichtet und einem Summierglied 107 zugeführt, das die Signale korreliert, ähnlich wie das bereits bei dem Summierglied in der Schaltung nach Figur 10 der Fall war.

Das Ausgangssignal des Summiergliedes 207 wird auf ein Autokorrelatorelement gegeben, der wie bei der Schaltung nach Figur 10 durch den Signalpfad 183 gebildet wird. Im Multiplizierer 181 werden die im Signalpfad 183 gewonnenen Taktsignale mit dem vorzeichenbehafteten Signal am Ausgang der Differenzstufe 199 multipliziert.

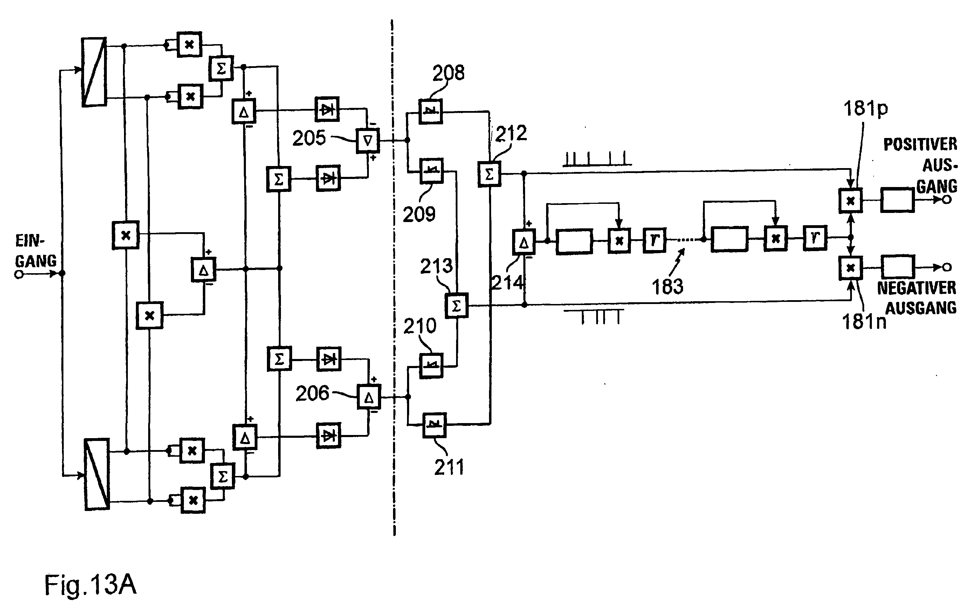

Figur 13A zeigt eine abgewandelte Ausführungsform der in Figur 12 gezeigten Schaltung. Links von der strichpunktierten Linie in Figur 13A entspricht die Schaltung im wesentlichen der Schaltung nach Figur 12 bis hin zu den beiden Differenzstufen 205 und 206. Allerdings erfolgt der Schaltung nach Figur 13A keine polaritätsbehaftete Vorzeicheninformation, sondern es werden getrennt positive und negative Nutzsignalimpulse erzeugt. Wie oben in Verbindung mit Figur 12 erwähnt, enthalten die Signale an den Ausgängen der Differenzstufen 205 positive und negative Signalanteile. Diese werden bei der Schaltung nach Figur A mit parallelen, zueinander komplementären Einweggleichrichtern aufgetrennt. Die beiden Einweggleichrichter positiver Richtung 208 und 209 liefern positive Signale auf ein Summierglied 212, an dessen Ausgang positive Nutzsignalimpulse erscheinen. Ein Summierglied 213 empfängt die Ausgangssignale von Einweggleichrichtern negativer Richtung 210 und 211 und gibt an seinem Ausgang negative Nutzsignalimpulse ab. Die Nutzsignalimpulse positiver und negativer Polarität werden in Multiplizierern 181p bzw. 181n mit dem Taktsignal aus dem Signalpfad 183 multipliziert. Die dadurch gewonnenen Nadelimpulse positiver und negativer Polarität sind an jeweils einem gesonderten Ausgang abnehmbar.

Das Taktsignal wird bei der Schaltung nach Figur 13a von dem Signalpfad 183 gebildet, der ähnlich ausgebildet ist wie der Signalpfad 183 bei der Schaltung nach Figur 12. Das Eingangssignal für den Signalpfad 183 wird durch Subtrahieren der Ausgangssignale der Summierglieder 212 und 213 gebildet. Diese Subtraktion wird von der Differenzstufe vorgenommen, da die Nutzsignalimpulse am Minus-Eingang der Differenzstufe 214 negatives Vorzeichen haben, entsteht am Ausgang der Differenzstufe 214 eine Folge positiver Signale. Die Differenzstufe 214 bildet somit den Betrag der Signale an den Ausgängen der Summierglieder 212 und 213.

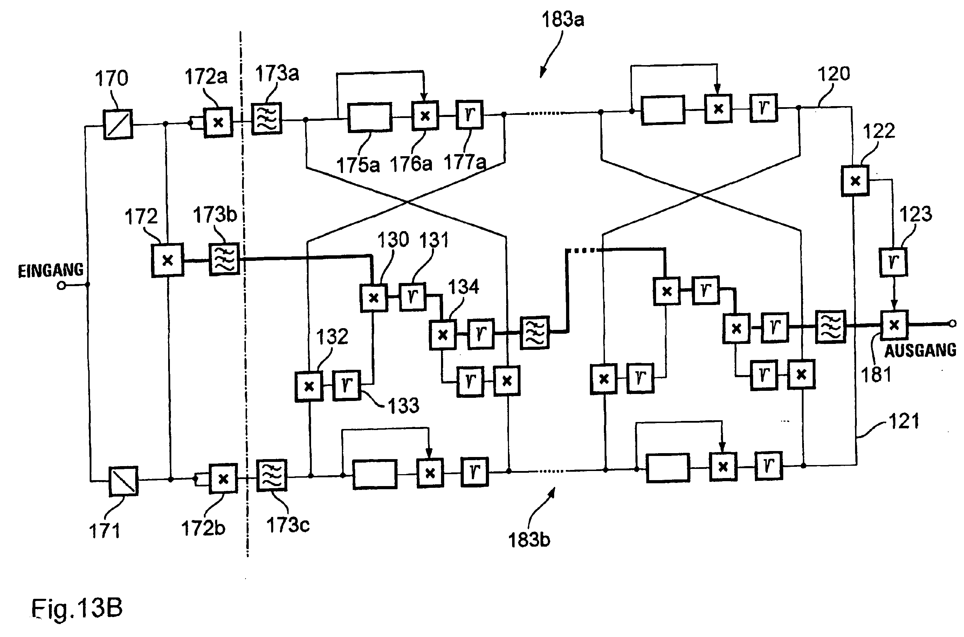

Figur 13b zeigt das Blockschaltbild eines Empfängers eines erfindungsgemäßen Systems zur Übertragung eines Nachrichtensignals. Die links von der strichpunktierten Linie in Figur 13b gezeigten Komponenten der Schaltung entsprechen den entsprechend numerierten Schaltungskomponenten der Schaltung nach Figur 10. Das quadrierte Ausgangssignal der beiden Dispersionsfilter 170 und 171 wird nach Filterung in einem zugehörigen Tiefpaßfilter 173a und 173c jeweils auf eine separate Autokorrelationskette gegeben, hier in Anlehnung an Figur 10 mit 183a bzw. 183b bezeichnet. Die an den Ausgängen der beiden Autokorrelationsketten an den Punkten 220 und 221 erhaltenen Signale, die beide positives Vorzeichen besitzen, werden in einem Multiplizierer 222 multipliziert und von einem Begrenzer 123 wieder auf den üblichen Amplitudenpegel begrenzt. Das Ausgangssignal des Begrenzers 123 ist das bereits oben bei anderen Schaltungen erwähnte Taktsignal oder der Gate-Impuls, der von einem Multiplizierer 181 mit der Vorzeicheninformation multipliziert wird, um ein durch einen Spitzendetektor detektierbares Ausgangssignal zu erhalten.

Das Vorzeichensignal wird durch kohärente vorzeichengerechte Produktdemodulation in dem durch eine verstärkte Signallinie kenntlich gemachten Signalpfad gebildet.

Das Ausgangssignal des Tiefpaßfilters 173b entspricht dem Ausgangssignal des Tiefpaßfilters 173b in Figur 10. Dieses Signal wird von einem Multiplizierer 230 multipliziert mit dem Produkt aus dem quadrierten Signal des Dispersionsfilters 171 und dem durch eine Autokorrelationsstufe 175a, 176a und 177a gelangten quadrierten Ausgangssignal des Dispersionsfilters 170. Die beiden Signale werden von einem Multiplizierer 232 gewonnen, von einem Begrenzer 133 begrenzt und dann dem Multiplizierer 130 zugeführt. Wie üblich, ist dem jeweiligen Multiplizierer ein Begrenzer nachgeschaltet, damit die Amplituden jeweils wieder in den Sollbereich zurückgeführt werden. Das Ausgangssignal des Begrenzers 231 wird in einem Multiplizierer 234 multipliziert mit einem Signal, welches in ähnlicher Weise gebildet wird wie das Ausgangssignal des Begrenzers 233, nur daß die Signale "Überkreuz" gewonnen werden.

Im weiteren Verlauf des in Figur 13b verstärkt ausgezogenen Signalwegs erfolgt eine nochmalige wiederholte Multiplikation des vorzeichenbehafteten Signals mit aus den autokorrelierten Signalen gebildeten, kreuzkorrelierten Signalen der beiden parallelen Signalwege.

Wie eingangs erläutert, können mit Hilfe des erfindungsgemäßen Verfahrens Störungen durch thermisches Rauschen und durch Fremdsender, die in der Übertragungsstrecke additiv auf die Nutzsignale addiert werden, wirksam unterdrückt werden. Die Multikorrelationsverarbeitung im Empfänger, ermöglicht durch die Mehrfachkodierung oder Mehrfachmodulation ein und desselben Nachrichtensignals, schafft die Möglichkeit einer Signalrückgewinnung auch bei erheblichen Rauschleistungen.

Die Mehrfachkorrelation im Empfänger läßt sich in verschiedenster Weise durchführen. Die oben geschilderten Schaltungen nach den Figuren 8, 9, 11, 13a und 13b betreffen Übertragungsverfahren, bei denen das Nachrichtensignal jeweils gemäß zwei Modulationen im Sender kodiert wird. Verwendet man mehr als zwei Modulationen zum Kodieren des Nachrichtensignals, so ergeben sich im Empfänger entsprechend mehr Möglichkeiten, Zusatzkonventionen zu definieren, also Mehrfachkorrelationsverarbeitungen durchzuführen. Mit zunehmender Anzahl der möglichen Modulationen steigt die Vielfältigkeit der Korrelationsverarbeitungen sprunghaft an. Natürlich gibt es eine Obergrenze bei der Signalaufbereitung im Empfänger, die von der jeweiligen Anwendung des übertragungsverfahrens abhängt, wobei auch zu berücksichtigen ist, daß durch eine höhere Anzahl von Schaltungskomponenten neue Rauschsignale in die Signalpfade gelangen.

Die dargestellten Blockschaltbilder können die vielfältigen Möglichkeiten der Anwendung des Prinzips nur beispielhaft wiedergeben. Der Fachmann kann aus den Blockschaltbildern naturgemäß eine sehr große Anzahl von Varianten ableiten, die mit in der Sende- und Empfangstechnik üblichen Schaltungen in diskreter oder integrierter Form die Mehrfachkorrelierbarkeit der multidimensionalen Signale nutzen können, sofern die hier dargestellten Grundprinzipien berücksichtigt werden, wie sie eingangs definiert wurden.

Wichtig ist ferner, daß die Mehrfachmodulation im Sender statt in Hardware auch durch Synthesizer vorgenommen werden kann, und daß im Empfänger die Nachrichten beispielsweise in der ZF digitalisiert werden können, um dann die Signalanalyse durch DSPs im Softwarebereich mit den geeigneten Strategien der Signalanalyse im Frequenz- und Zeitbereich und den mehrfachen Korrelationen dispersiver, kreuzkorrelativer und autokorrelativer Art im Empfänger optimal durchführen zu können. Die hier dargestellten Systeme als Blockschaltbilder lassen sich auch als Regel zum technischen Handeln im softwareorientierten Signalanalysebereich auffassen, wobei die Trennung zwischen Hardware und Software aus bauteil- und systembezogenen Gründen fließend sein kann.

Das Vorteilhafte an dem durch die Definition beschriebenen Verfahren ist, daß die Mehrfachmodulation und die Mehrfachkorrelation im NF- und/oder im ZF- und/oder im HF-Bereich oder umgekehrt vorgenommen werden können, und daß sie ferner im analogen oder digitalen Bereich oder sinnvoll gemischt erfolgen können. Das gilt sinngemäß für den Sender wie für den Empfänger.

Das erfindungsgemäße Verfahren ermöglicht eine automatische Taktregeneration mittels einer Korrelationsanordnung zweiter Art. Die auf diese Weise erzeugten Taktimpulse weisen jedoch noch leichte zeitliche Schwankungen (Jitter) auf. Die automatische Taktregeneration hat aber den entscheidenden Vorteil, nach wenigen gesendeten Pulsen eine Detektion der Information zu ermöglichen.

Der im wesentlichen vom Rauschen befreite Takt kann beispielsweise einer PLL-Schaltung zugeführt werden, die eventuelle noch verbleibende Jitter beseitigt, wobei das Einschwingen durch die nach dem erfindungsgemäßen Verfahren fast rauschfreien automatisch regenerierten Taktimpulse sehr schnell erfolgt. Der von der PLL-Schaltung kommende Takt kann darüber hinaus dazu benutzt werden, fehlende Taktimpulse zu ersetzen. Da die bei den zuvor dargestellten Ausführungsbeispielen enthaltenen Korrelatoranordnungen zweiter Art (Autokorrelatoren) bei einem zu stark gestörten Eingangsimpuls zu dem Ausfall einer Folge von Taktimpulsen und damit zu einem großen Datenverlust führen könnte, kann eine PLL als "Backup"-Schaltung diese Impulse ersetzen und einen Ausfall der Taktimpulse verhindern, so daß aus der wechselseitigen Ergänzung von PLL und der automatischen Taktreaktion eine erhebliche Verbesserung resultiert. Über die Vorteile der Kombination mit einer PLL hinaus kann ein mitgezogener Takt auch in folgender Form erzeugt werden.

Das von der Antenne 301 kommende Signal wird zunächst in einem Bandpaß 302 gefiltert. Die zu einer anschließenden PLL gehörigen Verstärker 303 und 304 schließen einen Mischer 305 und ein weiteres Bandfilter 306 ein. Dem Mischer wird das Ausgangssignal eines Oszillators 307 zugeführt, so daß das verstärkte Eingangssignal in eine ZF umgesetzt und abschließend verstärkt werden kann. Die enthaltenen Verstärker 303 und 304 werden dabei über die AGC (automatic gain control) so gesteuert, daß das Ausgangssignal innerhalb vorbestimmter Amplitudenwerte verbleibt.

Das so aufbereitete, ankommende Signal wird nun in der erfindungsgemäßen Schaltung so weiter verarbeitet, daß das Rauschen unterdrückt wird und die Information klar zu detektieren ist. Die darin enthaltene automatische Taktregeneration liefert nach einer extrem kurzen Anlaufzeit von nur wenigen Pulsen einen recht gut rekonstruierten Takt, mit dem die Informationen sofort detektiert werden können. Die noch enthaltenen, kleinen zeitlichen Schwankungen in der Pulsfolge des Taktes (Jitter) können restlos eliminiert werden, wenn zusätzlich ein fester, synthetischer Taktgenerator in folgender Weise verwendet wird. Die automatisch erzeugten Taktpulse werden zusammen mit den Informationsbits in einem Speicher 309 zwischengespeichert und über ein Schieberegister 310 und einen Komparator 311 mit einem in einem Musterspeicher 312 enthaltenen synthetischen Taktmuster verglichen. Die gespeicherten Informationsbits können dabei zusätzlich für eine Adressierung genutzt werden, die entscheidet, ob die empfangenen Informationen für den jeweiligen Empfänger bestimmt sind. Nur in diesem Fall muß die Synchronisationseinheit 313 einen optimalen Takt erzeugen. Maßgebend für diese Entscheidung ist das vorher zwischen Sender und Empfänger vereinbarte Synchronisationsmuster, welches in dem Musterspeicher abgelegt ist.

Die Synchronisationseinheit 313 erzeugt den optimalen Takt, wenn die wie vorgenannt vom Taktregenerator erzeugten Impulse mit denen des durch einen Oszillator, der durch einen Quarz 314a gesteuert wird, gebildeten synthetischen Taktgenerators abgeglichen werden. Letzterer weist eine sehr viel höhere Taktfrequenz auf, so daß die Taktimpulse der automatischen Taktregeneration mit einem sehr feinen Raster verglichen werden können. Bezogen auf dieses Raster kann der Jitter erkannt werden und der optimale Takt aus der Mittelung über eine günstig zu wählende Anzahl von Taktimpulsen des automatischen Taktregenerators bestimmt werden. Vorausgesetzt ist hierbei, daß die Periodendauer der gesendeten Impulse bekannt ist.

Auf diese Wiese entscheidet die dargestellte Synchronisationseinheit, welche Impulse des synthetischen Taktgenerators den optimalen Takt bilden. Hierzu ist lediglich ein optimaler Startimpuls auszuwählen und ein Zähler zu starten, der nach der vorgegebenen Periodendauer den nächsten Impuls aussendet.

Aus der sehr schnellen Pulsfolge des synthetischen Taktgenerators wird damit der sehr viel langsamere optimale Takt gebildet, der streng periodisch ist und den enthaltenen Jitter des automatisch, rekonstruierten Taktes vollständig eliminiert. Während der Einrastzeit für den optimalen Takt besitzt die Synchronisationseinheit darüber hinaus die Möglichkeit den automatisch erzeugten Takt zu nutzen, so daß keine Daten verloren gehen. Der von der Synchronisationseinheit erzeugte optimale Takt bietet darüber hinaus einen entscheidenden Vorteil. Sollte der automatisch rekonstruierte Takt durch zu große Störungen ausfallen, so fallen je nach Anzahl der in dem erfindungsgemäßen Verfahren enthaltenen Autokorrelationen, mehrere Taktimpulse aus. Dieser erhebliche Datenverlust wird durch den stabilen, synthetischen Takt verhindert.

Berücksichtigt wurde außerdem die Möglichkeit, daß der empfangene Takt kontinuierlich verzögert wird, z. B. wenn sich der Empfänger bewegt. Aus diesem Grund ist ein ständiger Vergleich zwischen automatischem Taktregenerator und synthetischem Taktgenerator vorgesehen. Unterscheidet sich diese im Mittel voneinander, so ist der synthetische Takt "nachzuführen". Dies ist problemlos möglich, indem die Synchronisationseinheit eine Verschiebung um eine Periode des sehr schnellen Taktgenerators vornimmt, d.h. beispielhaft bestehe der optimale Takt ursprünglich aus den Pulsen 1000, 2000, 3000, ..., so werden nun die Pulse 1001, 2001, 3001,.... ausgewählt. Der auf diese Weise mitgeführte, synthetische Takt ist eine nahezu optimale Rekonstruktion des gesendeten Taktes. Die in der Synchronisationseinheit 313 erzeugten Taktsignale werden über einen Strobe-ImpulsGenerator 315 und ein ODER-Gatter 316 einem Ausgang zugeführt.

Das hier dargestellte Übertragungsverfahren ist auf allen Gebieten der Nachrichtentechnik einsetzbar. Es kann zur Übertragung analoger Signale und digitalisierter Signale eingesetzt werden. Die Erfindung beschränkt sich daher in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Verfahren zur Übertragung einer einem Signal als Nutzsignal aufgeprägten Nachricht von einem Sender (S, 1 bis 14) zu einem Empfänger (E, 15 bis 21),
   **dadurch gekennzeichnet,**
   **daß** dasselbe, in analoger oder digitaler Form zeitlich veränderliche Nutzsignal senderseitig mindestens zwei unterschiedlichen Modulationsverfahren unterworfen wird und diese unterschiedlich modulierten Signalanteile mit dem Ausgangssignal des Senders über einen Übertragungskanal zum Empfänger (15 bis 21) gelangen,
   wobei die mehrfache Modulation desselben Nutzsignals im Sender(S, 1 bis 14) durch mindestens zwei nach unterschiedlichen Modulationsverfahren arbeitende Modulatorelemente (113a, ..., 113n) derart erfolgt, daß die unterschiedlich modulierten Signalanteile als einander mindestens teilweise überlagerte Signalkomponenten des auf den Übertragungskanal ausgesendeten Signals erzeugt werden,
   **daß** empfangsseitig eine Demodulation des aus dem Übertragungskanal aufgenommenen, die mehreren unterschiedlich modulierten Signalkomponenten aufweisenden Signals durch mindestens zwei unterschiedliche Demodulatorelemente (117a, ..., 117n) vorgenommen wird, wobei in einer Korrelationsanordnung erster Art (116), welche Korrelationskriterien benutzt, die parallel erscheinende, auf unterschiedlichen im Sender angewandten Modulationsverfahren basierenden Signalanteile gemeinsam zur Herausherbung des Nutzsignals gegenüber Störanteilen heranziehen, im Zusammenwirken mit einem in der Korrelationsanordnung vorgesehenen Korrelationselement eine relative Überhöhung des Nutzsignals durch Unterdrückung von insoweit unkorrelierten Störsignalen erfolgt, und
   **daß** die relative Überhöhung durch Überlagerung der Ausgangssignale der mindestens zwei unterschiedlichen Demodulatorelemente (117a, ..., 117n) im Korrelationselement erfolgt.

2. Verfahren nach Anspruch 1, **dadurch gekennzeichnet, daß** in mindestens einer nachgeschalteten Verarbeitungsstufe (15, 16, 19) der Empfängerschaltung eine weitere relative Überhöhung des Nutzsignals durch Unterdrückung von unkorrelierten Störsignalen erfolgt.

3. Verfahren nachAnspruch 1 oder Anspruch 2, **dadurch gekennzeichnet, daß** ein Ausgangssignal des Korrelationselements beziehungsweise der Verarbeitungsstufe einer Detektorstufe (63) zugeführt wird, an deren Ausgang das korrelierte Signal gelangt, wenn es mindestens einen vorgegebenen, die verbleibenden Störsignale übertreffenden Schwellen-oder Energiepegel erreicht.

4. Verfahren nach einem der vorhergehenden Ansprüche, **dadurch gekennzeichnet, daß** der Schwellen- oder Energiepegel so gewählt ist, daß ein Nutzsignal nicht ausgegeben wird, wenn ohne vorhandenes Nutzsignal lediglich unkorrelierte Störsignale anliegen.

5. Verfahren nach einem der vorangehenden Ansprüche, **dadurch gekennzeichnet, daß** die unterschiedlichen Modulationsverfahren in einer jeweils unterschiedlichen funktionalen Zuweisung von Amplituden-, unterschiedlichen funktionalen Zuweisung von Amplituden-, Frequenz-, Zeitverzögerungs-, Spektrumspreiz- und/oder Polaritätszuständen bzw. zeitabhängigen Verläufen der vorgenannten Zustände an ein, das Modulatorelement passierendes Signal besteht, wobei ein entsprechendes Demodulationsverfahren die jeweilige Zuweisung rückgängig macht bzw. aufhebt.

6. Verfahren nach einem der vorhergehenden Ansprüche, **dadurch gekennzeichnet, dass** die Modulation und Demodulation mittels unterschiedlicher, jeweils mindestens einem komplementären Modulator-/Demodulatorelementpaar zugeführter Trägersignale erfolgt, welche unterschiedliche Frequenzen oder bei übereinstimmender Frequenz eine unterschiedliche Phasenlage aufweisen.

7. Verfahren nach einem der vorhergehenden Ansprüche, **dadurch gekennzeichnet, daß** in einer Korrelationsanordnung zweiter Art (174 bis 181) nach Art eines Autokorrelators in einem Längszweig (183) der Empfängerschaltung den Eingängen eines Korrelatorelements (181) das Signal am Eingang des Längszweiges sowohl unverzögert als auch durch ein Verzögerungsglied (175) verzögert zugeführt wird, so daß eine Überhöhung des Nutzsignals durch Unterdrückung von unkorrelierten Störsignalen erfolgt.

8. Verfahren nach Anspruch 7, **dadurch gekennzeichnet, daß** durch die Korrelationsanordnung zweiter Art (174 bis 181) eine Überhöhung einer im ausgesendeten Signal enthaltenen repetitiven Signalkomponente gegenüber unkorrelierten Störsignalanteilen durch multiplikative Verknüpfung hervorgerufen wird sowie ein Taktsignal oder ein zum Erzeugen einer Vorzeicheninformation dienender Torimpuls generiert wird.

9. Verfahren nachAnspruch 8, **gekennzeichnet durch** eine mehrdimensionale Dekodierung einer Nachricht **durch** zwei Dispersionsfilter (41, 42, 49, 50), eine kohärente Produktdemodulation und **durch** eine nachfolgende autokorrelative Taktgeneration eines Gateimpulses und nachfolgende Multiplikation des Gateimpulses mit der Vorzeicheninformation.

10. Verfahren nach einem der vorhergehenden Ansprüche, **gekennzeichnet durch** die mehrdimensionale Dekodierung einer Nachricht **durch** zwei Dispersionsfilter (191, 192) mit um 90° versetzten Ausgängen eine filterlose kohärente vorzeichengerechte Produktdemodulation und eine Korrelation durch Quadrierung.

11. Verfahren nach einem der vorhergehenden Ansprüche, **gekennzeichnet durch** eine mehrfache Dekodierung einer Nachricht **durch** zwei Dispersionsfilter (191, 192) mit um 90° versetzten Ausgängen und eine Quadrierung mittels einer Korrelationsanordnung erster und/oder zweiter Art.

12. Verfahren nach einem der vorangehenden Ansprüche, **dadurch gekennzeichnet, daß** in der Senderschaltung (S) winkelmodulierte Impulse mit während der Impulsdauer zeitlich entgegengesetzt erfolgender Winkelmodulation erzeugt werden, die mittels eines ersten Korrelationselements (8, 9) jeweils paarweise zu einem Teilsignal (2g, 2h) überlagert werden..

13. Verfahren nach einem der vorangehenden Ansprüche, **dadurch gekennzeichnet, daß** die zu dem Empfänger übertragenen Teilsignale (2g, 2h) eine diesen durch ein Modulatorelement aufgeprägte Information tragen, daß die Teilsignale (2g, 2h) im Empfänger durch zwei oder mehrere, paarweise parallel geschaltete Dispersionsfilter (34, 35, 41, 42, 49, 50) mit frequenzabhängiger Gruppenlaufzeitcharakteristik gefiltert werden, wobei die frequenzabhängige Gruppenlauf-Zeitcharakteristik der beiden Dispersionsfilter (34, 35, 41, 42, 49, 50) an die Winkelmodulation jeweils eines der beiden in ihrer Überlagerung das Teilsignal (2g, 2h) bildenden Impulse (2e, 2f) derart angepaßt ist, daß am Ausgang der beiden Dispersionsfilter eines Paares (34, 35, 41, 42, 49, 50) jeweils ein kombiniertes Signal (2k, 21) erscheint, das aus einem zeitlich komprimierten Impuls mit entsprechend erhöhter Amplitude und einem zeitlich expandierten Impuls mit entsprechend verringerter Amplitude besteht.

14. Verfahren nach Anspruch 13, **dadurch gekennzeichnet, daß** die an den Ausgängen der beiden empfängerseitig vorgesehenen Dispersionfilter (34, 35, 41, 42, 49, 50) erscheinenden kombinierten Signale (2k, 21) mittels eines weiteren Korrelationselements (36, 43, 46, 51, 52, 61) zusammengeführt und einer Kreuzkorrelation unterzogen werden.

15. Verfahren nach einem der vorangehenden Ansprüche, **dadurch gekennzeichnet, daß** Faltsignale als Teilsignale (2g, 2h) senderseitig von dem ersten Korrelationselement (8, 9) durch Addition oder Subtraktion von Paaren winkelmodulierter Impulse (2e, 2f) mit zeitlich entgegengesetztem Verlauf erzeugt werden.

16. Verfahren nach einem der Ansprüche 12 bis 15, **dadurch gekennzeichnet, daß** bei einer zu übertragenden binären Impulsfolge die Teilsignale (2g, 2h) senderseitig jeweils in Abhängigkeit von dem binären Wert der aufzuprägenden Nachricht entweder durch Addition oder durch Subtraktion zweier zeitlich entgegengesetzt winkelmodulierter Impulse (2e, 2f) erzeugt werden.

**17.** Senderschaltung zur Durchführung des Verfahrens nach Anspruch 1, ausgebildet zur Übertragung einer einem Signal als Nutzsignal aufgeprägten Nachricht zu einem Empfänger (15 bis 21),
**dadurch gekennzeichnet,**
**daß** dasselbe in analoger oder digitaler Form zeitlich veränderliche Nutzsignal mehreren nach unterschiedlichen Modulationsverfahren arbeitenden Modulatorelementen (113a,..., 113n) zugeführt ist und
**daß** die Modulatorelemente zu einer mehrfachen Modulation desselben Nutzsignals für eine Erzeugung unterschiedlich modulierter Signalanteile ausgebildet sind,
und **daß** den Modulatorelementen ein Signalkonzentrator (114) zur mindestens teilweisen Überlagerung der unterschiedlich modulierten Signalanteile nachgeschaltet ist, derart, daß die unterschiedlich modulierten Signalanteile einander mindestens teilweise überlagerte Signalkomponenten des auf einen Übertragungskanal ausgesendeten Signals bilden.

**18.** Senderschaltung nach Anspruch 17, **dadurch gekennzeichnet, daß** die Modulatorelemente in parallelen Zweigen der Senderschaltung vorgesehen sind, denen eingangsseitig das Nutzsignal zugeführt ist und die ausgebildet sind, ausgangsseitig die unterschiedlich modulierten Signalkomponenten über eine den Signalkonzentrator bildende Summierungs- oder Überlagerungsschaltung auf den Übertragungskanal bzw. eine nachgeschaltete Verarbeitungsstufe abzugeben.

**19.** Empfängerschaltung (E, 15 bis 21) zur Durchführung des Verfahrens nach Anspruch 1,
mit mindestens zwei nach unterschiedlichen Modulationsverfahren arbeitenden Demodulatorelementen (117a,..., 117n; 20, 21), die ausgebildet sind, eine Demodulation eines aus einem Übertragungskanal aufgenommenen Signals vorzunehmen,
**gekennzeichnet durch** eine Korrelationsanordnung erster Art (116, 33), welcher die Ausgangssignale der Demodulatorelemente zugeführt sind und die zur Benutzung von Korrelationskriterien ausgebildet ist, die parallel erscheinende, auf unterschiedlichen im Sender angewandten Modulationsverfahren basierende Signalanteile gemeinsam zur Heraushe bung des Nutzsignals gegenüber Störanteilen heranziehen, derart, dass am Ausgang eines in der Korrelationsanordnung erster Art (33) vorgesehenen Korrelationselements (26) eine relative Überhöhung des Nutzsignals **durch** Unterdrückung von unkorrelierten Störsignalen vorliegt, wobei die relative Überhöhung **durch** Überlagerung der Ausgangssignale der mindestens zwei unterschiedlichen Demodulatorelemente (20, 21) im Korrelationselement (26) erfolgt.

**20.** Empfängerschaltung nach Anspruch 19, **dadurch gekennzeichnet, daß** die Demodulatorelemente (20, 21; 49, 50) in parallelen Längszweigen der Empfängerschaltung angeordnet sind, wobei mindestens ein Korrelationselement (26; 51,52) ein zwei Längszweige in Querrichtung überbrückendes Schaltungsglied bildet, dem die Ausgangssignale der Demodulatorelemente (20, 21; 49, 50) als Eingangssignale zugeführt sind und welches seinerseits ausgebildet ist, ein Ausgangssignal an eine nachgeschaltete Verarbeitungsstufe (34, 35; 53,54) der Empfängerschaltung abzugeben.

**21.** Empfängerschaltung nach Anspruch 19 oder 20, **dadurch gekennzeichnet, daß** in einer der Korrelationsanordnung erster Art nachgeschalteten Korrelationsanordnung zweiter Art (183) nach Art eines Autokorrelators ein Korrelatorelement (176, 179) in einem Längszweig der Empfängerschaltung vorgesehen ist, wobei den Eingängen des Korrelatorelements das Signal am Eingang des Längszweiges sowohl unverzögert als auch durch ein Verzögerungsglied (175, 178) verzögert zugeführt ist, so daß eine Überhöhung des Nutzsignals durch Unterdrückung von unkorrelierten Störsignalen erfolgt.

**22.** Empfängerschaltung nach Anspruch 21, **dadurch gekennzeichnet, daß** die Korrelationsanordnung zweiter Art (183) ausgebildet ist, eine Überhöhung einer im ausgesendeten Signal enthaltenen repetitiven Signalkomponente gegenüber unkorrelierten Störsignalanteilen durch multiplikative Verknüpfung hervorzurufen.

**23.** Empfängerschaltung nach Anspruch 21 oder 22, **dadurch gekennzeichnet, daß** die Korrelationsanordnung zweiter Art (183) ausgebildet ist, ein Taktsignal oder einen zum Erzeugen einer Vorzeicheninformation dienenden Torimpuls zu generieren.

**24.** Empfängerschaltung nach Anspruch 23, **dadurch gekennzeichnet, daß** ein durch einzelne Taktimpulse unmittelbar nachstellbarer Taktoszillator vorgesehen ist, welcher ausgebildet ist, eine Taktrate auch bei Ausfall von Taktimpulsen aufrechtzuerhalten.

**25.** Empfängerschaltung nach einem der Ansprüche 21 bis 24, **dadurch gekennzeichnet, daß** Korrelationsanordnungen erster und/oder zweiter Art derart kaskadiert sind, daß ein Ausgangssignal einer vorangehenden Korrelationsanordnung das Eingangssignal oder eines der Eingangssignale einer nachfolgenden Korrelationsanordnung bildet.

26. Empfängerschaltung nach einem der Ansprüche 21 bis 25, **dadurch gekennzeichnet, daß** das Ausgangssignal einer Korrelationsanordnung zweiter Art (183a), deren Eingänge an jeweils einen Ausgang von aufeinanderfolgender Verarbeitungsstufen in unterschiedlichen Zweigen der Empfängerschaltung angeschlossen sind, mit dem Ausgangssignal einer weiteren Korrelationsanordnung zusammengeführt ist, deren Eingänge an jeweils einen Ausgang der aufeinanderfolgenden Verarbeitungsstufen den unterschiedlichen Zweigen der Empfängerschaltung in vertauschter Zuordnung zu den aufeinanderfolgenden Verarbeitungsstufen angeschlossen sind.

27. Empfängerschaltung nach einem der Ansprüche 19 bis 26, **dadurch gekennzeichnet, daß** ein Korrelatorelement eine Summierungs-(17), Differenzbildungs-(18), Multiplikations-(19) oder Quadrierungsschaltung aufweist.

28. Empfängerschaltung nach Anspruch 26, **dadurch gekennzeichnet, daß** die Multiplikationsschaltung als Vierquadrantenmultiplizierer ausgestaltet ist.

29. Empfängerschaltung nach einem der Ansprüche 19 bis 28, **dadurch gekennzeichnet, daß** das empfangene Signal in zwei parallele Zweige aufgeteilt ist und in beiden Zweigen jeweils zwei in Reihe geschaltete Dispersionsfilter (20, 24 bzw. 21. 25) zur Filterung des Signals vorgesehen sind, wobei die in Reihe geschalteten Dispersionsfilter (20, 24 bzw. 21, 25) ein zueinander inverses frequenzabhängiges Laufzeitverhalten aufweisen.

30. Empfängerschaltung nach Anspruch 29, **gekennzeichnet durch** ein jeweils ein zwischen den beiden Dispersionsfiltern (20, 24 bzw. 21, 25) angeordnetes steuerbares Schaltelement (22, 23) oder einen Multiplizierer (28, 29), das bzw. das ausgebildet ist den Signalfluß im jeweiligen Zweig jeweils im wesentlichen in der Mitte jedes Impulses zu unterbrechen oder freizuschalten.

31. Nachrichtenübertragungsanordnung zur Durchführung des Verfahrens nach Anspruch 1, mit einer Senderschaltung nach Anspruch 17 und einer Empfängerschaltung nach Anspruch 19.

32. Nachrichtenübertragungsanordnung nach Anspruch 31, **dadurch gekennzeichnet, daß** die Modulatorelemente (113a, ..., 113n) der Senderschaltung (S) invers zu den Demodulatorelementen (117a, ..., 117n) der Empfängerschaltung (E) angeordnet sind, wobei in im wesentlichen spiegelbildlicher Anordnung jeweils in ihrer Funktion entgegengesetzte Modulatorelemente einerseits und Demodulatorelemente andererseits in der Sender- bzw. Empfängerschaltung vorgesehen sind.

33. Nachrichtenübertragungsanordnung nach Anspruch 31 oder 32, die ausgebildet ist, die Modulation und Demodulation mittels unterschiedlicher, jeweils mindestens einem komplementären Modulator-/Demodulatorelementpaar zugeführter Trägersignale durchzuführen, welche unterschiedliche Frequenzen oder bei übereinstimmender Frequenz eine unterschiedliche Phasenlage aufweisen.

34. Nachrichtenübertragungsanordnung nach einem der Ansprüche 31 bis 33, **dadurch gekennzeichnet, daß** als Modulatorelemente in der Senderschaltung eine Anzahl n Paare komplementärer Dispersionsfilter und in der Empfängerschaltung n Paare entsprechender komplementärer Dispersionsfilter vorgesehen sind.

**Revendications**

1. Procédé de transmission d'un message superposé à un signal tenant lieu de signal utile d'un émetteur (S, 1 à 14) vers un récepteur (E, 15 à 21),
**caractérisé en ce que** le même signal utile, pouvant être modifié dans le temps sous forme analogue ou numérique, est soumis côté émetteur à au moins deux procédés de modulation différents, ces deux portions de signaux de modulation différente parvenant au récepteur (15 à 21) par l'intermédiaire d'un canal de transmission, ensemble avec le signal de sortie de l'émetteur,
la modulation multiple du même signal utile ayant lieu dans l'émetteur (S, 1 à 14), au moyen d'au moins deux éléments modulateurs (113a, ... ,113n), de manière à ce que les portions de signaux de modulation différente puissent être générés, au moins partiellement, en tant que composants de signaux superposés les uns aux autres du signal transmis sur le canal de transmission, et
**en ce que** côté récepteur, une démodulation du signal reçu depuis le canal de transmission et présentant plusieurs composants de signaux de modulation différente, est effectuée par au moins deux éléments de démodulation différents (117a, ..., 117n), un relèvement relatif du signal utile par suppression de signaux parasites, non corrélés jusque là, ayant lieu, faisant appel en commun, dans un dispositif de corrélation de première catégorie (116) utilisant des critères de corrélation, aux portions de signaux apparemment parallèles, basées sur des procédés de modulation différents trouvant application dans l'émetteur, afin de faire ressortir le signal utile par rapport aux portions parasites, en collaboration avec un élément de corrélation prévu dans le dispositif de corrélation, et

**en ce que** le relèvement relatif par superposition des signaux de sortie de ces au moins deux éléments démodulateurs différents (117a, ..., 117n) aient lieu dans l'élément de corrélation.

2. Procédé selon la revendication 1, **caractérisé en ce que** dans au moins un échelon de traitement (15, 16, 19) du circuit récepteur situé en aval, un relèvement relatif supplémentaire du signal utile par suppression de signaux parasites non corrélés a lieu.

3. Procédé selon la revendication 1 ou 2, **caractérisé en ce qu'**un signal de sortie de l'élément de corrélation, ou respectivement de l'échelon de traitement, est introduit dans un échelon de détection (63), à la sortie duquel arrive le signal corrélé lorsqu'il atteint au moins une valeur seuil ou niveau énergétique donné à l'avance, supérieur aux signaux parasites restants.

4. Procédé selon l'une quelconque des revendications précédentes, **caractérisé en ce que** la valeur seuil ou le niveau énergétique est choisi de manière à ce qu'un signal utile ne soit pas émis, lorsque, en l'absence de signal utile, seuls des signaux parasitaires sont présents.

5. Procédé selon l'une quelconque des revendications précédentes, **caractérisé en ce que** les procédés de modulation divers consistent dans chaque cas en une attribution fonctionnelle différente d'états d'amplitudes, de fréquence, de temporisation, d'élargissement spectral et/ou de polarisation ou encore d'évolution dans le temps desdits états à un signal passant par l'élément de modulation, un procédé de démodulation correspondant annulant ou levant l'attribution correspondante.

6. Procédé selon l'une quelconque des revendications précédentes, **caractérisé en ce que** la modulation ou démodulation est effectuée au moyen de signaux porteurs différents introduits dans chaque cas dans au moins une paire d'éléments modulateurs/démodulateurs complémentaires, présentant des fréquences diverses ou, en cas de coïncidence des fréquences, une position de phase différente.

7. Procédé selon l'une quelconque des revendications précédentes, **caractérisé en ce que** dans un dispositif de corrélation de deuxième catégorie (174 à 181), et selon le comportement d'un autocorrélateur, pour une branche longitudinale (183) du circuit récepteur, le signal à l'entrée de la branche longitudinale est conduit aux entrées d'un élément de corrélation (181), aussi bien instantanément que retardé par un temporisateur (175), de sorte qu'il s'en suit un relèvement du signal utile par suppression de signaux parasites non corrélés.

8. Procédé selon la revendication 7, **caractérisé en ce que**, dû au dispositif de corrélation de deuxième catégorie (174 à 181), il est induit, par une combinaison multiplicative, un relèvement d'un composant de signal contenu dans le signal émis, répétitif par rapport aux portions de signal non corrélées, en même temps qu'il est généré une impulsion d'horloge ou une impulsion de déclenchement servant une information concernant le signe.

9. Procédé selon la revendication 8, **caractérisé par** un décodage pluridimensionnel d'un message au moyen de deux filtres dispersifs (41, 42, 49, 50) et par une démodulation de produit cohérente, suivis d'une génération autocorrélative d'une impulsion de grille, elle même suivie d'une multiplication de l'impulsion de grille par l'information concernant le signe.

10. Procédé selon l'une quelconque des revendications précédentes, **caractérisé par** la décodage pluridimensionnel d'un message au moyen de deux filtres dispersifs (191, 192) avec des sorties décalées de 90°, par une démodulation de produit sans filtre, cohérente et respectant le signe, ainsi que par une corrélation par élévation au carré.

11. Procédé selon l'une quelconque des revendications précédentes, **caractérisé par** le décodage pluridimensionnel d'un message au moyen de deux filtres dispersifs (191, 192), avec des sorties décalées de 90° et une élévation au carré au moyen d'un dispositif de corrélation de première et/ou de deuxième catégorie.

12. Procédé selon l'une quelconque des revendications précédentes, **caractérisé en ce qu'**il est généré dans le circuit émetteur (S) des impulsions à modulation angulaire, ladite modulation angulaire ayant lieu durant la durée de l'impulsion de façon inverse dans le temps, lesdites impulsions étant superposées au moins par paires à un signal partiel (2g, 2h) au moyen d'un premier élément de corrélation (8, 9).

13. Procédé selon l'une quelconque des revendications précédentes, **caractérisé en ce que** les signaux partiels (2g, 2h) transmis au récepteur sont porteurs d'une information superposée audit signal par un élément modulateur, **en ce que** les signaux partiels (2g, 2h) sont filtrés avec une caractéristique de temps de propagation de groupe dépendant de la fréquence dans le récepteur, au moyen de deux ou de plusieurs filtres dispersifs (34, 35, 41, 42, 49, 50) mis en parallèles par paires, ladite caractéristique de temps de propagation de groupe dépendant de la fréquence des deux filtres dispersifs (34, 35, 41, 42, 49, 50) étant, dans chaque cas, adaptée de telle manière à la modulation angulaire d'une des deux impulsions (2e, 2f) formant le signal partiel (2g, 2h) lors de leur superposition, qu'il apparaît dans chaque cas un signal combiné (2k, 2l) à la sortie des deux filtres dispersifs d'une paire (34, 35, 41, 42, 49, 50), ledit signal étant constitué par une impulsion comprimée dans le temps, présentant une amplitude élevée en conséquence, ainsi qu'une impulsion présentant une expansion dans le temps et une amplitude diminuée en conséquence.

14. Procédé selon la revendication 13, **caractérisé en ce que** les signaux combinés (2k, 2l) apparaissant aux sorties des filtres dispersifs (34, 35, 41, 42, 49, 50) prévus côté récepteur, sont réunis au moyen d'un élément de corrélation supplémentaire (36, 43, 46, 51, 52, 61) et soumis à une corrélation croisée.

15. Procédé selon l'une quelconque des revendications précédentes, **caractérisé en ce que** des signaux convolutifs sont générés côté émetteur en tant que signaux partiels (2g, 2h) par le premier élément de corrélation (8, 9), par addition ou soustraction de paires d'impulsions (2e, 2f) à modulation angulaire et à évolution opposée dans le temps.

16. Procédé selon l'une quelconque des revendications 12 à 15, **caractérisé en ce que** pour une succession d'impulsions binaires devant être transmises, les signaux partiels (2g, 2h) sont générés côté émetteur, dans chaque cas en fonction de la valeur binaire du message à superposer, soit par addition ou par soustraction de deux impulsions (2e, 2f) modulées angulairement et opposées dans le temps.

17. Circuit émetteur permettant la réalisation du procédé selon la revendication 1, conçu pour la transmission vers un récepteur (15 à 21) d'un message superposé en tant que signal utile à un signal,
**caractérisé en ce que** le même signal utile, variable dans le temps sous forme numérique ou analogue, est ajouté à une pluralité d'éléments de modulation (113a, ..., 113n) travaillant selon divers procédés de modulation,
**en ce que** les éléments de modulation sont conçus pour une modulation multiple du même signal utile, afin de générer des portions de signaux à modulation différente et,
**en ce qu'**un concentrateur de signaux (114) assurant au moins partiellement la superposition des différentes portions de signaux à modulation différente est placé en aval des éléments de modulation, de sorte que les portions de signaux à modulation diverse forment des composants de signaux au moins partiellement superposés entre eux du signal transmis sur un canal émetteur.

18. Circuit émetteur selon la revendication 17, **caractérisé en ce que** les éléments modulateurs sont prévus dans des branches parallèles dudit circuit émetteur, auxquelles le signal utile est ajouté côté entrée, lesdites branches étant conçues de manière à délivrer les composants de signaux de modulation différente par l'intermédiaire d'un circuit de sommation ou de superposition formant le concentrateur de signaux, et ce sur le canal émetteur ou sur un échelon de traitement placé en aval.

19. Circuit récepteur (E, 15 à 21) permettant la réalisation du procédé selon la revendication 1,
présentant au moins deux éléments démodulateurs (117a, ..., 117n; 20, 21) travaillant selon des procédés de modulation différents, conçus de manière à démoduler un signal reçu d'un canal de transmission,
**caractérisé par** un dispositif de corrélation de première catégorie (116, 33), auquel sont conduits les signaux de sortie des éléments démodulateurs, et étant conçu de manière à utiliser des critères de corrélation faisant appel en commun à des portions de signaux apparemment parallèles, basées sur des procédés de modulation différents trouvant application dans l'émetteur, afin de faire ressortir le signal utile par rapport à des portions parasitaires, de sorte qu'à la sortie d'un élément de corrélation (26) prévu dans le dispositif de corrélation de première catégorie (33), il y ait un relèvement relatif du signal utile par suppression de signaux parasites non corrélés, le relèvement relatif ayant lieu par superposition des signaux de sortie des au moins deux éléments de démodulation différents (20, 21) dans l'élément de corrélation (26).

**20.** Circuit récepteur selon la revendication 19, **caractérisé en ce que** les éléments de démodulation (20, 21; 49, 50) sont disposés dans des branches longitudinales parallèles dudit circuit récepteur, au moins un élément de corrélation (26; 51, 52) formant un élément du circuit shuntant en direction transversale deux branches longitudinales, auquel les signaux de sortie des éléments de démodulation (20, 21; 49, 50) sont conduits en tant que signaux d'entrée et étant, quant à lui, conçu de manière à céder un signal de sortie à une étape de traitement (34, 35; 53, 54) du circuit récepteur située en aval.

**21.** Circuit récepteur selon l'une quelconque des revendications 19 ou 20, **caractérisé en ce qu'**un élément corrélateur (176, 179) est prévu, à la manière d'un autocorrélateur, dans une branche longitudinale du circuit récepteur, dans un dispositif de corrélation de deuxième catégorie (183) situé en aval d'un dispositif de corrélation de première catégorie, le signal à l'entrée de la branche longitudinale étant conduit aux entrées de l'élément corrélateur, aussi bien instantanément que retardé par un temporisateur (175, 178), de sorte qu'il s'en suit un relèvement du signal utile par suppression de signaux parasitaires non corrélés

**22.** Circuit récepteur selon la revendication 21, **caractérisé en ce que** le dispositif de corrélation de deuxième catégorie (183) est conçu de manière à produire un relèvement d'un composant de signal répétitif par rapport à des portions de signaux non corrélées, ledit composant étant contenu dans le signal émis, par l'intermédiaire d'une liaison multiplicative.

**23.** Circuit récepteur selon l'une quelconque des revendications 21 ou 22, **caractérisé en ce** le dispositif de corrélation de deuxième catégorie (183) est conçu de manière à générer une impulsion d'horloge ou une impulsion de déclenchement destinée à générer une information concernant le signe.

**24.** Circuit récepteur selon la revendication 23, **caractérisé en ce qu'**il est prévu un oscillateur de fréquence d'horloge pouvant être réajusté immédiatement par des impulsions d'horloge individuelles, conçu de manière à maintenir un rythme d'horloge même an l'absence d'impulsions d'horloge.

**25.** Circuit récepteur selon l'une quelconque des revendications 21 à 24, **caractérisé en ce** les dispositifs de corrélation de première et/ou deuxième catégorie sont cascadés de telle manière, qu'un signal de sortie d'un dispositif de corrélation situé en amont forme le signal d'entrée ou bien l'un des signaux d'entrée d'un dispositif de corrélation situé en aval.

**26.** Circuit récepteur selon l'une quelconque des revendications 21 à 25, **caractérisé en ce que** le signal de sortie d'un dispositif de corrélation de deuxième catégorie (183a), dont les entrées sont reliées dans chaque cas à une sortie d'étapes de traitement consécutives dans différentes branches du circuit récepteur, est réuni au signal de sortie d'un autre dispositif de corrélation, dont les entrées sont reliées dans chaque cas, en au moins une sortie des étapes de traitement consécutives, aux différentes branches du circuit récepteur, en ordre interverti par rapport auxdites étapes de traitement consécutives.

**27.** Circuit récepteur selon l'une quelconque des revendications 19 à 26, **caractérisé en ce qu'**un élément corrélateur présente un circuit de sommation (17), de soustraction (18), de multiplication (19) ou d'élévation au carré.

**28.** Circuit récepteur selon la revendication 26, **caractérisé en ce que** le circuit multiplicateur est conçu en tant que circuit multiplicateur à quatre quadrants.

**29.** Circuit récepteur selon l'une quelconque des revendications 19 à 28, **caractérisé en ce que** le signal de réception est partagé en deux branches parallèles, deux filtres dispersifs (20, 24 ou 21, 25) filtrant le signal et disposés en série étant prévus dans chacune des deux branches, lesdits filtres dispersifs (20, 24 ou 21, 25) disposés en série présentant l'un par rapport à l'autre des comportements de temps de propagation inverses.

**30.** Circuit récepteur selon la revendication 29, **caractérisé par** un élément logique (22, 23) réglable disposé entre les deux filtres dispersifs (20, 24 ou 21, 25), ou par un multiplieur (28, 29) conçu pour interrompre ou autoriser dans chaque cas le passage du flux du signal dans la branche correspondante, et ce essentiellement au centre de chaque impulsion.

**31.** Dispositif de transmission de messages servant à réaliser le procédé selon la revendication 1, avec un circuit émetteur selon la revendication 17 et un circuit récepteur selon la revendication 19.

**32.** Dispositif de transmission de messages selon la revendication 31, **caractérisé en ce que** les éléments modulateurs (113a, ..., 113n) du circuit émetteur (S) sont disposés en sens inverse aux éléments démodulateurs (117a, ..., 117n) du circuit récepteur (E), des éléments modulateurs disposés essentiellement de manière à former une image réfléchie, et dont les fonctions sont opposées entre elles, étant prévus d'une part, et d'autre part, des éléments démodulateurs étant prévus respectivement dans le circuit émetteur et dans le circuit récepteur.

**33.** Dispositif de transmission de messages selon l'une des revendications 31 ou 32, conçu pour réaliser la modulation et la démodulation au moyen de signaux porteurs différents, lesdits signaux étant conduits vers au moins une paire d'éléments modulateur/démodulateur complémentaires, présentant des fréquences différentes ou, en cas de coïncidence des fréquences, une position de phase différente.

**34.** Dispositif de transmission de messages selon l'une des revendications 31 à 33, **caractérisé en ce qu'**un nombre n de paires de filtres dispersifs complémentaires sont prévus en tant qu'éléments modulateurs dans le circuit émetteur, n paires de filtres dispersifs complémentaires étant prévus dans le circuit récepteur.

**Claims**

**1.** A method of transmitting a message impressed on a signal as a useful signal from a transmitter (S, 1 to 14) to a receiver (E, 15 to 21),
**characterised in that**
the same useful signal which is variable in respect of time in analog or digital form is subjected at the transmitter end to at least two different modulation processes and said differently modulated signal portions pass with the output signal of the transmitter by way of a transmission channel to the receiver (15 to 21),
wherein multiple modulation of the same useful signal is effected in the transmitter (S, 1 to 14) by at least two modulator elements (113a, ..., 113n) operating in accordance with different modulation processes in such a way that the differently modulated signal portions are produced as signal components, which are at least partially superimposed on each other, of the signal emitted on to the transmission channel,
at the receiver end demodulation of the signal received from the transmission channel and having the plurality of differently modulated signal components is effected by at least two different demodulator elements (117a, .., 117n), wherein in a correlation arrangement (116) of a first kind which uses correlation criteria which employ signal portions appearing in parallel and based on different modulation processes applied in the transmitter jointly for bringing out the useful signal in relation to interference components, in conjunction with a correlation element provided in the correlation arrangement, a relative rise in the useful signal is effected by suppression of interference signals which are uncorrelated **in that** respect, and
the relative rise is effected by superimposition of the output signals of the at least two different demodulator elements (117a, .., 117n) in the correlation element.

**2.** A method according to claim 1 **characterised in that** a further relative rise in the useful signal is effected by suppression of uncorrelated interference signals in at least one downstream-connected processing stage (15, 16, 19) of the receiver circuit.

**3.** A method according to claim 1 or claim 2 **characterised in that** an output signal of the correlation element or the processing stage is fed to a detector stage (63), to the output of which the correlated signal passes when it reaches at least one predetermined threshold or energy level exceeding the remaining interference signals.

**4.** A method according to one of the preceding claims **characterised in that** the threshold or energy level is so selected that a useful signal is not outputted when only uncorrelated interference signals occur without a useful signal being present.

**5.** A method according to one of the preceding claims **characterised in that** the different modulation processes involve a respectively different functional allocation of amplitude, frequency, time-delay, spectrum spread and/or polarity states or time-dependent variations in the aforementioned states to a signal passing the modulator element, wherein a corresponding demodulation process reverses or cancels the respective allocation.

**6.** A method according to one of the preceding claims **characterised in that** modulation and demodulation is effected by means of different carrier signals respectively fed to at least one complementary modulator/demodulator pair, which signals involve different frequencies or with the same frequency a different phase position.

**7.** A method according to one of the preceding claims **characterised in that** in a correlation arrangement (174 to 181) of a second kind in the manner of an autorelater in a longitudinal branch (183) of the receiver circuit the signal is fed to the inputs of a correlator element (181) at the input of the longitudinal branch both in undelayed relationship and also delayed by a delay member (175) so that a rise in the useful signal is effected by suppression of uncorrelated interference signals.

**8.** A method according to claim 7 **characterised in that** a rise in the repetitive signal component contained in the emitted signal in relation to uncorrelated interference signal portions is caused by multiplicative linking by the correlation arrangement (174 to 181) of a second kind and a clock signal or a gate pulse which serves to produce an item of sign information is generated.

**9.** A method according to claim 8 **characterised by** multi-dimensional decoding of a message by two dispersion filters (41, 42, 49, 50), coherent product demodulation and by subsequent autocorrelative clock generation of a gate pulse and subsequent multiplication of the gate pulse by the item of sign information.

**10.** A method according to one of the preceding claims **characterised by** multi-dimensional decoding of a message by two dispersion filters (191, 192) with outputs displaced through 90°, filter-less coherent product demodulation with correct sign and correlation by squaring.

**11.** A method according to one of the preceding claims **characterised by** multiple decoding of a message by two dispersion filters (191, 192) with outputs displaced through 90° and squaring by means a correlation arrangement of first and/or second kind.

**12.** A method according to one of the preceding claims **characterised in that** pulses which are angle-modulated in the transmitter circuit (S) are produced with angle modulation effected in opposite relationship in respect of time during the pulse duration, which are respectively superimposed in pairs to afford a partial signal (2g, 1h) by means of a first correlation element (8, 9).

**13.** A method according to one of the preceding claims **characterised in that** the partial signals (2g, 2h) transmitted to the receiver carry information impressed thereon by a modulator element, that the partial signals (2g, 1h) are filtered in the receiver by two or more dispersion filters (34, 35, 41, 42, 49, 50) connected in paired parallel relationship and having a frequency-dependent group delay characteristic, wherein the frequency-dependent group delay characteristic of the two dispersion filters (34, 35, 41, 42, 49, 50) is adapted to the angle modulation of a respective one of the two pulses (2e, 2f) forming the partial signal (2g, 2h) in their superimposition, in such a way that a respective combined signal (2k, 2l) appears at the output of the two dispersion filters of a pair (34, 35, 41, 42, 49, 50), which signal comprises a time-compressed pulse of correspondingly increased amplitude and a time-expanded pulse of correspondingly reduced amplitude.

**14.** A method according to claim 13 **characterised in that** the combined signals (2k, 2l) appearing at the outputs of the two dispersion filters (34, 35, 41, 42, 49, 50) provided at the receiver end are brought together by means of a further correlation element (36, 43, 46, 51, 52, 61) and subjected to cross-correlation.

**15.** A method according to one of the preceding claims **characterised in that** folded signals are produced as partial signals (2g, 2h) at the transmitter end by the first correlation element (8, 9) by addition or subtraction of pairs of angle-modulated pulses (2e, 2f) of opposite configuration in respect of time.

**16.** A method according to one of claims 12 to 15 **characterised in that** in a binary pulse sequence to be transmitted the partial signals (2g, 2h) are respectively produced at the transmitter end in dependence on the binary value of the message to be impressed either by addition or by subtraction of two pulses (2e, 2f) which are angle-modulated in opposite relationship in respect of time.

**17.** A transmitter circuit for carrying out the method according to claim 1 for the transmission of a message impressed on a signal as a useful signal to a receiver (15 to 21),
**characterised in that**
the same useful signal which is variable in respect of time in analog or digital form is passed to a plurality of modulator elements (113a, .., 113n) operating in accordance with different modulation processes, and
the modulator elements are adapted for multiple modulation of the same useful signal for a production of differently modulated signal portions, and

connected downstream of the modulator elements is a signal concentrator (114) for at least partial superimposition of the differently modulated signal portions, in such a way that the differently modulated signal portions form signal components, which are at least partially superimposed on each other, of the signal emitted on to a transmission channel.

18. A transmitter circuit according to claim 17 **characterised in that** the modulator elements are provided in parallel branches of the transmitter circuit, to which the useful signal is passed at the input side and which are adapted at the output side to deliver the differently modulated signal components by way of a summing or superimposition circuit forming the signal concentrator on to the transmission channel or a downstream-connected processing stage.

19. A receiver circuit (E, 15 to 21) for carrying out the method according to claim 1,
comprising at least two demodulator elements (117a, .., 117n; 20, 21) which are operate in accordance with different modulation processes and which are adapted to implement demodulation of a signal received from a transmission channel,
**characterised by** a correlation arrangement (116, 33) of a first kind to which the output signals of the demodulator elements are passed and which is adapted to use correlation criteria which employ signal portions appearing in parallel and based on different modulation processes applied in the transmitter jointly for bringing out the useful signal in relation to interference components, in such a way that a relative rise in the useful signal occurs due to suppression of uncorrelated interference signals at the output of a correlation element (26) provided in the correlation arrangement (33) of a first kind, wherein the relative rise is effected by superimposition of the output signals of the at least two different demodulator elements (20, 21) in the correlation element (26).

20. A receiver circuit according to claim 19 **characterised in that** the demodulator elements (20, 21; 49, 50) are arranged in parallel longitudinal branches of the receiver circuit, wherein at least one correlation element (26; 51, 52) forms a circuit member which bridges two longitudinal branches in the transverse direction and to which the output signals of the demodulator elements (20, 21; 49, 50) are passed as input signals and which in turn is adapted to deliver an output signal to a downstream-connected processing stage (34, 35; 53, 54) of the receiver circuit.

21. A receiver circuit according to claim 19 or claim 20 **characterised in that** provided in a correlation arrangement (183) of a second kind in the manner of an autocorrelator, which is connected downstream of the correlation arrangement of a first kind, is a correlator element (176, 179) in a longitudinal branch of the receiver circuit, wherein the signal at the input of the longitudinal branch is fed to the inputs of the correlator element both in undelayed relationship and also delayed by a delay member (175, 178) so that a rise in the useful signal is effected by suppression of uncorrelated interference signals.

22. A receiver circuit according to claim 21 **characterised in that** the correlation arrangement (183) of a second kind is adapted to cause a rise in a repetitive signal component contained in the emitted signal in relation to uncorrelated interference signal components by multiplicative linking.

23. A receiver circuit according to claim 21 or claim 22 **characterised in that** the correlation arrangement (183) of a second kind is adapted to generate a clock signal or a gate pulse serving for the production of an item of sign information.

24. A receiver circuit according to claim 23 **characterised in that** there is provided a clock oscillator which can be directly re-adjusted by individual clock pulses and which is adapted to maintain a clock rate even upon loss of clock pulses.

25. A receiver circuit according to one of claims 21 to 24 **characterised in that** correlation arrangements of first and/or second kind are cascaded in such a way that an output signal of a preceding correlation arrangement forms the input signal or one of the input signals of a following correlation arrangement.

26. A receiver circuit according to one of claims 21 to 25 **characterised in that** the output signal of a correlation arrangement (183a) of a second kind whose inputs are connected to a respective output of successive processing stages in different branches of the receiver circuit are brought together with the output signal of a further correlation arrangement whose inputs are connected to a respective output of the successive processing stages in the different branches of the receiver circuit in interchanged relationship with the successive processing stages.

27. A receiver circuit according to one of claims 19 to 26 **characterised in that** a correlator element has a summing (17), difference-forming (18), multiplication (19) or squaring circuit.

28. A receiver circuit according to claim 26 **characterised in that** the multiplication circuit is in the form of a four-quadrant multiplier.

29. A receiver circuit according to one of claims 19 to 28 **characterised in that** the received signal is divided into two parallel branches and provided in both branches are two respective series-connected dispersion filters (20, 24 and 21, 25 respectively) for filtering the signal, wherein the series-connected dispersion filters (20, 24 and 21, 25 respectively) have a mutually inverse, frequency-dependent delay characteristic.

30. A receiver circuit according to claim 29 **characterised by** a respective controllable switching element (22, 23) arranged between the two dispersion filters (20, 24 and 21, 25 respectively) or a multiplier (28, 29), the switching element or the multiplier being adapted to interrupt or enable the signal flow in the respective branch respectively substantially at the centre of each pulse.

31. A message transmission arrangement for carrying out the method according to claim 1 comprising a transmitter circuit according to claim 17 and a receiver circuit according to claim 19.

32. A message transmission arrangement according to claim 31 **characterised in that** the modulator elements (113a,.., 113n) of the transmitter circuit (S) are arranged in inverse relationship with the demodulator elements (117a, ..., 117n) of the receiver circuit (E), wherein modulator elements on the one hand and demodulator elements on the other hand, which are respectively in opposite relationship in respect of their function in a substantially mirror-image arrangement are provided in the transmitter and receiver circuit respectively.

33. A message transmission arrangement according to claim 31 or claim 32 which is adapted to implement modulation and demodulation by means of different carrier signals which are respectively fed to at least one complementary modulator/demodulator element pair and which are of different frequencies or with the same frequency involve a different phase position.

34. A message transmission arrangement according to one of claims 31 to 33 **characterised in that** a number n of pairs of complementary dispersion filters are provided as modulator elements in the transmitter circuit and n pairs of corresponding complementary dispersion filters are provided in the receiver circuit.

Fig.1a

Fig. 1b

Fig. 1c

Fig. 1d

Fig. 1e

EP 1 076 971 B1

Fig. 1f

Fig.2a

Fig.2b

Fig.2c

Fig.2d

Fig.2e

Fig.2f

Fig.2g

Fig.2h

Fig.2i

Fig.2j

Fig. 2k

Fig. 2l

Fig. 2m

Fig. 2n

Fig. 2o

Fig. 2p

Fig. 3a

EP 1 076 971 B1

52

Fig. 3b

Fig. 3c

Fig. 3d

Fig. 4

EP 1 076 971 B1

Fig. 5

Fig.6

EP 1 076 971 B1

Fig.7

Fig.8

EP 1 076 971 B1

E

EINGANG

AUSGANG

Fig.9

EP 1 076 971 B1

**TESTPUNKT 2**

170 172a

TESTPUNKT 4

183

TESTPUNKT 5

TESTPUNKT 6

181

184

Σ

173a

DELAY Ts

175 176 177

DELAY Ts

178 179 180

AUSGANG

EINGANG

TESTPUNKT 1

172

173b

TESTPUNKT 3

182

TESTPUNKT 7

171

172b

Fig.10

Fig. 11a

Fig. 11b

"Auf - Chirp"    A

+ ⟹ "1"

"Ab - Chirp"    B

Fig. 11c

Fig. 11d

Fig. 11e

Fig. 11f

Fig. 11g

Fig. 11h

Fig. 11i

Fig. 11j

Fig. 11k

Fig. 11l

Fig. 11m

Fig. 11n

Fig.12

Fig.13A

EIN-
GANG

POSITIVER
AUS-
GANG

NEGATIVER
AUSGANG

205

206

208

209

210

211

212

213

214

183

181p

181n

EP 1 076 971 B1

69

Fig.13B

EP 1 076 971 B1

Fig.14